# EUROPEAN PATENT APPLICATION

(11) **EP 4 797 694 A1**
(43) Date of publication of application: **26.08.2026**
(21) Application number: 24887533.8
(22) Date of filing: 14.08.2024
(51) Int. Cl.: H04N 19/30

(54) **ENCODING METHOD, SIGNAL PROCESSING METHOD, AND RELATED DEVICE**

(30) Priority: 08.11.2023 CN 202311485508
(71) Applicant: HUAWEI TECHNOLOGIES CO., LTD., Shenzhen 518129 (CN)
(72) Inventor: XU, Weiwei, Shenzhen, Guangdong 518129 (CN); YU, Quanhe, Shenzhen, Guangdong 518129 (CN); WANG, Yichuan, Shenzhen, Guangdong 518129 (CN); ALSHINA, Elena Alexandrovna, Shenzhen, Guangdong 518129 (CN)
(74) Representative: Pfenning, Meinig & Partner mbB
(86) International application number: PCT/CN2024/112158
(87) International publication number: WO 2025/097913

(57) **Abstract**

A signal processing method provided in this application includes: obtaining a first baseline image, a first gain map, and metadata, where the first baseline image corresponds to a first dynamic range; processing the first gain map based on the metadata, to obtain a second gain map; and obtaining a target image based on the second gain map and the first baseline image, where the target image corresponds to a second dynamic range, and the second dynamic range is different from the first dynamic range. The solutions provided in this application are compatible with image encoding and processing in a plurality of formats, and good image quality can be achieved on systems with different support capabilities.

## Description

### CROSS-REFERENCE TO RELATED APPLICATIONS

This application claims priority to Chinese Patent Application No. 202311485508.0, filed with the China National Intellectual Property Administration on November 8, 2023, which is incorporated herein by reference in its entirety.

### TECHNICAL FIELD

This application relates to the encoding/decoding field, and more specifically, to an encoding method, a signal processing method, and a related device.

### BACKGROUND

In a plurality of fields, a dynamic range (dynamic range) indicates a ratio of a maximum value to a minimum value of a variable. For a digital image, the dynamic range indicates a ratio of a maximum grayscale value to a minimum grayscale value in a range in which an image can be displayed. A dynamic range in nature is quite large. Luminance of a night scene under the starry sky is about 0.001 cd/m² , luminance of the sun is up to 1,000,000,000 cd/m², and the dynamic range can reach an order of magnitude of 1,000,000,000/0.001=10¹³. However, in the real world of nature, the luminance of the sun and luminance of starlight are not obtained simultaneously. In the real world, a dynamic range of a natural scene is from 10⁻³ to 10⁶. Currently, in most color digital images, red (red, R), green (green, G), and blue (blue, B) channels each are stored by using 1 byte, namely, 8 bits. In other words, grayscale ranges of the channels are from 0 to 255, where 0 to 255 is a dynamic range of the image. Because the dynamic range of the same scene in the real world is between 10⁻³ and 10⁶, the dynamic range is referred to as a high dynamic range (high dynamic range, HDR). In contrast, a dynamic range of a common picture or video is a low dynamic range (low dynamic range, LDR).

### SUMMARY

In an existing operating system like Android, a decoding module (invoking hardware or software to perform decoding), a graphics processing module (invoking a GPU or software to perform image processing), and a display module (invoking display hardware) of a terminal device are usually independent modules. Only one image buffer and accompanying metadata are usually transferred between the three modules. Consequently, HDR data cannot be correctly processed, and ideal display effect cannot be achieved.

According to a first aspect, this application provides a signal processing method, including: obtaining a first baseline image (baseline image), a first gain map (gain map), and metadata (metadata), where the first baseline image corresponds to a first dynamic range; processing the first gain map based on the metadata, to obtain a second gain map; and obtaining a target image based on the second gain map and the first baseline image, where the target image corresponds to a second dynamic range, and the second dynamic range is different from the first dynamic range.

In this application, a double-layer bitstream is used. For a system that can process the double-layer bitstream, two image buffers obtained through decoding are combined into one image buffer, so that decoding, graphics processing, and display can be correctly implemented through existing interfaces. During display, tone mapping is performed based on display-related information transferred via the metadata, to obtain correct HDR effect on a terminal. For a system that cannot use the double-layer bitstream, only a baseline image is used. Decoding, graphics processing, and display can be correctly performed on the baseline image through existing interfaces, to obtain correct basic effect on the terminal. This implements compatibility with formats supported by different systems.

In a possible implementation of the first aspect, the processing the first gain map based on the metadata includes: upsampling or downsampling the first gain map based on the metadata, to obtain the second gain map, where resolution of the second gain map is second target resolution.

In a possible implementation of the first aspect, the second target resolution is resolution of the first baseline image.

In a possible implementation of the first aspect, the second target resolution is second preset resolution.

In a possible implementation of the first aspect, the metadata includes a scaling ratio, and the upsampling or downsampling the first gain map based on the metadata includes: upsampling or downsampling the first gain map based on the scaling ratio.

In a possible implementation of the first aspect, the scaling ratio includes a horizontal scaling ratio and/or a vertical scaling ratio, and the upsampling or downsampling the first gain map based on the scaling ratio includes: upsampling or downsampling the first gain map based on the horizontal scaling ratio and/or the vertical scaling ratio.

In a possible implementation of the first aspect, the metadata includes second sampling phase information, and the upsampling or downsampling the first gain map based on the metadata includes: upsampling or downsampling the first gain map based on the second sampling phase information.

In a possible implementation of the first aspect, the second sampling phase information indicates a relative location relationship between a pixel of the first gain map and a pixel of the second gain map.

In a possible implementation of the first aspect, the second sampling phase information includes pixel coordinates of a first preset location on the first gain map, and the second sampling phase information further includes pixel coordinates of a second preset location on the second gain map.

In a possible implementation of the first aspect, the second sampling phase information includes an offset between pixel coordinates of the second gain map and pixel coordinates of the first gain map.

In a possible implementation of the first aspect, the second sampling phase information includes second luminance sampling phase information, and the upsampling or downsampling the first gain map based on the second sampling phase information includes: upsampling or downsampling a luminance component of the first gain map based on the second luminance sampling phase information; or the second sampling phase information includes second chrominance sampling phase information, and the upsampling or downsampling the first gain map based on the second sampling phase information includes: upsampling or downsampling a chrominance component of the first gain map based on the second chrominance sampling phase information; or the second sampling phase information includes second luminance sampling phase information and second chrominance sampling phase information, and the upsampling or downsampling the first gain map based on the second sampling phase information includes: upsampling or downsampling a luminance component of the first gain map based on the second luminance sampling phase information, and upsampling or downsampling a chrominance component of the first gain map based on the second chrominance sampling phase information.

In a possible implementation of the first aspect, the metadata includes indication information of a second target sampling algorithm, and the upsampling or downsampling the first gain map based on the metadata includes: upsampling or downsampling the first gain map based on the indication information of the second target sampling algorithm by using the second target sampling algorithm.

In a possible implementation of the first aspect, the indication information of the second target sampling algorithm includes an index value indicating to determine the second target sampling algorithm from a plurality of preset sampling algorithms.

In a possible implementation of the first aspect, the indication information of the second target sampling algorithm includes a name or another specific identifier of the second target sampling algorithm.

In a possible implementation of the first aspect, when the metadata includes the second sampling phase information and the indication information of the second target sampling algorithm, the upsampling or downsampling the first gain map based on the metadata includes: upsampling or downsampling the first gain map based on the second sampling phase information and the indication information of the second target sampling algorithm by using the second target sampling algorithm.

In a possible implementation of the first aspect, the first dynamic range is a standard dynamic range SDR, and the second dynamic range is a high dynamic range HDR.

In a possible implementation of the first aspect, the first dynamic range is a high dynamic range HDR, and the second dynamic range is a standard dynamic range SDR.

In a possible implementation of the first aspect, the obtaining the target image based on the second gain map and the first baseline image includes: processing the first baseline image based on the metadata, to obtain a second baseline image; and obtaining the target image based on the second baseline image and the second gain map.

In a possible implementation of the first aspect, the second baseline image corresponds to a first transfer function, the first gain map corresponds to a second transfer function, the target image corresponds to a third transfer function, and the first transfer function, the second transfer function, and the third transfer function are optical-electro transfer functions or electro-optical transfer functions.

In a possible implementation of the first aspect, the first transfer function, the second transfer function, and the third transfer function each are one of a linear function, a log function, a hybrid log-gamma HLG function, and a perceptual quantizer PQ function; and the first transfer function, the second transfer function, and the third transfer function are different from each other.

In a possible implementation of the first aspect, the obtaining the target image based on the second baseline image and the second gain map includes: transferring the second baseline image, where the transferred second baseline image corresponds to the second transfer function; and obtaining the target image based on the transferred second baseline image and the second gain map.

In a possible implementation of the first aspect, the obtaining the target image based on the second baseline image and the second gain map includes: transferring the second gain map, where the transferred second gain map corresponds to the first transfer function; and obtaining the target image based on the transferred second gain map and the second baseline image.

In a possible implementation of the first aspect, the obtaining the target image based on the second baseline image and the second gain map includes: transferring the second baseline image, where the transferred second baseline image corresponds to the third transfer function; transferring the second gain map, where the transferred second gain map corresponds to the third transfer function; and obtaining the target image based on the transferred second gain map and the transferred second baseline image.

In a possible implementation of the first aspect, the obtaining the target image based on the second baseline image and the second gain map includes: transferring the second baseline image, where the transferred second baseline image corresponds to a fourth transfer function, and the fourth transfer function is different from the third transfer function; transferring the second gain map, where the transferred second gain map corresponds to the fourth transfer function; and obtaining the target image based on the transferred second gain map and the transferred second baseline image.

In a possible implementation of the first aspect, the metadata further includes information indicating an attribute of metadata corresponding to a gain map. The information indicates that the metadata corresponding to the gain map is applicable to one or more of a luminance component (a Y component) or a chrominance component (a U component and/or a V component) of the gain map; or the information indicates that the metadata corresponding to the gain map is applicable to one or more of an R component, a G component, or a B component of the gain map.

In a possible implementation of the first aspect, the metadata further includes information indicating an attribute of metadata corresponding to a baseline image. The information indicates that the metadata corresponding to the baseline image is applicable to one or more of a luminance component (Y component) or a chrominance component (a U component and/or a V component) of the baseline image; or the information indicates that the metadata corresponding to the baseline image is applicable to one or more of an R component, a G component, or a B component of the baseline image.

According to a second aspect, this application provides an encoding method, including: obtaining a first baseline image, a first gain map, and metadata based on a first image, where the first baseline image corresponds to a first dynamic range, the first image corresponds to a second dynamic range, and the second dynamic range is different from the first dynamic range; encoding the first baseline image; encoding the first gain map; and encoding the metadata.

In a possible implementation of the second aspect, the metadata includes a scaling ratio, and the scaling ratio indicates a scaling ratio of the first gain map to a second gain map.

In a possible implementation of the second aspect, the scaling ratio includes a horizontal scaling ratio and/or a vertical scaling ratio, the horizontal scaling ratio indicates a scaling ratio of the first gain map to the second gain map in a horizontal direction, and the vertical scaling ratio indicates a scaling ratio of the first gain map to the second gain map in a vertical direction.

In a possible implementation of the second aspect, the metadata includes first sampling phase information, and the first sampling phase information indicates a relative location relationship between a pixel of the first baseline image and a pixel of a second baseline image.

In a possible implementation of the second aspect, the first sampling phase information includes pixel coordinates of a first preset location on the first baseline image, and the first sampling phase information further includes pixel coordinates of a second preset location on the second baseline image.

In a possible implementation of the second aspect, the first sampling phase information includes an offset between pixel coordinates of the second baseline image and pixel coordinates of the first baseline image.

In a possible implementation of the second aspect, the first sampling phase information includes first luminance sampling phase information and/or first chrominance sampling phase information.

In a possible implementation of the second aspect, the first sampling phase information includes one or more of first red R channel sampling phase information, first green G channel sampling phase information, and first blue B channel sampling phase information.

In a possible implementation of the second aspect, the metadata includes indication information of a first target sampling algorithm.

In a possible implementation of the second aspect, the indication information of the first target sampling algorithm includes an index value indicating to determine the first target sampling algorithm from a plurality of preset sampling algorithms.

In a possible implementation of the second aspect, the indication information of the first target sampling algorithm includes a name or another specific identifier of the first target sampling algorithm.

In a possible implementation of the second aspect, the metadata includes first target resolution.

In a possible implementation of the second aspect, the metadata includes second sampling phase information, and the second sampling phase information indicates a relative location relationship between a pixel of the first gain map and a pixel of a second gain map.

In a possible implementation of the second aspect, the second sampling phase information includes pixel coordinates of a first preset location on the first gain map, and the second sampling phase information further includes pixel coordinates of a second preset location on the second gain map.

In a possible implementation of the second aspect, the second sampling phase information includes an offset between pixel coordinates of the second gain map and pixel coordinates of the first gain map.

In a possible implementation of the second aspect, the second sampling phase information includes second luminance sampling phase information and/or second chrominance sampling phase information.

In a possible implementation of the second aspect, the second sampling phase information includes one or more of second red R channel sampling phase information, second green G channel sampling phase information, and second blue B channel sampling phase information.

In a possible implementation of the second aspect, the metadata includes indication information of a second target sampling algorithm.

In a possible implementation of the second aspect, the indication information of the second target sampling algorithm includes an index value indicating to determine the second target sampling algorithm from a plurality of preset sampling algorithms.

In a possible implementation of the second aspect, the indication information of the second target sampling algorithm includes a name or another specific identifier of the second target sampling algorithm.

In a possible implementation of the second aspect, the metadata includes second target resolution, and the second target resolution is the same as or different from the first target resolution.

According to a third aspect, this application provides a signal processing method, including: obtaining a first baseline image (baseline image), a first gain map (gain map), and metadata (metadata), where the first baseline image corresponds to a first dynamic range; processing the first baseline image based on the metadata, to obtain a second baseline image; and obtaining a target image based on the second baseline image and the first gain map, where the target image corresponds to a second dynamic range, and the second dynamic range is different from the first dynamic range.

In this application, a double-layer bitstream is used. For a system that can process the double-layer bitstream, two image buffers obtained through decoding are combined into one image buffer, so that decoding, graphics processing, and display can be correctly implemented through existing interfaces. During display, tone mapping is performed based on display-related information transferred via the metadata, to obtain correct HDR effect on a terminal. For a system that cannot use the double-layer bitstream, only a baseline image is used. Decoding, graphics processing, and display can be correctly performed on the baseline image through existing interfaces, to obtain correct basic effect on the terminal. This implements compatibility with formats supported by different systems.

In a possible implementation of the third aspect, the processing the first baseline image based on the metadata includes: upsampling or downsampling the first baseline image based on the metadata, to obtain the second baseline image, where resolution of the second baseline image is first target resolution. Through upsampling or downsampling, compatibility with image encoding and processing in a plurality of formats can be implemented, to achieve good image quality in systems with different support capabilities, and significantly reduce a file size.

In a possible implementation of the third aspect, the first target resolution is resolution of the first gain map.

In a possible implementation of the third aspect, the first target resolution is first preset resolution. The preset resolution may be included in the metadata, or the preset resolution is related to a display characteristic of a display device. However, for a specific display device, the preset resolution is determined.

In a possible implementation of the third aspect, the metadata includes first sampling phase information, and the upsampling or downsampling the first baseline image based on the metadata includes: upsampling or downsampling the first baseline image based on the first sampling phase information.

In a possible implementation of the third aspect, the first sampling phase information indicates a relative location relationship between a pixel of the first baseline image and a pixel of the second baseline image.

In a possible implementation of the third aspect, the first sampling phase information includes pixel coordinates of a first preset location on the first baseline image, and the first sampling phase information further includes pixel coordinates of a second preset location on the second baseline image.

In a possible implementation of the third aspect, the first sampling phase information includes an offset between pixel coordinates of the second baseline image and pixel coordinates of the first baseline image.

In a possible implementation of the third aspect, the first sampling phase information includes first luminance sampling phase information, and the upsampling or downsampling the first baseline image based on the first sampling phase information includes: upsampling or downsampling a luminance component of the first baseline image based on the first luminance sampling phase information; or the first sampling phase information includes first chrominance sampling phase information, and the upsampling or downsampling the first baseline image based on the first sampling phase information includes: upsampling or downsampling a chrominance component of the first baseline image based on the first chrominance sampling phase information; or the first sampling phase information includes first luminance sampling phase information and first chrominance sampling phase information, and the upsampling or downsampling the first baseline image based on the first sampling phase information includes: upsampling or downsampling a luminance component of the first baseline image based on the first luminance sampling phase information, and upsampling or downsampling a chrominance component of the first baseline image based on the first chrominance sampling phase information.

In a possible implementation of the third aspect, the metadata includes indication information of a first target sampling algorithm, and the upsampling or downsampling the first baseline image based on the metadata includes: upsampling or downsampling the first baseline image based on the indication information of the first target sampling algorithm by using the first target sampling algorithm.

In a possible implementation of the third aspect, the indication information of the first target sampling algorithm includes an index value indicating to determine the first target sampling algorithm from a plurality of preset sampling algorithms.

In a possible implementation of the third aspect, the indication information of the first target sampling algorithm includes a name or another specific identifier of the first target sampling algorithm.

In a possible implementation of the third aspect, when the metadata includes the first sampling phase information and the indication information of the first target sampling algorithm, the upsampling or downsampling the first baseline image based on the metadata includes: upsampling or downsampling the first baseline image based on the first sampling phase information and the indication information of the first target sampling algorithm by using the first target sampling algorithm.

In a possible implementation of the third aspect, the obtaining the target image based on the second baseline image and the first gain map includes: processing the first gain map based on the metadata, to obtain a second gain map; and obtaining the target image based on the second baseline image and the second gain map.

In a possible implementation of the third aspect, the processing the first gain map based on the metadata includes: upsampling or downsampling the first gain map based on the metadata, to obtain the second gain map, where resolution of the second gain map is second target resolution.

In a possible implementation of the third aspect, the second target resolution is resolution of the first baseline image.

In a possible implementation of the third aspect, the second target resolution is second preset resolution.

In a possible implementation of the third aspect, the metadata includes second sampling phase information, and the upsampling or downsampling the first gain map based on the metadata includes: upsampling or downsampling the first gain map based on the second sampling phase information.

In a possible implementation of the third aspect, the second sampling phase information indicates a relative location relationship between a pixel of the first gain map and a pixel of the second gain map.

In a possible implementation of the third aspect, the second sampling phase information includes pixel coordinates of a first preset location on the first gain map, and the second sampling phase information further includes pixel coordinates of a second preset location on the second gain map.

In a possible implementation of the third aspect, the second sampling phase information includes an offset between pixel coordinates of the second gain map and pixel coordinates of the first gain map.

In a possible implementation of the third aspect, the second sampling phase information includes second luminance sampling phase information, and the upsampling or downsampling the first gain map based on the second sampling phase information includes: upsampling or downsampling a luminance component of the first gain map based on the second luminance sampling phase information; or the second sampling phase information includes second chrominance sampling phase information, and the upsampling or downsampling the first gain map based on the second sampling phase information includes: upsampling or downsampling a chrominance component of the first gain map based on the second chrominance sampling phase information; or the second sampling phase information includes second luminance sampling phase information and second chrominance sampling phase information, and the upsampling or downsampling the first gain map based on the second sampling phase information includes: upsampling or downsampling a luminance component of the first gain map based on the second luminance sampling phase information, and upsampling or downsampling a chrominance component of the first gain map based on the second chrominance sampling phase information.

In a possible implementation of the third aspect, the metadata includes indication information of a second target sampling algorithm, and the upsampling or downsampling the first gain map based on the metadata includes: upsampling or downsampling the first gain map based on the indication information of the second target sampling algorithm by using the second target sampling algorithm.

In a possible implementation of the third aspect, the indication information of the second target sampling algorithm includes an index value indicating to determine the second target sampling algorithm from a plurality of preset sampling algorithms.

In a possible implementation of the third aspect, the indication information of the second target sampling algorithm includes a name or another specific identifier of the second target sampling algorithm.

In a possible implementation of the third aspect, when the metadata includes the second sampling phase information and the indication information of the second target sampling algorithm, the upsampling or downsampling the first gain map based on the metadata includes: upsampling or downsampling the first gain map based on the second sampling phase information and the indication information of the second target sampling algorithm by using the second target sampling algorithm.

In a possible implementation of the third aspect, the first dynamic range is a standard dynamic range SDR, and the second dynamic range is a high dynamic range HDR.

In a possible implementation of the third aspect, the first dynamic range is a high dynamic range HDR, and the second dynamic range is a standard dynamic range SDR.

In a possible implementation of the third aspect, the second baseline image corresponds to a first transfer function, the first gain map corresponds to a second transfer function, the target image corresponds to a third transfer function, and the first transfer function, the second transfer function, and the third transfer function are optical-electro transfer functions or electro-optical transfer functions.

In a possible implementation of the third aspect, the first transfer function, the second transfer function, and the third transfer function each are one of a linear function, a log function, a hybrid log-gamma HLG function, and a perceptual quantizer PQ function; and the first transfer function, the second transfer function, and the third transfer function are different from each other.

In a possible implementation of the third aspect, the obtaining the target image based on the second baseline image and the first gain map includes: transferring the second baseline image, where the transferred second baseline image corresponds to the second transfer function; and obtaining the target image based on the transferred second baseline image and the first gain map.

In a possible implementation of the third aspect, the obtaining the target image based on the second baseline image and the first gain map includes: transferring the first gain map, where the transferred first gain map corresponds to the first transfer function; and obtaining the target image based on the transferred first gain map and the second baseline image.

In a possible implementation of the third aspect, the obtaining the target image based on the second baseline image and the first gain map includes: transferring the second baseline image, where the transferred second baseline image corresponds to the third transfer function; transferring the first gain map, where the transferred first gain map corresponds to the third transfer function; and obtaining the target image based on the transferred first gain map and the transferred second baseline image.

In a possible implementation of the third aspect, the obtaining the target image based on the second baseline image and the first gain map includes: transferring the second baseline image, where the transferred second baseline image corresponds to a fourth transfer function, and the fourth transfer function is different from the third transfer function; transferring the first gain map, where the transferred first gain map corresponds to the fourth transfer function; and obtaining the target image based on the transferred first gain map and the transferred second baseline image.

In a possible implementation of the third aspect, the metadata further includes information indicating an attribute of metadata corresponding to a gain map. The information indicates that the metadata corresponding to the gain map is applicable to one or more of a luminance component (a Y component) or a chrominance component (a U component and/or a V component) of the gain map; or the information indicates that the metadata corresponding to the gain map is applicable to one or more of an R component, a G component, or a B component of the gain map.

In a possible implementation of the third aspect, the metadata further includes information indicating an attribute of metadata corresponding to a baseline image. The information indicates that the metadata corresponding to the baseline image is applicable to one or more of a luminance component (Y component) or a chrominance component (a U component and/or a V component) of the baseline image; or the information indicates that the metadata corresponding to the baseline image is applicable to one or more of an R component, a G component, or a B component of the baseline image.

According to a fourth aspect, this application provides an encoding method, including: obtaining a first baseline image, a first gain map, and metadata based on a first image, where the first baseline image corresponds to a first dynamic range, the first image corresponds to a second dynamic range, and the second dynamic range is different from the first dynamic range; encoding the first baseline image; encoding the first gain map; and encoding the metadata.

In a possible implementation of the fourth aspect, the metadata includes first sampling phase information, and the first sampling phase information indicates a relative location relationship between a pixel of the first baseline image and a pixel of a second baseline image.

In a possible implementation of the fourth aspect, the first sampling phase information includes pixel coordinates of a first preset location on the first baseline image, and the first sampling phase information further includes pixel coordinates of a second preset location on the second baseline image.

In a possible implementation of the fourth aspect, the first sampling phase information includes an offset between pixel coordinates of the second baseline image and pixel coordinates of the first baseline image.

In a possible implementation of the fourth aspect, the first sampling phase information includes first luminance sampling phase information and/or first chrominance sampling phase information.

In a possible implementation of the fourth aspect, the first sampling phase information includes one or more of first red R channel sampling phase information, first green G channel sampling phase information, and first blue B channel sampling phase information.

In a possible implementation of the fourth aspect, the metadata includes indication information of a first target sampling algorithm.

In a possible implementation of the fourth aspect, the indication information of the first target sampling algorithm includes an index value indicating to determine the first target sampling algorithm from a plurality of preset sampling algorithms.

In a possible implementation of the fourth aspect, the indication information of the first target sampling algorithm includes a name or another specific identifier of the first target sampling algorithm.

In a possible implementation of the fourth aspect, the metadata includes first target resolution.

In a possible implementation of the fourth aspect, the metadata includes second sampling phase information, and the second sampling phase information indicates a relative location relationship between a pixel of the first gain map and a pixel of a second gain map.

In a possible implementation of the fourth aspect, the second sampling phase information includes pixel coordinates of a first preset location on the first gain map, and the second sampling phase information further includes pixel coordinates of a second preset location on the second gain map.

In a possible implementation of the fourth aspect, the second sampling phase information includes an offset between pixel coordinates of the second gain map and pixel coordinates of the first gain map.

In a possible implementation of the fourth aspect, the second sampling phase information includes second luminance sampling phase information and/or second chrominance sampling phase information.

In a possible implementation of the fourth aspect, the second sampling phase information includes one or more of second red R channel sampling phase information, second green G channel sampling phase information, and second blue B channel sampling phase information.

In a possible implementation of the fourth aspect, the metadata includes indication information of a second target sampling algorithm.

In a possible implementation of the fourth aspect, the indication information of the second target sampling algorithm includes an index value indicating to determine the second target sampling algorithm from a plurality of preset sampling algorithms.

In a possible implementation of the fourth aspect, the indication information of the second target sampling algorithm includes a name or another specific identifier of the second target sampling algorithm.

In a possible implementation of the fourth aspect, the metadata includes second target resolution, and the second target resolution is the same as or different from the first target resolution.

According to a fifth aspect, an embodiment of this application provides an electronic device. The electronic device includes units for implementing the first aspect or any possible implementation of the first aspect, for example, a decoding module and a processing module. The decoding module is configured to decode a bitstream, to obtain a baseline image, a gain map, and metadata. The processing module is configured to process the gain map based on the metadata, and then obtain a target image based on the processed gain map and the baseline image. Optionally, the electronic device further includes a display module, configured to display the obtained target image. Optionally, the electronic device further includes a receiving module, and the receiving module is configured to receive the bitstream.

According to a sixth aspect, an embodiment of this application provides an electronic device. The electronic device includes units for implementing the second aspect or any possible implementation of the second aspect, for example, a processing module and an encoding module. The processing module is configured to obtain a first baseline image, a first gain map, and metadata based on a first image, where the first baseline image corresponds to a first dynamic range, the first image corresponds to a second dynamic range, and the second dynamic range is different from the first dynamic range. The encoding module is configured to encode the first baseline image, the first gain map, and the metadata according to the second aspect or any possible implementation of the second aspect, to obtain a bitstream. Optionally, the electronic device further includes a sending module, and the sending module is configured to send the bitstream.

According to a seventh aspect, an embodiment of this application provides an electronic device. The electronic device includes a processor. The processor is configured to be coupled to a memory, and read and execute instructions and/or program code in the memory, to perform the first aspect or any possible implementation of the first aspect. In a possible implementation, the electronic device further includes a display or may be connected to an external display. The display is configured to display a target image, where the target image is obtained according to the first aspect or any possible implementation of the first aspect. In a possible implementation, the electronic device further includes a communication interface. The communication interface is configured to receive a to-be-processed image or video signal, where the to-be-processed image or video signal may be a bitstream or a bit stream.

According to an eighth aspect, an embodiment of this application provides an electronic device. The electronic device includes a processor. The processor is configured to be coupled to a memory, and read and execute instructions and/or program code in the memory to perform the second aspect or any possible implementation of the second aspect. In a possible implementation, the electronic device further includes a communication interface. The communication interface is configured to send a bitstream, where the bitstream is obtained according to the second aspect or any possible implementation of the second aspect.

According to a ninth aspect, an embodiment of this application provides a chip system. The chip system includes a logic circuit. The logic circuit is configured to be coupled to an input/output interface, and transmit data through the input/output interface, to perform the first aspect or any possible implementation of the first aspect.

According to a tenth aspect, an embodiment of this application provides a chip system. The chip system includes a logic circuit. The logic circuit is configured to be coupled to an input/output interface, and transmit data through the input/output interface, to perform the second aspect or any possible implementation of the second aspect.

According to an eleventh aspect, an embodiment of this application provides a computer-readable storage medium. The computer-readable storage medium stores program code. When the program code stored in the computer storage medium is run on a computer, the computer is enabled to perform the first aspect or any possible implementation of the first aspect.

According to a twelfth aspect, an embodiment of this application provides a computer-readable storage medium. The computer-readable storage medium stores program code. When the program code stored in the computer storage medium is run on a computer, the computer is enabled to perform the second aspect or any possible implementation of the second aspect.

According to a thirteenth aspect, an embodiment of this application provides a computer program product. The computer program product includes computer program code. When the computer program code is run on a computer, the computer is enabled to perform the first aspect or any possible implementation of the first aspect.

According to a fourteenth aspect, an embodiment of this application provides a computer program product. The computer program product includes computer program code. When the computer program code is run on a computer, the computer is enabled to perform the second aspect or any possible implementation of the second aspect.

According to a fifteenth aspect, an embodiment of this application provides a bitstream. The bitstream is obtained by encoding an image according to the second aspect or any possible implementation of the second aspect.

According to a sixteenth aspect, an embodiment of this application provides a bitstream. The bitstream includes a first baseline image, a first gain map, and metadata. The metadata includes parameter information needed for processing the first baseline image and the first gain map to obtain a target image.

In a possible implementation of the fifteenth aspect or the sixteenth aspect, the metadata includes content included in the metadata in any possible implementation of the second aspect.

According to a seventeenth aspect, an embodiment of this application provides a streaming media system. The system includes a client device and a content delivery network CDN. The client device is configured to implement the first aspect or any possible implementation of the first aspect, to obtain a target image for display. The content delivery network is configured to send a bitstream including a baseline image, a gain map, and metadata to the client device. Optionally, the system further includes a cloud server. The cloud server is configured to receive a content request from the client device, make a decision, reply to the client, and send an address, on the CDN, of content requested by the client to the client.

According to an eighteenth aspect, an embodiment of this application provides a bitstream storage apparatus. The apparatus includes a communication interface and a memory. The communication interface is configured to receive a bitstream. The bitstream is described in the fifteenth aspect or any possible implementation of the fifteenth aspect or the sixteenth aspect or any possible implementation of the sixteenth aspect. The memory is configured to store the bitstream. In a possible implementation, the communication interface is further configured to send the bitstream to a client device according to instructions or a user request. Optionally, the bitstream storage apparatus further includes a processor. The processor is configured to perform a transcoding operation on the received bitstream, to send the transcoded bitstream to different terminal devices.

### BRIEF DESCRIPTION OF DRAWINGS

FIG. 1 illustrates a diagram of dynamic range mapping;
FIG. 2 illustrates a diagram of a PQ optical-electro transfer function;
FIG. 3 illustrates a diagram of an HLG optical-electro transfer function;
FIG. 4 illustrates a diagram of an SLF optical-electro transfer function;
FIG. 5 illustrates an end-to-end diagram of an HDR image/video from production to display;
FIG. 6A illustrates a diagram of a terminal device;

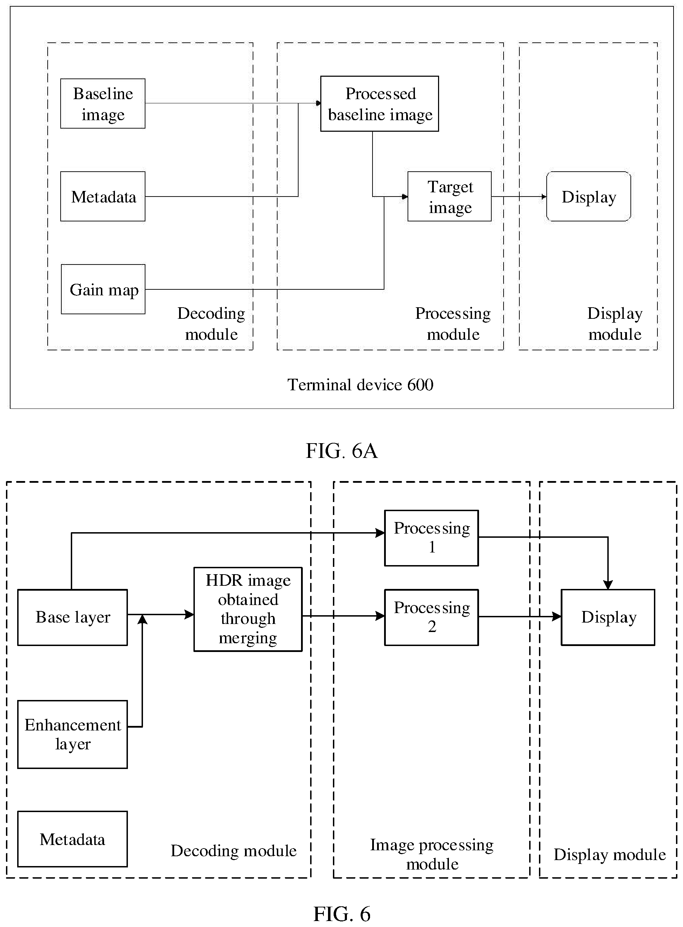

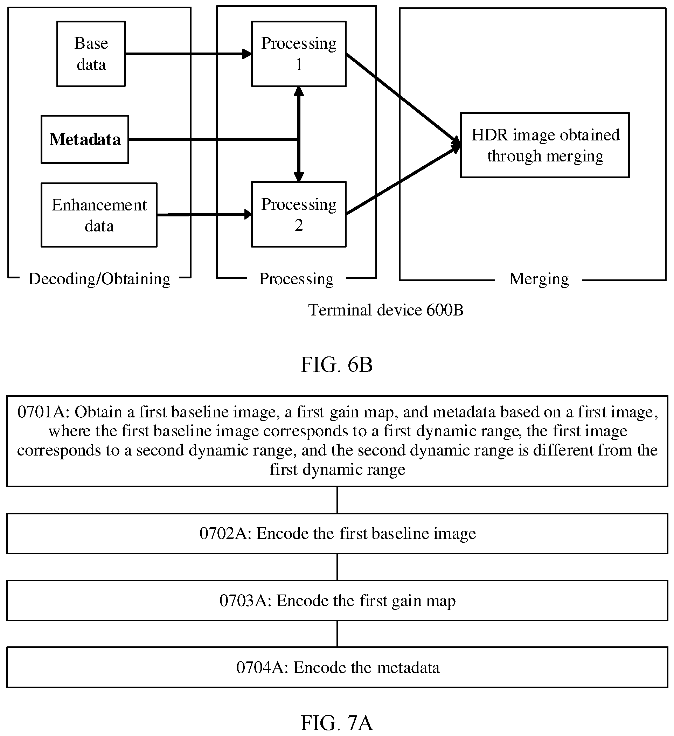

FIG. 6 is a diagram of a digital signal processing method according to an embodiment of this application;
FIG. 6B is a diagram of a system architecture or a scenario of application according to an embodiment of this application;

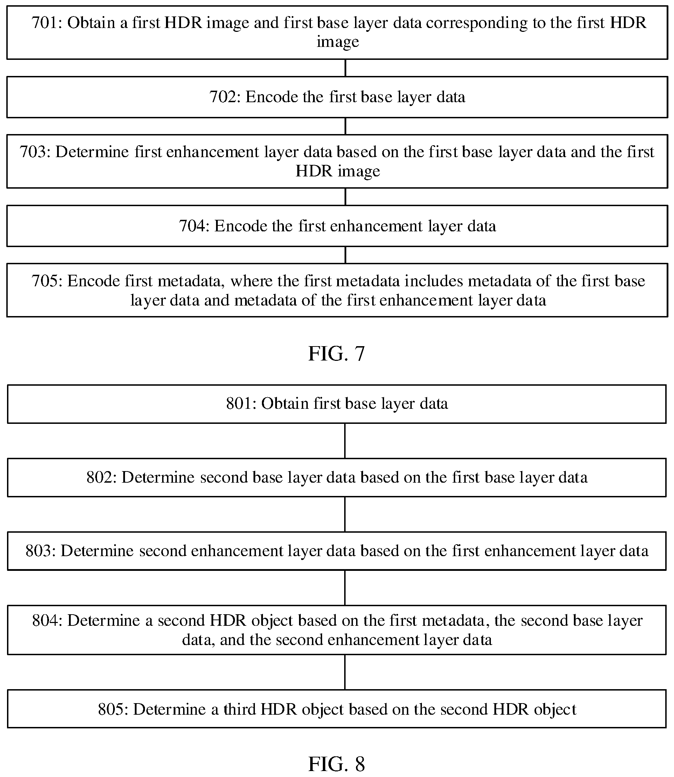

FIG. 7A is a schematic flowchart of an encoding method according to an embodiment of this application;
FIG. 7 is a schematic flowchart of another encoding method according to an embodiment of this application;
FIG. 8 is a schematic flowchart of a digital signal processing method according to an embodiment of this application;

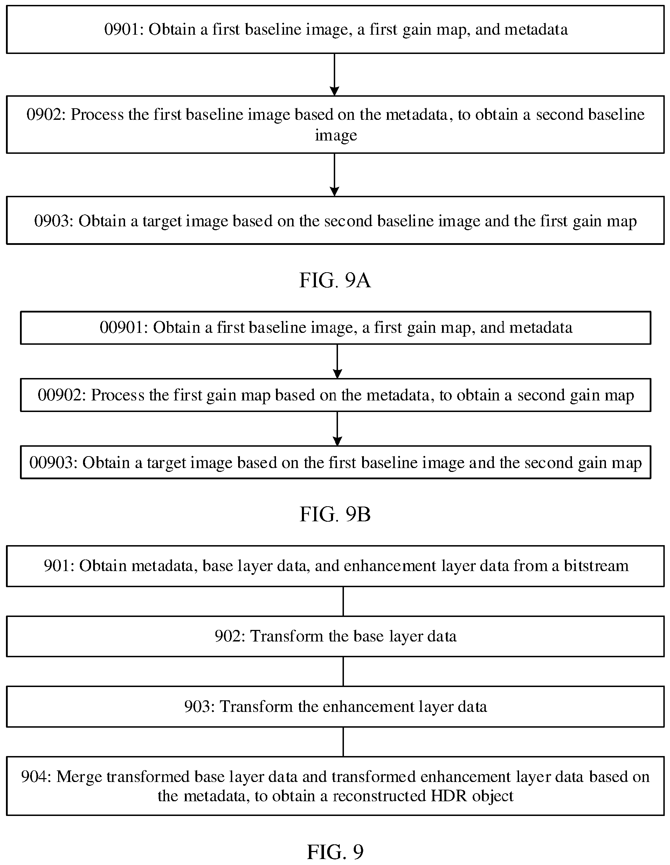

FIG. 9A is a schematic flowchart of a signal processing method according to an embodiment of this application;
FIG. 9B is a schematic flowchart of a signal processing method according to an embodiment of this application;
FIG. 9 is a diagram of a digital signal processing method according to an embodiment of this application;

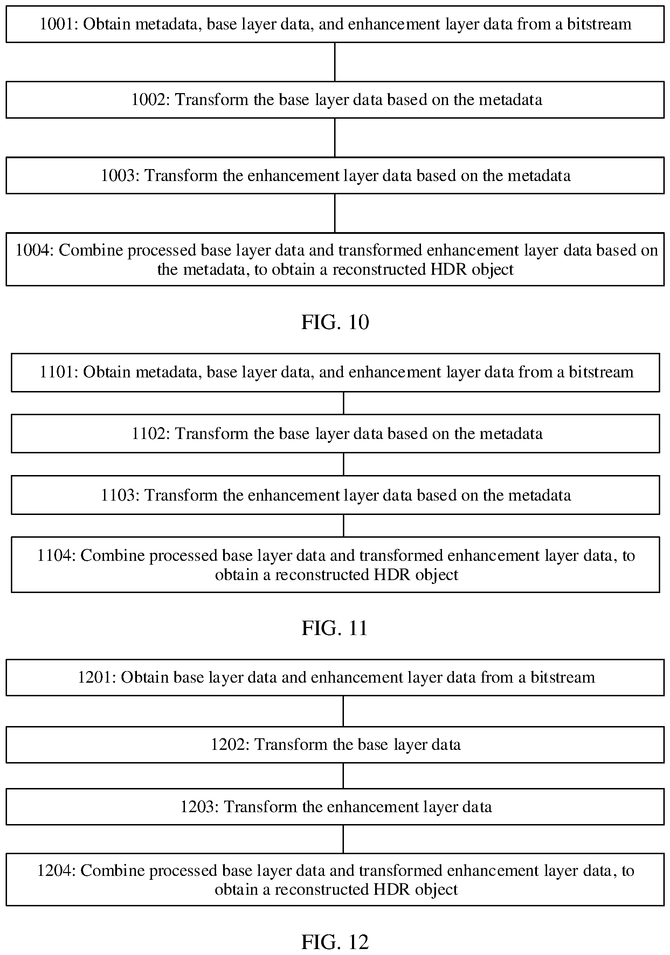

FIG. 10 is a schematic flowchart of another digital signal processing method according to an embodiment of this application;
FIG. 11 is a schematic flowchart of another digital signal processing method according to an embodiment of this application;
FIG. 12 is a schematic flowchart of another digital signal processing method according to an embodiment of this application;

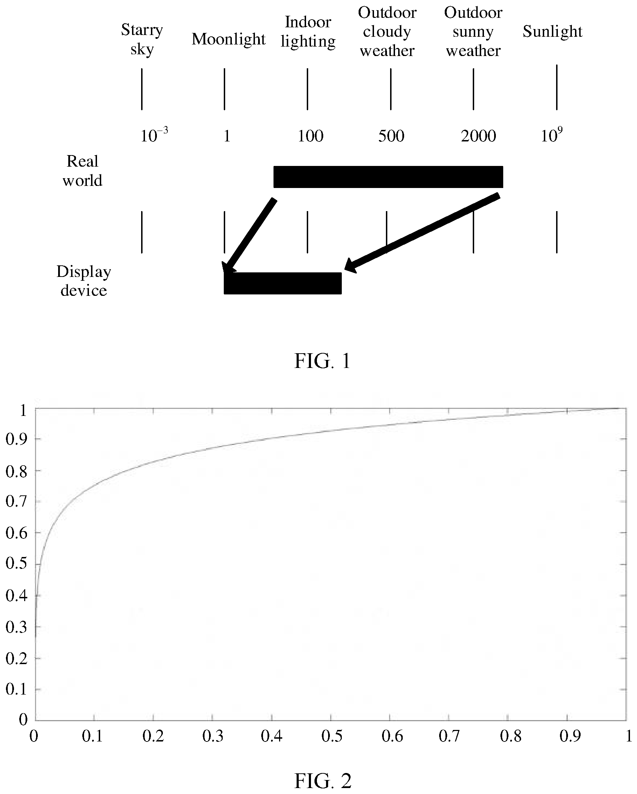

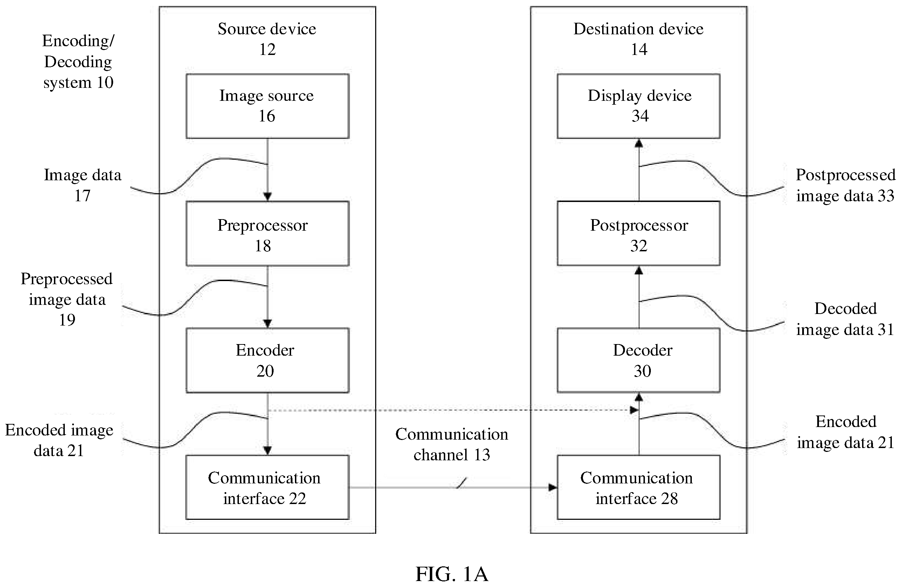

FIG. 1A is a block diagram of an encoding/decoding system to which an embodiment of this application is applied;

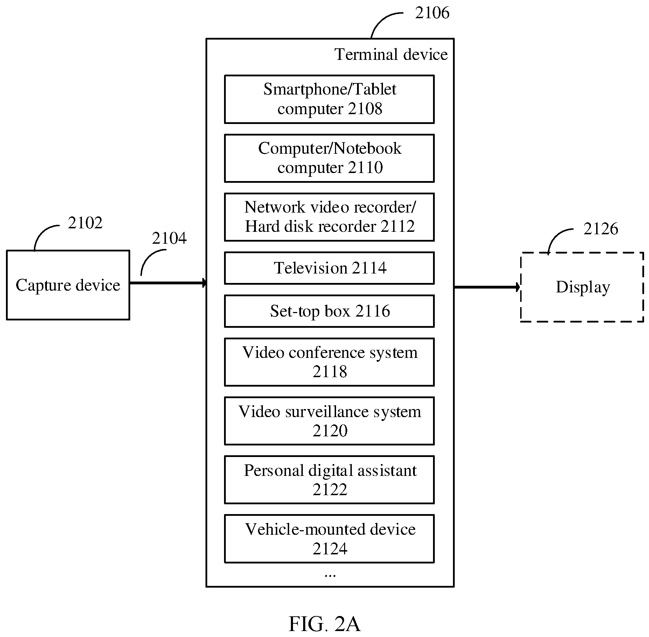

FIG. 2A is a block diagram of a content providing system for implementing a content delivery service to which an embodiment of this application is applied;

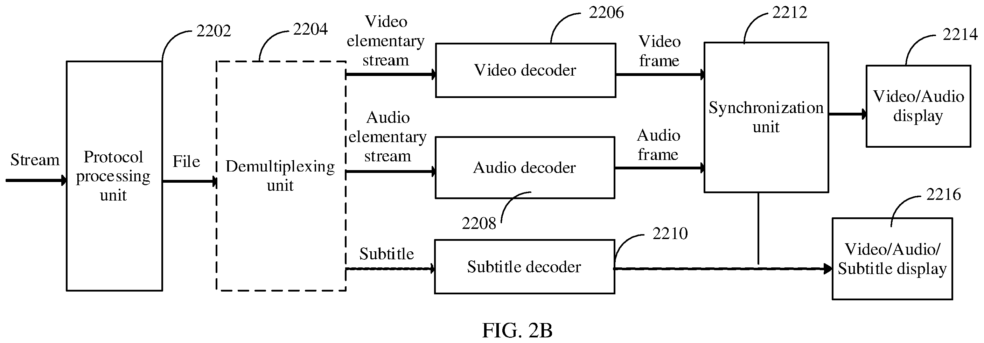

FIG. 2B illustrates a diagram of a structure of a terminal device 2106 in FIG. 2A;

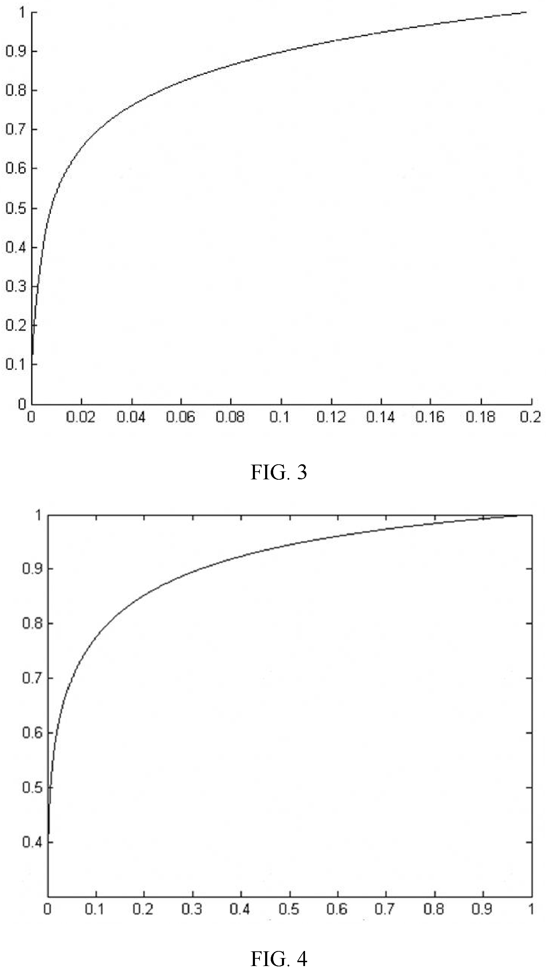

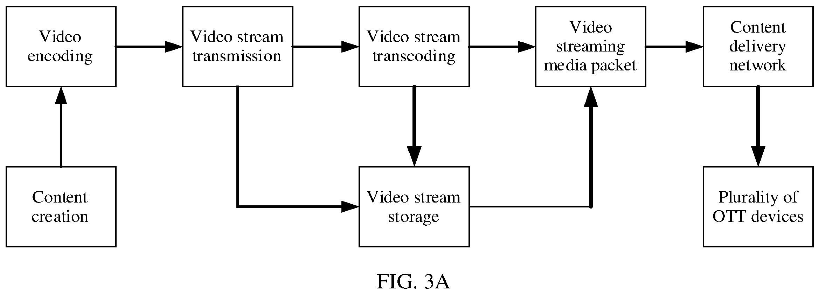

FIG. 3A is a working flowchart of a streaming media system to which an embodiment of this application is applied;

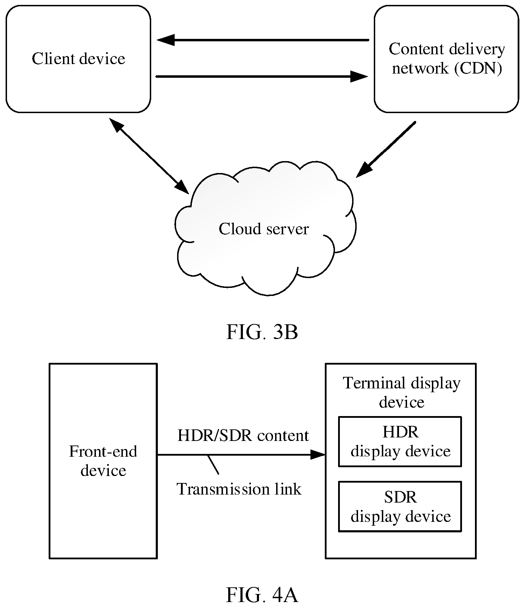

FIG. 3B is a diagram of an architecture of a streaming media system to which an embodiment of this application is applied;
FIG. 4A is a diagram of a possible system architecture to which an embodiment of this application is applicable;

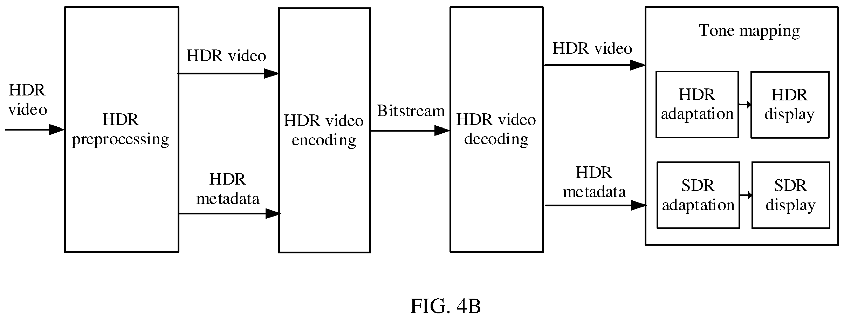

FIG. 4B is a diagram of a structure of an image processing system according to an embodiment of this application;

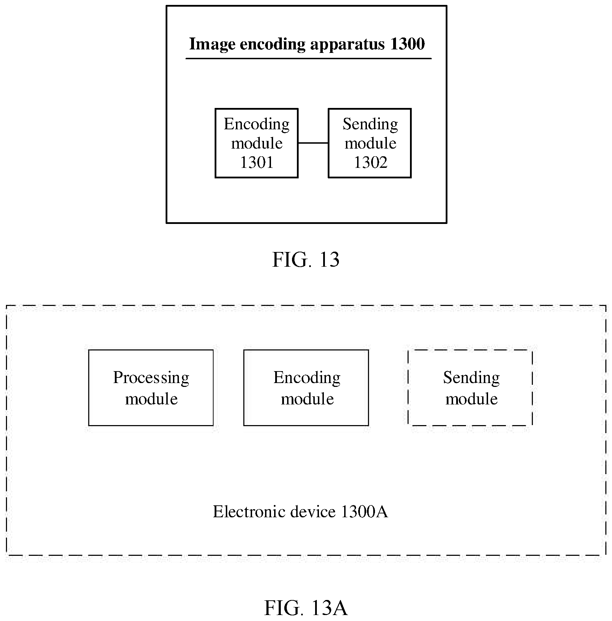

FIG. 13 is a diagram of an example of an image encoding apparatus according to an embodiment of this application;
FIG. 13A is a diagram of an example of an electronic device according to an embodiment of this application;

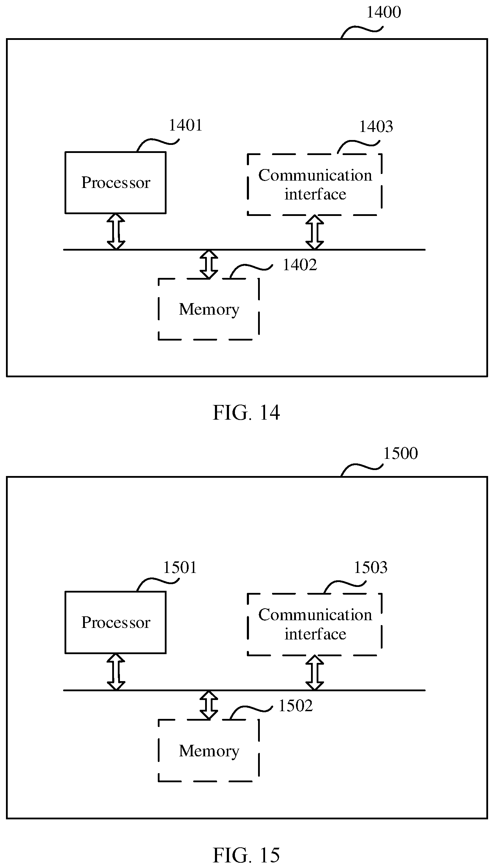

FIG. 14 is a diagram of an example of an electronic device according to an embodiment of this application;
FIG. 15 is a diagram of an example of an electronic device according to an embodiment of this application;

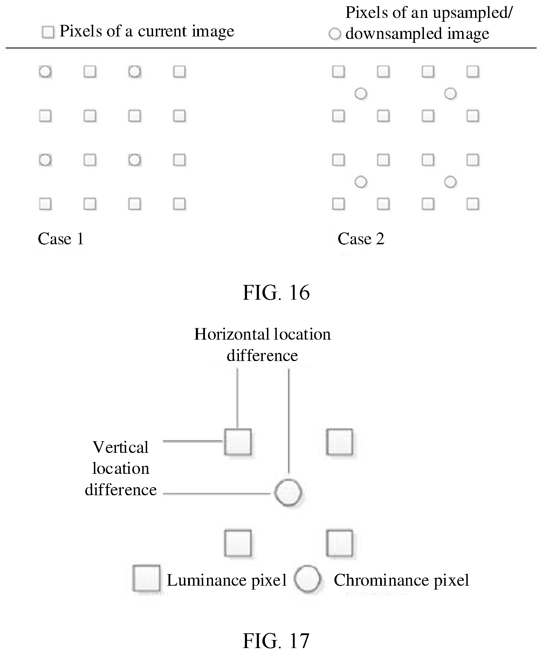

FIG. 16 is a diagram of a location relationship between pixels of a current image and pixels of a sampled image according to an embodiment of this application; and
FIG. 17 is a diagram of phase information of luminance pixels and a chrominance pixel according to an embodiment of this application.

### DESCRIPTION OF EMBODIMENTS

To make objectives, technical solutions, and advantages of this application clearer, the following further describes this application in detail with reference to accompanying drawings.

In this application, the term "at least one" indicates one or more, that is, includes one, two, three, or more; and the term "a plurality of" indicates two or more, that is, includes two, three, or more.

In embodiments of this application, the term "at least one" indicates one or more, and "a plurality of" indicates two or more. The term "and/or" describes an association relationship between associated objects and may represent that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a-b, a-c, b-c, or a-b-c, where any one of a, b, c, a-b, a-c, b-c, or a-b-c may include a single a, a single b, or a single c, or may include a plurality of a, a plurality of b, or a plurality of c.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first priority criterion and a second priority criterion are merely used to distinguish different criteria, and are not used to indicate different content, priorities, or importance degrees of the two types of criteria.

In addition, the terms "include/comprise" and "have" in embodiments, claims, and accompanying drawings of this application are not exclusive. For example, a process, a method, a system, a product, or a device including a series of steps or modules/units is not limited to the listed steps or modules, and may further include steps or modules/units that are not listed.

An HDR image or an HDR video may need to be transcoded during delivery or transmission. In a current HDR transcoding solution, the HDR image or the HDR video is directly transcoded. After the HDR image or the HDR video is decoded, an HDR pixel value and an HDR format identifier and information are obtained. The HDR pixel value usually needs to be processed (for example, undergoes image upsampling/downsampling and enhancement). Then the HDR format identifier and information and a processed HDR pixel value are sent to an encoder for re-encoding. A re-encoded HDR image or HDR video is delivered to another device.

In this solution (which may be referred to as a "single-layer transcoding solution") in which the HDR image or the HDR video is directly transcoded, an exception may occur in a transcoded HDR image or HDR video, affecting user experience. A reason is as follows: During transcoding (decoding is performed, and then encoding is performed) of a single-layer encoded HDR bitstream, a transcoding system needs to correctly send all HDR information obtained by a decoder to an encoder. If information is lost, the transcoding system cannot perform re-encoding in a correct format. Consequently, an incorrect bitstream is generated, and abnormal visual effect occurs during watching by a user, which severely affects user experience. Currently, a plurality of delivery and transcoding systems on the market have not been upgraded to support correct sending of HDR information from a decoder side to an encoder side. Consequently, mainstream mobile phone and application manufacturers have received a plurality of user complaints in this regard.

For ease of understanding embodiments of this application, some concepts or terms in embodiments of this application are first described.

A color value (color value) is a value corresponding to a specific color component (for example, R, G, B, or Y) of an image.

A digital code value (digital code value) is a digital expression value of an image signal, and the digital code value indicates a nonlinear color value.

A linear color value (linear color value) is in direct proportion to light intensity. In an optional case, a value of the linear color value needs to be normalized to [0, 1], and is denoted as E.

A nonlinear color value (nonlinear color value) is a normalized digital expression value of image information, and is in direct proportion to a digital code value. In an optional case, a value of the nonlinear color value needs to be normalized to [0, 1], and is denoted as E'.

An electro-optical transfer function (electro-optical transfer function, EOTF) indicates a relationship of transferring from a nonlinear color value to a linear color value.

Metadata (metadata) is data that is carried in a video signal and that describes video source information.

Dynamic metadata (dynamic metadata) is metadata associated with each frame of image, and the metadata changes with pictures.

Static metadata (static metadata) is metadata associated with an image sequence, and the metadata remains unchanged in the image sequence.

A luminance signal (luma) indicates a combination of nonlinear color signals, and is represented by a symbol Y'.

Luminance mapping (luminance mapping) is mapping from luminance of a source picture to luminance of a target system.

Display adaptation (display adaptation) is to process a video signal to adapt to a display characteristic of a target display.

A source picture (source picture) is a picture that is input in an HDR preprocessing stage.

A mastering display (mastering display) is a reference display used when a video signal is edited and produced, and is configured to determine editing and production effect of a video.

A linear scene light (linear scene light) signal is an HDR video signal using content as scene light in an HDR video technology, is scene light captured by a camera/lens sensor, and is usually a relative value. HLG encoding is performed on the linear scene light signal to obtain an HLG signal. The HLG signal is a scene light signal, and the HLG signal is nonlinear. The scene light signal usually needs to be transferred into a display light signal according to an OOTF, to be displayed on a display device.

A linear display light (linear display light) signal is an HDR video signal using content as display light in an HDR video technology, is display light emitted by a display device, and is usually an absolute value in a unit of nits. PQ encoding is performed on the linear display light signal to obtain a PQ signal. The PQ signal is a display light signal, and the PQ signal is a nonlinear signal. The display light signal is usually displayed on the display device based on absolute luminance of the display light signal.

An opto-optical transfer curve (OOTF) is a curve for transferring one light signal into another light signal in a video technology.

A dynamic range (dynamic range) is a ratio of maximum luminance to minimum luminance in a video or image signal.

A high dynamic range (high dynamic range, HDR) image is an image with a dynamic range of 0.001 nit to 10000 nits, where nit is a unit of illumination.

A standard dynamic range (standard dynamic range, SDR) image is also referred to as a low dynamic range image, and is an image with a dynamic range from 1 nit to 100 nits.

Luminance-chrominance-chrominance (luma-chroma-chroma, LCC) indicates three components of a video signal in which luminance and chrominance are separated.

An optical-electro transfer function (optical-electro transfer function, OETF) indicates a relationship of transferring from a linear signal of an image pixel to a nonlinear signal. In a present stage, commonly used optical-electro transfer functions include the following three types:
a perceptual quantizer (Perceptual Quantizer, PQ) optical-electro transfer function, a hybrid log-gamma (Hybrid Log-Gamma, HLG) optical-electro transfer function, and a scene luminance fidelity (Scene Luminance Fidelity, SLF) optical-electro transfer function. The three types of optical-electro transfer functions are optical-electro transfer functions specified in the audio video coding standard (Audio Video coding Standard, AVS).

In a plurality of fields, a dynamic range (dynamic range) indicates a ratio of a maximum value to a minimum value of a variable. For a digital image, the dynamic range indicates a ratio of a maximum grayscale value to a minimum grayscale value in a range in which an image can be displayed. A dynamic range in nature is quite large. Luminance of a night scene under the starry sky is about 0.001 cd/m², luminance of the sun is up to 1,000,000,000 cd/m², and the dynamic range can reach an order of magnitude of 1,000,000,000/0.001=10¹³. However, in the real world of nature, the luminance of the sun and luminance of starlight are not obtained simultaneously. In the real world, a dynamic range of a natural scene is from 10⁻³ to 10⁶. Currently, in most color digital images, R, G, and B channels each are stored by using 1 byte, namely, 8 bits. In other words, grayscale ranges of the channels are from 0 to 255, where 0 to 255 is a dynamic range of the image. Because in the same scene in the real world, the dynamic range is between 10⁻³ and 10⁶, and is referred to as a high dynamic range (high dynamic range, HDR), a dynamic range of a common picture is a low dynamic range (low dynamic range, LDR). An imaging process of a digital camera is actually mapping from the high dynamic range of the real world to a low dynamic range of a photo. This is usually a nonlinear process.

FIG. 1 is a diagram of dynamic range mapping.

The PQ optical-electro transfer function is a perceptual quantizer optical-electro transfer function provided based on a luminance perception model for human eyes. FIG. 2 is a diagram of a PQ optical-electro transfer function.

The PQ optical-electro transfer function indicates a relationship of transferring from a linear signal value of an image pixel to a nonlinear signal value in PQ domain, and the PQ optical-electro transfer function may be expressed as a formula (1): $\left\{\begin{matrix}R ′ = PQ _ TF \left(max\left(0,min\left(R/10000,1\right)\right)\right) \\ G ′ = PQ _ TF \left(max\left(0,min\left(G/10000,1\right)\right)\right) \\ B ′ = PQ _ TF \left(max\left(0,min\left(B/10000,1\right)\right)\right)\end{matrix}\right.$

Parameters in the formula (1) are calculated as follows: $L ′ = PQ_TF \left(L\right) = {\left(\frac{{c}_{1} + {c}_{2} {L}^{{m}_{1}}}{1 + {c}_{3} {L}^{{m}_{1}}}\right)}^{{m}_{2}}$

L indicates a linear signal value, and a value of L is normalized to [0, 1]. L' indicates a nonlinear signal value, and a value range of L' is [0, 1]. m₁, m₂, c₁, c₂, and c₃ are PQ optical-electro transfer coefficients, and m₁, m₂, c₁, c₂, and c₃ satisfy the following relationship: ${m}_{1} = \frac{2610}{4096} \times \frac{1}{4} = 0.1593017578 125$ ${m}_{2} = \frac{2523}{4096} \times 128 = 78.84375$ ${c}_{1} = {c}_{3} - {c}_{2} + 1 = \frac{3424}{4096} = 0.8359375$ ${c}_{2} = \frac{2413}{4096} \times 32 = 18.8515625$ ${c}_{3} = \frac{2392}{4096} \times 32 = 18.6875$

The HLG optical-electro transfer function is obtained by modifying a conventional gamma curve. FIG. 3 is a diagram of an HLG optical-electro transfer function.

For the HLG optical-electro transfer function, the conventional gamma curve is used in a lower segment, and a log curve is added in an upper segment. The HLG optical-electro transfer function indicates a relationship of transferring from a linear signal value of an image pixel to a nonlinear signal value in HLG domain, and the HLG optical-electro transfer function may be expressed as a formula (3): $L ′ = HLG_TF \left(L\right) = \left\{\begin{matrix}\sqrt{L} / 2 , 0 \leq L \leq 1 \\ aln \left(L-b\right) + c , 1 < L\end{matrix}\right.$

L indicates a linear signal value, and a value range of L is [0, 12]. L' indicates a nonlinear signal value, and a value range of L' is [0, 1]. a, b, and c are HLG optical-electro transfer coefficients, a=0.17883277, b=0.28466892, and c=0.55991073.

The SLF optical-electro transfer function is an optimal curve obtained based on luminance distribution in an HDR scene when optical characteristics of human eyes are satisfied. FIG. 4 is a diagram of an SLF optical-electro transfer function.

An SLF optical-electro transfer curve indicates a relationship of transferring from a linear signal value of an image pixel to a nonlinear signal value in SLF domain. The relationship of transferring from a linear signal value of an image pixel to a nonlinear signal value in SLF domain is expressed as a formula (3): $\left\{\begin{matrix}R ′ = SLF_TF \left(max\left(0,min\left(R/10000,1\right)\right)\right) \\ G ′ = SLF_TF \left(max\left(0,min\left(R/10000,1\right)\right)\right) \\ B ′ = SLF_TF \left(max\left(0,min\left(R/10000,1\right)\right)\right)\end{matrix}\right.$

The SLF optical-electro transfer function may be expressed as a formula (5): $L ′ = SLF_TF \left(L\right) = a \times {\left(\frac{p \times L}{\left(p-1\right) \times L}\right)}^{m} + b$

L indicates a linear signal value, and a value of L is normalized to [0, 1]. L' indicates a nonlinear signal value, and a value range of L' is [0, 1]. p, m, a, and b are SLF optical-electro transfer coefficients, p=2.3, m=0.14, a=1.12762, and b=-0.12762.

Linear space: A linear space in this application is a space in which a linear light signal is located.

Nonlinear space: A nonlinear space in this application is a space in which a signal obtained by transferring a linear light signal by using a nonlinear curve is located. Common nonlinear curves for an HDR include a PQ EOTF-1 curve, an HLG OETF curve, and the like. Common nonlinear curves for an SDR include a gamma curve. Usually, it is considered that a signal obtained by encoding a linear light signal by using the nonlinear curve is visually linear relative to human eyes. It should be understood that the nonlinear space may be considered as a visually linear space.

Gamma correction (gamma correction): Gamma correction is a method for performing nonlinear tone editing on an image. A dark-colored part and a light-colored part in an image signal may be detected, and proportions of the two parts are increased, to improve contrast effect of the image. Optical-electro transfer characteristics of current displays, photographic films, and many electronic cameras may be nonlinear. A relationship between outputs and inputs of these nonlinear components may be expressed by a power function: output=(input)γ.

Because a human visual system is nonlinear and human beings perceive visual stimulation through comparison, nonlinear conversion is performed on a color value output by a device. Stimulation is enhanced by the outside world at a specific proportion, and for human beings, the stimulation evenly increases. Therefore, for perception of human beings, a physical quantity increasing in a geometric progression is even. To display an input color according to the law of human vision, nonlinear transfer in a form of the power function needs to be performed to transfer a linear color value into a nonlinear color value. A value γ of gamma may be determined based on an optical-electro transfer curve of a color space.

Color space (color space): Colors may be different perception of eyes for light rays of different frequencies, or may represent objectively existing light at different frequencies. The color space is a color range defined by a coordinate system that is established by people to represent colors. A color gamut and a color model jointly define a color space. The color model is an abstract mathematical model that represents a color by using a group of color components. The color model may include, for example, a red-green-blue (red green blue, RGB) mode and a cyan-magenta-yellow-key plate (cyan magenta yellow key plate, CMYK) mode. The color gamut is a sum of colors that can be generated by a system. For example, Adobe RGB and sRGB are two different color spaces based on the RGB model.

Each device, for example, a display or a printer, has its own color space, and can generate only a color in a color gamut of the device. When an image is transferred from one device to another device, because each device performs conversion based on a color space of the device and displays RGB or CMYK, a color of the image may change on different devices.

An RGB space is a space in which a video signal is quantitatively represented by luminance of three primary colors: red, green, and blue. A YCC space is a color space representing separation of luminance and chrominance. Three components of a video signal in the YCC space represent luminance-chrominance-chrominance respectively. Common video signals in the YCC space include YUV, YCbCr, ICtCp, and the like.

To obtain an image with a higher dynamic range, a bit width of the image is usually greater than or equal to 10 bits (bit). Common coding standards that support an HDR include H.266, H.265, and high efficiency image format (high efficiency image format, HEIF). Common joint photographic experts group (joint photographic experts group, JPEG) and H.264 support only 8-bit coding, and therefore cannot well support an HDR video or an HDR image.

If good experience is expected to be achieved for an HDR image or an HDR video, an end-to-end process is needed. FIG. 4 is a diagram of an end-to-end process of an HDR video.

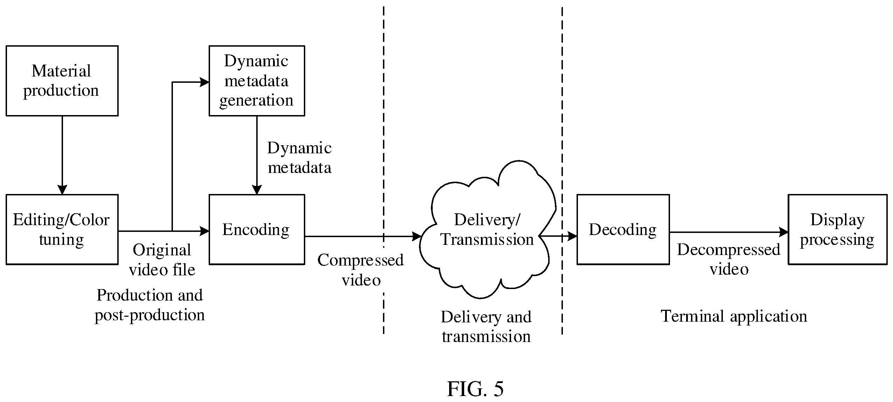

FIG. 5 is an end-to-end diagram of an HDR image or video from production to display. As shown in FIG. 5, an original video file (which may also be referred to as a master file) is obtained through the following processes: material production (for example, shooting a video, and producing a computer graphics (computer graphics, CG) video), editing, color tuning, and the like. Then, returned dynamic metadata is obtained based on the original video file. The original video file and the dynamic metadata are encoded to obtain a compressed video. The compressed video is delivered/transmitted (a delivery side is a streaming media server, a CDN, or the like, and the delivery side usually needs to perform transcoding, that is, a process of performing decoding and then performing encoding) to a terminal device (for example, a computer, a set-top box, a mobile phone, or a tablet computer). The terminal device decodes the compressed video to obtain a decompressed video. Then the decompressed video is displayed, through a display device (for example, a display or a television), for watching by a user.

For ease of description, the term "HDR object" is used in some embodiments of this application. The HDR object may be a static HDR image (which may also be referred to as an HDR image, an HDR photo, an HDR picture, or the like), or may be an HDR video or another type of dynamic HDR image, or may be a frame of image in an HDR video or a dynamic HDR image.

It can be understood that, for ease of description, in some embodiments of this application, an HDR image is used as an example to describe the technical solutions of this application. However, it can be understood that embodiments may be applied to an HDR image and other HDR objects, for example, an HDR video, a dynamic HDR image, or a frame of image in an HDR video or a dynamic HDR image.

FIG. 6A illustrates a diagram of a terminal device. As shown in FIG. 6A, the terminal device 600 includes a decoding module and a processing module. The decoding module is configured to decode a bitstream, to obtain a baseline image, metadata, and a gain map. The processing module is configured to process the baseline image based on the metadata, to obtain a processed baseline image, and then obtain a target image based on the processed baseline image and the gain map. Optionally, the terminal device 600 further includes a display module, configured to display the obtained target image.

A process of the decoding module includes decoding the received bitstream by using any decoder (HEVC, JPEG, ProRes, or HEIF), to obtain the baseline image, the metadata, and the gain map. The baseline image and the gain map obtained in this process include image data in any color space form like RGB or YUV. It should be noted that a format of the bitstream is not limited in this application. From a perspective of a color space, the image data may be in a form of YUV or RGB. From a perspective of a bit width of data, the bitstream may include 8 bits, 10 bits, 12 bits, or the like. In some embodiments, the decoding module may obtain the metadata from SEI of HEVC or VVC, a user-defined NAL unit, a reserved packet unit, APP extension information encapsulated in JFIF, a data segment encapsulated in MP4, or the like; or may obtain the metadata from another file location, for example, a location after an EOI (end of image) of a complete JPEG file.

It should be noted that the metadata mainly includes data like a source data format, region division information, region traversal sequence information, an image feature, and a curve parameter, and one or more metadata information units. The metadata information unit includes data like coordinate information, an image feature, and a curve parameter.

In some embodiments, the decoding module may obtain the gain map from SEI of HEVC or VVC, a user-defined NAL unit, a reserved packet unit, APP extension information encapsulated in JFIF, a data segment encapsulated in MP4, or the like; or may obtain the gain map from another file location indicated in the metadata, for example, a location after an EOI (end of image) of a complete JPEG file.

The gain map may be as follows: One pixel value corresponds to one gain map, or a plurality of pixel values correspond to one gain map, where the gain map may include a plurality of values, and quantities of values included in gain maps corresponding to pixels are the same.

FIG. 6 is a diagram of a digital signal processing method according to an embodiment of this application. As shown in FIG. 6, the digital signal processing method provided in this embodiment of this application may be applied to a decoder side.

A decoding module (which may also be referred to as a decoder) may obtain base layer data, enhancement layer data, and metadata from a received bitstream. Then, the decoding module may merge the base layer data and the enhancement layer data, to obtain an HDR image.

A graphics processing module may process the HDR image. The graphics processing module may further process the base layer data. The graphics processing module may send the processed HDR image and base layer data to a display module.

The display module may display the HDR image based on received data (the processed HDR image and the processed base layer data).

For ease of description, the HDR image obtained by the decoding module based on the base layer data and the enhancement layer data may be referred to as an HDR image 1, the HDR image obtained by the graphics processing module by processing the HDR image 1 is referred to as an HDR image 2, and the HDR image displayed by the display module is referred to as an HDR image 3.

The base layer data may also be referred to as a base layer image, base data, a base image, or a baseline image, and may be an SDR image or an HDR image with a low dynamic range.

The enhancement layer data may also be referred to as enhancement data, an enhancement layer image, or an enhancement image, and may include some image detail information. In this way, the base layer data is supplemented based on the image detail information included in the enhancement layer data, to obtain an HDR image with a higher contrast (namely, the HDR image 1 mentioned above) through merging.

A dynamic range of the base layer data is smaller than a dynamic range of the HDR image (namely, the HDR image 1) determined based on the base layer data and the enhancement layer data.

For example, in some embodiments, the base layer data may be an SDR image, and the HDR image 1 is an HDR image. The HDR image and the SDR image have at least one of the following differences: different optical-electro transfer functions, different color gamuts, or different dynamic ranges.

For another example, in some other embodiments, the base layer data may be an HDR image, but a dynamic range of the HDR image is smaller than a dynamic range of the HDR image 1.

For example, it is assumed that the dynamic range of the base layer data is from DRₓ₁ to DRₓ₂, and the dynamic range of the HDR image 1 is from DR_{y1} to DR_{y2}. In some embodiments, DR_{y1} is less than DRₓ₁, and DR_{y2} is greater than DRₓ₂. In some other embodiments, DR_{y1} is less than DRₓ₁, and DR_{y2} is equal to DRₓ₂. In some other embodiments, DR_{y1} is equal to DRₓ₁, and DR_{y2} is greater than DRₓ₂. In other words, it can be considered that the base layer data is an image whose dynamic range is smaller than that of the HDR image 1.

In some embodiments, resolution of the base layer data may be 720P, 1080P, 2K, 4K, 8K, or the like.

In some embodiments, resolution of the enhancement layer data may be 720P, 1080P, 2K, 4K, 8K, or the like.

In some embodiments, resolution of the HDR image 1 may be 720P, 1080P, 2K, 4K, 8K, or the like.

In some embodiments, resolution of the HDR image 2 may be 720P, 1080P, 2K, 4K, 8K, or the like.

In some embodiments, resolution of the HDR image 3 may be 720P, 1080P, 2K, 4K, 8K, or the like.

In some embodiments, resolution of the base layer data may be the same as resolution of the enhancement layer data. For example, both the resolution of the base layer data and the resolution of the enhancement layer data are 4K.

In some other embodiments, resolution of the base layer data may be different from resolution of the enhancement layer data. For example, in some embodiments, the resolution of the base layer data may be higher than the resolution of the enhancement layer data. For example, the resolution of the base layer data may be 4K, and the resolution of the enhancement layer data may be 2K or 1080P. For another example, in some other embodiments, the resolution of the base layer data may be lower than the resolution of the enhancement layer data. For example, the resolution of the base layer data may be 1080P or 2K, and the resolution of the enhancement layer data may be 4K.

FIG. 6B is a diagram of a system architecture or a scenario of application according to an embodiment of this application. For example, the system is implemented by using a terminal device 600B. The system first decodes/obtains base data (for example, the baseline image in FIG. 6A), metadata, and enhancement data (for example, the gain map in FIG. 6A), separately processes the base data and the enhancement data based on the metadata, and then merges processed base data and enhancement data, to obtain an HDR image. Related limitations on the base layer data, the enhancement layer data, the metadata, and the HDR image in the embodiment related to FIG. 6 are also applicable to the embodiment related to FIG. 6B. Details are not described herein again.

FIG. 7A is a schematic flowchart of an encoding method according to an embodiment of this application. The method includes the following steps.

0701A: Obtain a first baseline image, a first gain map, and metadata based on a first image, where the first baseline image corresponds to a first dynamic range, the first image corresponds to a second dynamic range, and the second dynamic range is different from the first dynamic range.

0702A: Encode the first baseline image.

0703A: Encode the first gain map.

0704A: Encode the metadata.

Optionally, in some embodiments, the first image is a high dynamic range HDR image. For obtaining of the HDR image, refer to descriptions in other embodiments of this application. Details are not described herein.

In some embodiments, the metadata includes a scaling ratio, and the scaling ratio indicates a scaling ratio of the first gain map to a second gain map. A decoder side may process the gain map based on the scaling ratio.

In some embodiments, the scaling ratio includes a horizontal scaling ratio and/or a vertical scaling ratio, the horizontal scaling ratio indicates a scaling ratio of the first gain map to the second gain map in a horizontal direction, and the vertical scaling ratio indicates a scaling ratio of the first gain map to the second gain map in a vertical direction. The decoder side may perform horizontal processing on the gain map based on the horizontal scaling ratio, and perform vertical processing on the gain map based on the vertical scaling ratio.

Optionally, for a process of obtaining the first baseline image based on the first image, refer to descriptions in other embodiments of this application. Details are not described herein. A data format of the baseline image is not limited in this application. From a perspective of a color space, the baseline image may be in a form of YUV or RGB. From a perspective of a bit width of data, the baseline image may include 8 bits, 10 bits, 12 bits, or the like. An optical-electro transfer characteristic/function corresponding to the baseline image may be PQ, gamma, log, HLG, or the like.

Optionally, the encoding the first baseline image may include the following steps. Step A: Obtain an intermediate baseline image. Step B: Process the intermediate baseline image, to obtain a second baseline image, and obtain metadata corresponding to the baseline image. Step C: Encode the first baseline image, the intermediate baseline image, or the second baseline image. For encoding of the first baseline image, refer to a process of encoding a base layer image base[i] in other embodiments of this application. Details are not described herein.

It should be noted that, in this application, the baseline image may also be referred to as a base layer image/base layer data/base layer image data/baseline layer image/baseline layer data/baseline layer image data, and the gain map may also be referred to as enhancement data.

Optionally, the encoding the first gain map may include the following steps. Step A: Obtain an intermediate gain map based on the first image (which may be an HDR image or an SDR image) and the second baseline image. Step B: Downsample intermediate enhancement data, to obtain second intermediate enhancement data enhance. Step C: Process the second intermediate enhancement data enhance, to obtain final enhancement data. Step D: Downsample base layer image data. Step E: Encode the final enhancement data and metadata corresponding to the gain map.

Obtaining the intermediate gain map based on the first image (which may be the HDR image or the SDR image) and the second baseline image in step A may be implemented by using the following solutions.

Solution 1: Intermediate enhancement data = high dynamic range data/f(baseAfter[i]), where f() is a transfer function in numerical domain, for example, log, OETF, EOTF, or a piecewise curve, or may include processing of second base layer data (obtaining a data range (a minimum value and/or a maximum value) of the second base layer data, and mapping the minimum value of the second base layer data to 0 or a preset value, and/or mapping the maximum value to 1.0 or a preset value, and/or mapping an intermediate value to a specific intermediate value based on a mapping relationship of the maximum value and/or a mapping relationship of the minimum value).

Solution 2: Intermediate enhancement data = high dynamic range data - f(baseAfter[i]), where f() is a transfer function in numerical domain, for example, log, OETF, EOTF, or a piecewise curve, or may include processing of second base layer data (obtaining a data range (a minimum value and/or a maximum value) of the second base layer data, and mapping the minimum value of the second base layer data to 0 or a preset value, and/or mapping the maximum value to 1.0 or a preset value, and/or mapping an intermediate value to a specific intermediate value based on a mapping relationship of the maximum value and/or a mapping relationship of the minimum value).

Downsampling the intermediate enhancement data, to obtain the second intermediate enhancement data enhance in step B may be implemented by using the following solutions.

Solution 1: Downsampling is not performed, and the second intermediate enhancement data = the intermediate enhancement data.

Solution 2: One index is transmitted, or one index is transmitted for each region, and a good interpolation mode is selected from a preset set. The preset set may be a texture interpolation mode of OpenGL: GL_NEAREST (nearest-neighbor) and GL_LINEAR (nearest-neighbor); or may be a texture interpolation mode of Vulkan: NEAREST (nearest-neighbor) or LINEAR (nearest-neighbor); or may be a mode in which a plurality of groups of filters are transmitted or that includes a plurality of types of directional interpolation, or bicubic spline; or may be a full set or a subset of all of the foregoing modes. A mode in which a difference between raw intermediate enhancement data and the second intermediate enhancement data obtained through upsampling by using the method after the downsampling is the smallest is selected, and the mode is added to enhancement metadata (namely, enhancement data or metadata corresponding to a gain map).

Solution 3: A default mode is selected from a texture interpolation mode of OpenGL, Vulkan, or Metal. The default mode may be a texture interpolation mode of OpenGL: GL_NEAREST (nearest-neighbor) and GL_LINEAR (nearest-neighbor); or may be a texture interpolation mode of Vulkan: NEAREST (nearest-neighbor) or LINEAR (nearest-neighbor); or a mode in which a difference between raw intermediate enhancement data and the second intermediate enhancement data obtained through upsampling by using the method after the downsampling is the smallest is selected, and the mode is added to enhancement metadata.

Solution 4: A preset filter, or a mode including a plurality of types of directional interpolation, or a bicubic spline mode, or the like may be used. A mode in which a difference between raw intermediate enhancement data and the second intermediate enhancement data obtained through upsampling by using the method after the downsampling is the smallest is selected, and the mode is added to enhancement metadata.

Processing the second intermediate enhancement data enhance, to obtain the final enhancement data in step C may be implemented by using the following solutions.

Solution 1: A data range (a minimum value and/or a maximum value) of the second intermediate enhancement data is obtained. The minimum value of the second intermediate enhancement data is mapped to 0 or a preset value, and/or the maximum value is mapped to 1.0 or a preset value. Then, an intermediate value is mapped to a specific intermediate value based on a mapping relationship of the maximum value and/or a mapping relationship of the minimum value, to obtain the final enhancement data.

Solution 2: A histogram of the second intermediate enhancement data is obtained, a mapping relationship TME() is obtained by using a histogram equalization method, and then the following mapping function is used: enhanceAfter[i] = TMB(enhance[i]), or enhanceAfter[i] = TMB() × enhance[i].

The mapping relationship has various forms: Sigmoid, cubic spline, gamma, a straight line, or the like, or an inverse function form thereof. This is not limited in the present invention. The following curve may be used: $L ′ = F \left(L\right) = a \times {\left(\frac{p \times {L}^{n}}{\left(p-1\right) \times {L}^{n} + 1}\right)}^{m} + b$

Alternatively, an inverse curve of the foregoing curve may be used. It should be noted that L and L' may be normalized optical signals or electrical signals. This is not limited in the present invention.

It should be noted that a format of the metadata is not limited in the present invention. The metadata may include histogram information and tone-mapping curve parameter information, as specified in ST 2094-40; or may include tone-mapping curve parameter information, as specified in ST 2094-10.

It should be noted that, in the present invention, enhanceAfter[i] and enhance[i] are not limited to being in any domain, and may be in linear domain, PQ domain, log domain, or the like. In addition, in the present invention, color spaces of enhanceAfter[i] and enhance[i] are not limited, and may be the following color spaces: YUV, RGB, Lab, HSV, and the like.

It should be noted that color gamut mapping may be added before or after processing, to perform conversion from a current color gamut to a target color gamut. The current color gamut and the target color gamut include but are not limited to BT.2020, BT.709, DCI-P3, sRGB, and the like.

Downsampling the base layer image data in step D may be implemented by using the following solution.

A plurality of preset scaling ratios are traversed, a plurality of preset downsampling phases are traversed, and a plurality of preset upsampling/downsampling algorithms are traversed. Downsampling, encoding and decoding, and upsampling are performed on a base layer image by using a same algorithm. An optimal parameter is selected for performing the operations. Details are as follows.

**A plurality of preset scaling ratios are traversed.**

For example, if P is 1/2, the plurality of preset scaling ratios P include: 1/2 in a horizontal direction, 1/2 in a vertical direction, or 1/2 in both a vertical direction and a horizontal direction.

Alternatively, a specific preset scaling ratio may be used.

**A plurality of preset downsampling phases are traversed.**

The preset downsampling phases include O locations obtained through division based on a preset downsampling scaling ratio P, for example, 0, P/O, 2×P/O, ..., and (O-1)×P/O.

Alternatively, a specific preset downsampling phase may be used.

**A plurality of preset upsampling/downsampling algorithms A are traversed, and downsampling is performed on enhancement data.**

The preset algorithm is selected from a texture interpolation mode of OpenGL, Vulkan, or Metal. The mode may be a texture interpolation mode of OpenGL: GL_NEAREST (nearest-neighbor) and GL_LINEAR (nearest-neighbor); or may be a texture interpolation mode of Vulkan: NEAREST (nearest-neighbor) or LINEAR (nearest-neighbor); or may be a preset filter (similar to an 8-tap filter of an MC module in H.265, or an 8-tap filter used during inter-layer upsampling/downsampling of SHVC), or a mode including a plurality of types of directional interpolation; or may be a bicubic spline mode, or the like.

Alternatively, a specific preset upsampling/downsampling algorithm may be used.

**Encoding and decoding are performed, and then upsampling is performed.**
1. Enhancement data is encoded and then decoded by using a pre-selected encoding/decoding algorithm.
2. Then, an upsampling algorithm corresponding to the downsampling algorithm A is used to perform upsampling on reconstructed data obtained through decoding. If the upsampling algorithm is a preset fixed upsampling algorithm B, upsampling is performed by using the upsampling algorithm B.

**An optimal parameter is selected for a subsequent encoding process.**

This may be as follows:
1. Method 1: Distortion and code rates of raw enhancement data and reconstructed enhancement data are calculated, and a method with better rate-distortion (distortion+lambda coefficient×code rate) performance is selected.
2. Method 2: Reconstructed enhancement data is combined with baseline data, to obtain reconstructed high dynamic range data. Distortion between raw high dynamic range data and the reconstructed high dynamic range data is calculated, a code rate for encoding enhancement data is used, and a method with better rate-distortion (distortion+lambda coefficient×code rate) performance is selected.

Encoding the final enhancement data and the metadata corresponding to the gain map in step E may be implemented by using the following solution.

The enhancement data may be encoded by using a JPEG codec, an HEIF codec, an H.264 codec, an HEVC codec, or the like. This is not limited in the present invention.

The enhancement metadata may be placed in a non-coded pixel field, for example, SEI or APPN.

This application provides an image encoding method compatible with a plurality of formats, to achieve good image quality in systems with different support capabilities, and provide compatibility with systems with different capabilities. A file size can be significantly reduced through upsampling or downsampling.

FIG. 7 is a schematic flowchart of an encoding method according to an embodiment of this application.

701: Obtain a first HDR image and first base layer data corresponding to the first HDR image.

702: Encode the first base layer data.

703: Determine first enhancement layer data based on the first base layer data and the first HDR image.

704: Encode the first enhancement layer data.

705: Encode first metadata, where the first metadata includes metadata of the first base layer data and metadata of the first enhancement layer data.

Optionally, in some embodiments, the determining the first enhancement layer data based on the first base layer data and the first HDR image includes: determining second base layer data based on the first base layer data; determining the first enhancement layer data based on the second base layer data and the first HDR image; and adjusting, based on a concept of rate-distortion optimization, a manner of determining the first enhancement layer data based on the second base layer data and the first HDR image, to enable the encoding of the first enhancement layer data to meet a rate-distortion performance objective.

Optionally, in some embodiments, the determining the second base layer data based on the first base layer data includes: determining intermediate base layer data based on the first base layer data; and determining the second base layer data based on the intermediate base layer data.

Optionally, in some embodiments, the determining the intermediate base layer data based on the first base layer data includes: determining that the intermediate base layer data is the first base layer data.

Optionally, in some embodiments, the determining the intermediate base layer data based on the first base layer data includes: encoding the first base layer data, to obtain first base layer encoded information; and decoding a result of the first base layer encoded information, to obtain first base layer decoded information, where the intermediate base layer data is the first base layer decoded information.

Optionally, in some embodiments, the determining the second base layer data based on the intermediate base layer data includes: determining that the second base layer data is the intermediate base layer data.

Optionally, in some embodiments, the determining the second base layer data based on the intermediate base layer data includes: respectively mapping at least one base layer feature value to at least one base layer reference value, to obtain the second base layer data, where the second base layer data includes the at least one base layer reference value and a value of a pixel in the intermediate base layer data other than the at least one base layer feature value, and the at least one base layer feature value includes at least one of the following values: a maximum value, a minimum value, or an intermediate value of the pixel in the intermediate base layer data.

Optionally, in some embodiments, the determining the second base layer data based on the intermediate base layer data includes: determining at least one feature luminance value based on the first HDR image; determining at least one pixel from the intermediate base layer data, where the at least one pixel is in a one-to-one correspondence with the at least one feature luminance value, and a location of each of the at least one pixel is the same as a location of a corresponding feature luminance value; fitting function parameters based on the at least one feature luminance value, a value of the at least one pixel, and a preset or selected mapping function, and determining a first mapping relationship; and transferring the intermediate base layer data into the second base layer data based on the first mapping relationship.

Optionally, in some embodiments, the determining the at least one feature luminance value based on the first HDR image includes: determining that a luminance value at a peak location in a histogram of the first HDR image is the feature luminance value.

Optionally, in some embodiments, the determining the at least one feature luminance value based on the first HDR image includes: determining at least one reference region on the first HDR image; and determining that a reference luminance value of each of the at least one reference region is the feature luminance value, where the reference luminance value of each reference region is an average luminance value or a maximum luminance value of the reference region.

Optionally, in some embodiments, the transferring the intermediate base layer data into the second base layer data based on the first mapping relationship includes: The intermediate base layer data and the second base layer data satisfy the following relationship: $baseAfter \left[i\right] = {TMB}_{1} \left({R}_{base \left[i\right] _ 1}\right)$
baseAfter[i] indicates a value of an i^{th} pixel in the second base layer data, R_{base[i]_1} indicates a first reference value, of an i^{th} pixel, determined based on a value of the i^{th} pixel in the intermediate base layer data, and TMB₁() indicates the first mapping relationship.

Optionally, in some embodiments, the transferring the intermediate base layer data into the second base layer data based on the first mapping relationship includes: The intermediate base layer data and the second base layer data satisfy the following relationship: $baseAfter \left[i\right] = {TMB}_{1} \left({R}_{base \left[i\right] _ 2}\right) \times {R}_{base \left[i\right] _ 3}$
baseAfter[i] indicates the value of the i^{th} pixel in the second base layer data, TMB₁() indicates the first mapping relationship, R_{base[i]_2} is a second reference value, of the i^{th} pixel, determined based on the value of the i^{th} pixel in the intermediate base layer data, and R_{base[i]_3} is a third reference value, of the i^{th} pixel, determined based on the value of the i^{th} pixel in the intermediate base layer data.

Optionally, in some embodiments, the determining the first enhancement layer data based on the second base layer data and the first HDR image includes: determining first intermediate enhancement data based on the second base layer data and the first HDR image; determining second intermediate enhancement data based on the first intermediate enhancement data; and determining the first enhancement layer data based on the second intermediate enhancement data.

Optionally, in some embodiments, the determining the first intermediate enhancement data based on the second base layer data and the first HDR image includes: obtaining a target transfer result based on the second base layer data and a target numerical transfer function; and determining the first intermediate enhancement layer data based on the first HDR image and the target transfer result.

Optionally, in some embodiments, the first intermediate enhancement layer data is a quotient of data of the first HDR image and the target transfer result.

Optionally, in some embodiments, the first intermediate enhancement layer data is a difference between data of the first HDR image and the target transfer result.

Optionally, in some embodiments, the determining the second intermediate enhancement data based on the first intermediate enhancement data includes: determining that the second intermediate enhancement data is the first intermediate enhancement data.

Optionally, in some embodiments, the determining the second intermediate enhancement data based on the first intermediate enhancement data includes: determining a target interpolation mode; and downsampling the first intermediate enhancement data in the target interpolation mode, to obtain the second intermediate enhancement data.

Optionally, in some embodiments, the determining the target interpolation mode includes: determining the target interpolation mode from a plurality of interpolation modes, where a difference between the first intermediate enhancement data and restored data obtained by upsampling the second intermediate enhancement data in the target interpolation mode is less than a difference between the first intermediate enhancement data and restored data obtained by upsampling reference intermediate enhancement data in a reference interpolation mode, the first reference intermediate enhancement data is intermediate enhancement data obtained by downsampling the first intermediate enhancement data in the reference interpolation mode, and the reference interpolation mode is any one of the plurality of interpolation modes other than the target interpolation mode.

Optionally, in some embodiments, the first metadata includes interpolation mode indication information, and the interpolation mode indication information indicates the target interpolation mode.

Optionally, in some embodiments, the determining the first enhancement layer data based on the second intermediate enhancement data includes: respectively mapping at least one enhancement layer feature value to at least one enhancement layer reference value, to obtain the first enhancement layer data, where the first enhancement layer data includes the at least one enhancement layer reference value and a value of a pixel in the second intermediate enhancement data other than the at least one enhancement layer feature value, and the at least one enhancement layer feature value includes at least one of the following values: a maximum value, a minimum value, or an intermediate value of the pixel in the intermediate base layer data.

Optionally, in some embodiments, the determining the first enhancement layer data based on the second intermediate enhancement data includes: determining a histogram of the second intermediate enhancement data; equalizing the histogram of the second intermediate enhancement data, to obtain an equalized histogram of the second intermediate enhancement data; determining a second mapping relationship based on the histogram of the second intermediate enhancement data and the equalized histogram of the second intermediate enhancement data; transferring the second intermediate enhancement data into the first enhancement layer data based on the second mapping relationship; and adjusting the second mapping relationship through iterative optimization, to reduce a difference between the second intermediate enhancement data and inverse-transformed first enhancement data obtained by performing inverse transformation on the first enhancement layer data.

Optionally, in some embodiments, the transferring the second intermediate enhancement data into the first enhancement layer data based on the second mapping relationship includes: The second intermediate enhancement layer data and the first enhancement layer data satisfy the following relationship: $enhanceAfter \left[i\right] = {TMB}_{2} \left({R}_{enhance \left[i\right] _ 1}\right)$
enhanceAfter[i] indicates a value of an i^{th} pixel in the first enhancement layer data, R_{enhance[i]_1} indicates a first reference value, of an i^{th} pixel, determined based on a value of the i^{th} pixel in the second intermediate enhancement layer data, and TMB₂() indicates the second mapping relationship.

Optionally, in some embodiments, the transferring the second intermediate enhancement data into the first enhancement layer data based on the second mapping relationship includes: The second intermediate enhancement layer data and the first enhancement layer data satisfy the following relationship: $enhanceAfter \left[i\right] = {TMB}_{2} \left({R}_{enhance \left[i\right] _ 2}\right) \times {R}_{enhance \left[i\right] _ 3}$
enhanceAfter[i] indicates the value of the i^{th} pixel in the first enhancement layer data, TMB₂() indicates the second mapping relationship, R_{enhance[i]_2} indicates a second reference value, of the i^{th} pixel, determined based on the value of the i^{th} pixel in the second intermediate enhancement layer data, and R_{enhance[i]_3} indicates a third reference value, of the i^{th} pixel, determined based on the value of the i^{th} pixel in the second intermediate enhancement layer data.

FIG. 8 is a schematic flowchart of a digital signal processing method according to an embodiment of this application.

801: Obtain first base layer data, first enhancement layer data, and first metadata, where the first base layer data is base layer data of a first HDR object, the first enhancement layer data is enhancement layer data of the first HDR object, and the first metadata is metadata of the first HDR object.

802: Determine second base layer data based on the first base layer data.

803: Determine second enhancement layer data based on the first enhancement layer data.

804: Determine a second HDR object based on the first metadata, the second base layer data, and the second enhancement layer data.

805: Determine a third HDR object based on the second HDR object.

Optionally, in some embodiments, the determining the second base layer data based on the first base layer data includes: determining that the second base layer data is the same as the first base layer data.

Optionally, in some embodiments, the determining the second base layer data based on the first base layer data includes: transforming the first base layer data based on the first metadata, to obtain the second base layer data.

Optionally, in some embodiments, the transforming the first base layer data based on the first metadata, to obtain the second base layer data includes: transforming the first base layer data based on at least one reference value carried in the first metadata, to obtain the second base layer data.

Optionally, in some embodiments, the at least one reference value includes a first reference value and a second reference value, and the transforming the first base layer data based on the at least one reference value carried in the first metadata, to obtain the second base layer data includes: The first reference value, the second reference value, the first base layer data, and the second base layer data satisfy the following relationship: $baseAfter \left[i\right] = base \left[i\right] \times {REF}_{1} + \left(A-base\left[i\right]\right) \times {REF}_{2}$
baseAfter[i] indicates a value of an i^{th} pixel in the second base layer data, base[i] indicates a value of an i^{th} pixel in the first base layer data, REF₁ indicates the first reference value, REF₂ indicates the second reference value, and A indicates a maximum value of a plurality of pixels included in the first base layer data.

Optionally, in some embodiments, the at least one reference value includes a third reference value, and the transforming the first base layer data based on the at least one reference value carried in the first metadata, to obtain the second base layer data includes: The third reference value, the first base layer data, and the second base layer data satisfy the following relationship: $baseAfter \left[i\right] = base \left[i\right] + {REF}_{3}$
baseAfter[i] indicates a value of an i^{th} pixel in the second base layer data, base[i] indicates a value of an i^{th} pixel in the first base layer data, and REF₃ indicates the third reference value.

Optionally, in some embodiments, the at least one reference value includes a fourth reference value, and the transforming the first base layer data based on the at least one reference value carried in the first metadata, to obtain the second base layer data includes: The fourth reference value, the first base layer data, and the second base layer data satisfy the following relationship: $baseAfter \left[i\right] = {REF}_{4} + A - base \left[i\right]$
baseAfter[i] indicates a value of an i^{th} pixel in the second base layer data, base[i] indicates a value of an i^{th} pixel in the first base layer data, REF₄ indicates the fourth reference value, and A indicates a maximum value of a plurality of pixels included in the first base layer data.

Optionally, in some embodiments, the transforming the first base layer data based on the first metadata, to obtain the second base layer data includes: transforming the first base layer data based on at least one mapping relationship carried in the first metadata, to obtain the second base layer data.

Optionally, in some embodiments, the at least one mapping relationship includes a first mapping relationship, and the transforming the first base layer data based on the at least one mapping relationship carried in the first metadata, to obtain the second base layer data includes: The first base layer data and the second base layer data satisfy the following relationship: $baseAfter \left[i\right] = {TMB}_{1} \left({R}_{base \left[i\right] _ 1}\right)$
baseAfter[i] indicates a value of an i^{th} pixel in the second base layer data, R_{base[i]_1} indicates a first reference value, of an i^{th} pixel, determined based on a value of the i^{th} pixel in the first base layer data, and TMB₁() indicates the first mapping relationship.

Optionally, in some embodiments, the at least one mapping relationship includes a first mapping relationship, and the transforming the first base layer data based on the at least one mapping relationship carried in the first metadata, to obtain the second base layer data includes:

The first base layer data and the second base layer data satisfy the following relationship: $baseAfter \left[i\right] = {TMB}_{1} \left({R}_{base \left[i\right] _ 2}\right) \times {R}_{base \left[i\right] _ 3}$
baseAfter[i] indicates a value of an i^{th} pixel in the second base layer data, TMB₁() indicates the first mapping relationship, R_{base[i]_2} is a second reference value, of an i^{th} pixel, determined based on a value of an i^{th} pixel in the first base layer data, and R_{base[i]_3} is a third reference value, of the i^{th} pixel, determined based on the value of the i^{th} pixel in the first base layer data.

Optionally, in some embodiments, the at least one mapping relationship includes a second mapping relationship and a third mapping relationship, and the transforming the first base layer data based on the at least one mapping relationship carried in the first metadata, to obtain the second base layer data includes:

The first base layer data and the second base layer data satisfy the following relationship: $baseAfter \left[i\right] = {TMB}_{3} \left({TMB}_{2}\left({R}_{base \left[i\right] _ 4}\right)\right)$
baseAfter[i] indicates a value of an i^{th} pixel in the second base layer data, R_{base[i]_4} indicates a fourth reference value, of an i^{th} pixel, determined based on a value of the i^{th} pixel in the first base layer data, TMB₂() indicates the second mapping relationship, and TMB₃() indicates the third mapping relationship.

Optionally, in some embodiments, the at least one mapping relationship includes a second mapping relationship and a third mapping relationship, and the transforming the first base layer data based on the at least one mapping relationship carried in the first metadata, to obtain the second base layer data includes:

The first base layer data and the second base layer data satisfy the following relationship: $baseAfter \left[i\right] = {TMB}_{3} \left({R}_{base \left[i\right] _ 6}\right) \times {TMB}_{2} \left({R}_{base \left[i\right] _ 5}\right)$
baseAfter[i] indicates a value of an i^{th} pixel in the second base layer data, R_{base[i]_5} indicates a fifth reference value, of an i^{th} pixel, determined based on a value of the i^{th} pixel in the first base layer data, R_{base[i]_6} indicates a sixth reference value, of the i^{th} pixel, determined based on the value of the i^{th} pixel in the first base layer data, TMB₂() indicates the second mapping relationship, and TMB₃() indicates the third mapping relationship.

Optionally, in some embodiments, the third mapping relationship is a global tone mapping function, or the third mapping relationship is a local tone mapping function.

Optionally, in some embodiments, the at least one mapping relationship includes at least one function relationship.

Optionally, in some embodiments, the transforming the first base layer data based on the first metadata, to obtain the second base layer data includes: transforming the first base layer data based on at least one piece of filter information carried in the first metadata, to obtain the second base layer data.

Optionally, in some embodiments, the at least one piece of filter information includes first filter information, and the transforming the first base layer data based on the at least one piece of filter information carried in the first metadata, to obtain the second base layer data includes:
filtering the first base layer data by using a first filter, to obtain first reference filtered data, where a parameter of the first filter is indicated by the first filter information, or a type of the first filter and a parameter of the first filter are indicated by the first filter information; and determining N pieces of base layer filtered data based on the first reference filtered data and the first base layer data, where the second base layer data includes the first reference filtered data and the N pieces of base layer filtered data, and N is a positive integer greater than or equal to 1.

The first reference filtered data and the first base layer data satisfy the following relationship:
baseAfter₀[i] = F₁[base[i]], where baseAfter₀[i] indicates a value of a pixel i in the first reference filtered data, base[i] indicates a value of a pixel i in the first base layer data, and F₁[] indicates the first filter. An n^{th} piece of base layer filtered data in the N pieces of base layer filtered data and the first base layer data satisfy the following relationship: ${baseAfter}_{n} \left[i\right] = base \left[i\right] - {baseAfter}_{n - 1} \left[i\right]$
baseAfterₙ[i] indicates a value of a pixel i in the n^{th} piece of base layer filtered data, and n=1, ..., N.

Optionally, in some embodiments, the transforming the first base layer data based on the first metadata, to obtain the second base layer data includes:
transforming the first base layer data based on at least one piece of filter information and at least one mapping relationship that are carried in the first metadata, to obtain the second base layer data.

Optionally, in some embodiments, the at least one piece of filter information includes second filter information, the at least one mapping relationship includes a fourth mapping relationship and a fifth mapping relationship, and the transforming the first base layer data based on the at least one piece of filter information and the at least one mapping relationship that are carried in the first metadata, to obtain the second base layer data includes: filtering the first base layer data by using a second filter, to obtain second reference filtered data, where a parameter of the second filter is indicated by the second filter information, or a type of the second filter and a parameter of the second filter are indicated by the second filter information; and transforming the second reference filtered data based on the fourth mapping relationship and the fifth mapping relationship, to obtain the second base layer data.

Optionally, in some embodiments, the transforming the second reference filtered data based on the fourth mapping relationship and the fifth mapping relationship, to obtain the second base layer data includes:
The second reference filtered data and the second base layer data satisfy the following relationship: $baseAfter \left[i\right] = {TMB}_{5} \left({TMB}_{4}\left(baseMid1\left[i\right]\right)\right)$
baseAfter[i] indicates a value of an i^{th} pixel in the second base layer data, baseMidl [i] indicates a value of a pixel i in the second reference filtered data, TMB₄() indicates the fourth mapping relationship, and TMB₅() indicates the fifth mapping relationship.

Optionally, in some embodiments, the transforming the second reference filtered data based on the fourth mapping relationship and the fifth mapping relationship, to obtain the second base layer data includes:
The second reference filtered data and the second base layer data satisfy the following relationship: $baseAfter \left[i\right] = {TMB}_{3} \left({R}_{base \left[i\right] _ 7}\right) \times {TMB}_{2} \left(baseMid1\left[i\right]\right)$
baseAfter[i] indicates a value of an i^{th} pixel in the second base layer data, baseMid1[i] indicates a value of a pixel i in the second reference filtered data, TMB₄() indicates the fourth mapping relationship, TMB₅() indicates the fifth mapping relationship, and R_{base[i]_7} indicates a seventh reference value, of an i^{th} pixel, determined based on a value of the i^{th} pixel in the first base layer data.

Optionally, in some embodiments, the determining the second enhancement layer data based on the first enhancement layer data includes: obtaining extension enhancement layer data based on the first enhancement layer data; or upsampling the first enhancement layer data, to obtain extension enhancement layer data; and determining the second enhancement layer data based on the extension enhancement layer data.

Optionally, in some embodiments, the upsampling the first enhancement layer data, to obtain the extension enhancement layer data includes: obtaining interpolation mode indication information obtained based on the first metadata or preset information; and upsampling the first enhancement layer data in an interpolation mode indicated by the interpolation mode indication information, to obtain the extension enhancement layer data.

Optionally, in some embodiments, the upsampling the first enhancement layer data, to obtain the extension enhancement layer data includes: upsampling the first enhancement layer data in a preset interpolation mode, to obtain the extension enhancement layer data.

Optionally, in some embodiments, the upsampling the first enhancement layer data, to obtain the extension enhancement layer data includes: determining K reference pixels included in the first base layer data, where the K reference pixels are respectively at K first locations, the first enhancement layer data has no pixel at the K first locations, and K is a positive integer greater than or equal to 1; determining K groups of adjacent pixels, where the K groups of adjacent pixels one-to-one correspond to the K reference pixels, a k^{th} group of adjacent pixels in the K groups of adjacent pixels includes at least one pixel, the at least one pixel included in the k^{th} group of adjacent pixels is adjacent to a k^{th} reference pixel in the K reference pixels, each of the at least one pixel included in the k^{th} group of adjacent pixels has one corresponding enhancement pixel in the first enhancement layer data, coordinates of the pixel are the same as coordinates of the enhancement pixel of the pixel, and k=1, ..., K; and determining a value of a k^{th} reference enhancement pixel in K reference enhancement pixels based on a value of the at least one pixel included in the k^{th} group of adjacent pixels, where the K reference enhancement pixels are at the K first locations in the extension enhancement layer data.

Optionally, in some embodiments, the determining the value of the k^{th} reference enhancement pixel in the K reference enhancement pixels based on the value of the at least one pixel included in the k^{th} group of adjacent pixels includes:
determining a first adjacent pixel, where a difference between a value of the k^{th} reference pixel and a value of the first adjacent pixel is less than a difference between the value of the k^{th} reference pixel and a value of any adjacent pixel in the k^{th} group of adjacent pixels other than the first adjacent pixel; and determining that a value of an enhancement pixel corresponding to the first adjacent pixel is the value of the k^{th} reference enhancement pixel.

Optionally, in some embodiments, the determining the value of the k^{th} reference enhancement pixel in the K reference enhancement pixels based on the value of the at least one pixel included in the k^{th} group of adjacent pixels includes:
determining at least two second adjacent pixels, where a difference between a value of the k^{th} reference pixel and a value of any one of the at least two second adjacent pixels is less than a difference between the value of the k^{th} reference pixel and a value of any adjacent pixel in the k^{th} group of adjacent pixels other than the at least two second adjacent pixels; determining at least two enhancement pixels, where the at least two enhancement pixels one-to-one correspond to the at least two second adjacent pixels; and determining the value of the k^{th} reference enhancement pixel based on values of the at least two enhancement pixels.

Optionally, in some embodiments, the determining the second enhancement layer data based on the extension enhancement layer data includes:
determining that the second enhancement layer data is the same as the extension enhancement layer data.

Optionally, in some embodiments, the determining the second enhancement layer data based on the extension enhancement layer data includes:
transforming the extension enhancement layer data based on the first metadata, to obtain the second enhancement layer data.

Optionally, in some embodiments, the transforming the extension enhancement layer data based on the first metadata, to obtain the second enhancement layer data includes:
transforming the extension enhancement layer data based on at least one reference value carried in the first metadata, to obtain the second enhancement layer data.

Optionally, in some embodiments, the at least one reference value includes a fifth reference value and a sixth reference value, and the transforming the extension enhancement layer data based on the at least one reference value carried in the first metadata, to obtain the second enhancement layer data includes:
The fifth reference value, the sixth reference value, the extension enhancement layer data, and the second enhancement layer data satisfy the following relationship: $enhanceAfter \left[i\right] = enhance \left[i\right] \times {REF}_{5} + \left(A-enhance\left[i\right]\right) \times {REF}_{6}$
enhanceAfter[i] indicates a value of an i^{th} pixel in the second enhancement layer data, enhance[i] indicates a value of an i^{th} pixel in the extension enhancement layer data, REFs indicates the fifth reference value, REF₆ indicates the sixth reference value, and A indicates a maximum value of a plurality of pixels stored in the extension enhancement layer data.

Optionally, in some embodiments, the at least one reference value includes a seventh reference value, and the transforming the extension enhancement layer data based on the at least one reference value carried in the first metadata, to obtain the second enhancement layer data includes:
The seventh reference value, the extension enhancement layer data, and the second enhancement layer data satisfy the following relationship: $enhanceAfter \left[i\right] = enhance \left[i\right] + {REF}_{7}$
enhanceAfter[i] indicates a value of an i^{th} pixel in the second enhancement layer data, enhance[i] indicates a value of an i^{th} pixel in the extension enhancement layer data, and REF₇ indicates the seventh reference value.

Optionally, in some embodiments, the at least one reference value includes an eighth reference value, and the transforming the extension enhancement layer data based on the at least one reference value carried in the first metadata, to obtain the second enhancement layer data includes:
The eighth reference value, the extension enhancement layer data, and the second enhancement layer data satisfy the following relationship: $enhanceAfter \left[i\right] = {REF}_{8} + A - enhance \left[i\right]$
enhanceAfter[i] indicates a value of an i^{th} pixel in the second enhancement layer data, enhance[i] indicates a value of an i^{th} pixel in the extension enhancement layer data, REF₈ indicates the eighth reference value, and A indicates a maximum value of a plurality of pixels stored in the extension enhancement layer data.

Optionally, in some embodiments, the transforming the extension enhancement layer data based on the first metadata, to obtain the second enhancement layer data includes:
transforming the extension enhancement layer data based on at least one mapping relationship carried in the first metadata, to obtain the second enhancement layer data.

Optionally, in some embodiments, the at least one mapping relationship includes a sixth mapping relationship, and the transforming the extension enhancement layer data based on the at least one mapping relationship carried in the first metadata, to obtain the second enhancement layer data includes:
The extension enhancement layer data and the second enhancement layer data satisfy the following relationship: $enhanceAfter \left[i\right] = {TMB}_{6} \left({R}_{enhance \left[i\right] _ 1}\right)$
enhanceAfter[i] indicates a value of an i^{th} pixel in the second enhancement layer data, R_{enhance[i]_1} indicates a first reference value, of an i^{th} pixel, determined based on a value of the i^{th} pixel in the extension enhancement layer data, and TMB₆() indicates the sixth mapping relationship.

Optionally, in some embodiments, the at least one mapping relationship includes a sixth mapping relationship, and the transforming the extension enhancement layer data based on the at least one mapping relationship carried in the first metadata, to obtain the second enhancement layer data includes:
The extension enhancement layer data and the second enhancement layer data satisfy the following relationship: $enhanceAfter \left[i\right] = {TMB}_{6} \left({R}_{enhance \left[i\right] _ 2}\right) \times {R}_{enhance \left[i\right] _ 3}$
enhanceAfter[i] indicates a value of an i^{th} pixel in the second enhancement layer data, TMB₆() indicates the sixth mapping relationship, R_{enhance[i]_2} indicates a second reference value, of an i^{th} pixel, determined based on a value of the i^{th} pixel in the extension enhancement layer data, and R_{enhance[i]_3} indicates a third reference value, of the i^{th} pixel, determined based on the value of the i^{th} pixel in the extension enhancement layer data.

Optionally, in some embodiments, the at least one mapping relationship includes a seventh mapping relationship and an eighth mapping relationship, and the transforming the extension enhancement layer data based on the at least one mapping relationship carried in the first metadata, to obtain the second enhancement layer data includes:
The extension enhancement layer data and the second enhancement layer data satisfy the following relationship: $enhanceAfter \left[i\right] = {TMB}_{7} \left({TMB}_{8}\left({R}_{enhance \left[i\right] _ 4}\right)\right)$
enhanceAfter[i] indicates a value of an i^{th} pixel in the second enhancement layer data, R_{enhance[i]_4} indicates a fourth reference value, of an i^{th} pixel, determined based on a value of the i^{th} pixel in the extension enhancement layer data, TMB₇() indicates the seventh mapping relationship, and TMB₈() indicates the eighth mapping relationship.

Optionally, in some embodiments, the at least one mapping relationship includes a seventh mapping relationship and an eighth mapping relationship, and the transforming the extension enhancement layer data based on the at least one mapping relationship carried in the first metadata, to obtain the second enhancement layer data includes:
The extension enhancement layer data and the second enhancement layer data satisfy the following relationship: $enhanceAfter \left[i\right] = {TMB}_{7} \left({R}_{enhance \left[i\right] _ 6}\right) \times {TMB}_{8} \left({R}_{enhance \left[i\right] _ 5}\right)$
enhanceAfter[i] indicates a value of an i^{th} pixel in the second enhancement layer data, R_{enhance[i]_5} indicates a fifth reference value, of an i^{th} pixel, determined based on a value of the i^{th} pixel in the extension enhancement layer data, R_{enhance[i]_6} indicates a sixth reference value, of the i^{th} pixel, determined based on the value of the i^{th} pixel in the extension enhancement layer data, TMB₇() indicates the seventh mapping relationship, and TMB₈() indicates the eighth mapping relationship.

Optionally, in some embodiments, the seventh mapping relationship is a global tone mapping function, or the seventh mapping relationship is a local tone mapping function.

Optionally, in some embodiments, the at least one mapping relationship includes at least one function relationship.

Optionally, in some embodiments, the transforming the extension enhancement layer data based on the first metadata, to obtain the second enhancement layer data includes: transforming the extension enhancement layer data based on at least one piece of filter information carried in the first metadata, to obtain the second enhancement layer data.

Optionally, in some embodiments, the at least one piece of filter information includes third filter information, and the transforming the first enhancement layer data based on the at least one piece of filter information carried in the first metadata, to obtain the second enhancement layer data includes: filtering the first enhancement layer data by using a third filter, to obtain third reference filtered data, where a parameter of the third filter is indicated by the third filter information, or a type of the third filter and a parameter of the third filter are indicated by the third filter information; and determining N pieces of enhancement layer filtered data based on the third reference filtered data and the first enhancement layer data, where the second enhancement layer data includes the third reference filtered data and the N pieces of enhancement layer filtered data, and N is a positive integer greater than or equal to 1.

The third reference filtered data and the first enhancement layer data satisfy the following relationship:
enhanceAfter₀[i] = F₁[enhance[i]], where enhanceAfter₀[i] indicates a value of a pixel i in the third reference filtered data, enhance[i] indicates a value of a pixel i in the first enhancement layer data, F₁[] indicates the third filter. An n^{th} piece of enhancement layer filtered data in the N pieces of enhancement layer filtered data and the first enhancement layer data satisfy the following relationship: ${enhanceAfter}_{n} \left[i\right] = enhance \left[i\right] - {enhanceAfter}_{n - 1} \left[i\right]$
enhanceAfterₙ[i] indicates a value of a pixel i in the n^{th} piece of enhancement layer filtered data, and n=1, ..., N.

Optionally, in some embodiments, the transforming the first enhancement layer data based on the first metadata, to obtain the second enhancement layer data includes: transforming the first enhancement layer data based on at least one piece of filter information and at least one mapping relationship that are carried in the first metadata, to obtain the second enhancement layer data.

Optionally, in some embodiments, the at least one piece of filter information includes fourth filter information, the at least one mapping relationship includes a ninth mapping relationship and a tenth mapping relationship, and the transforming the first enhancement layer data based on the at least one piece of filter information and the at least one mapping relationship that are carried in the first metadata, to obtain the second enhancement layer data includes: filtering the first enhancement layer data by using a fourth filter, to obtain fourth reference filtered data, where a parameter of the fourth filter is indicated by the fourth filter information, or a type of the fourth filter and a parameter of the fourth filter are indicated by the fourth filter information; and transforming the fourth reference filtered data based on the ninth mapping relationship and the tenth mapping relationship, to obtain the second enhancement layer data.

Optionally, in some embodiments, the transforming the fourth reference filtered data based on the fourth mapping relationship and the fifth mapping relationship, to obtain the second enhancement layer data includes:
The second reference filtered data and the second enhancement layer data satisfy the following relationship: $enhanceAfter \left[i\right] = {TMB}_{10} \left({TMB}_{9}\left(enhanceMid1\left[i\right]\right)\right)$
enhanceAfter[i] indicates a value of an i^{th} pixel in the second enhancement layer data, enhanceMid1[i] indicates a value of a pixel i in the fourth reference filtered data, TMB₉() indicates the ninth mapping relationship, and TMB₁₀() indicates the tenth mapping relationship.

Optionally, in some embodiments, the transforming the fourth reference filtered data based on the fourth mapping relationship and the fifth mapping relationship, to obtain the second enhancement layer data includes:
The second reference filtered data and the second enhancement layer data satisfy the following relationship: $enhanceAfter \left[i\right] = {TMB}_{9} \left({Re}_{nhance \left[i\right] _ 7}\right) \times {TMB}_{10} \left(enhanceMid1\left[i\right]\right)$
enhanceAfter[i] indicates a value of an i^{th} pixel in the second enhancement layer data, enhanceMid1[i] indicates a value of a pixel i in the fourth reference filtered data, TMB₉() indicates the ninth mapping relationship, TMB₁₀() indicates the tenth mapping relationship, and R_{enhance[i]_7} indicates a seventh reference value, of an i^{th} pixel, determined based on a value of the i^{th} pixel in the first enhancement layer data.

Optionally, in some embodiments, the determining the second HDR object based on the first metadata or the preset information, the second base layer data, and the second enhancement layer data includes:
determining the second HDR object based on the second base layer data, the second enhancement layer data, and a transfer function obtained based on the first metadata or the preset information.

Optionally, in some embodiments, the determining the second HDR object based on the second base layer data, the second enhancement layer data, and the transfer function obtained based on the first metadata or the preset information includes:
The second base layer data, the second enhancement layer data, and the second HDR object satisfy the following relationship: $recHDR \left[i\right] = baseAfter \left[i\right] \times f \left(enhanceAfter\left[i\right]\right)$
recHDR[i] indicates a value of an i^{th} pixel in the second HDR object, baseAfter[i] indicates a value of an i^{th} pixel in the second base layer data, enhanceAfter[i] indicates a value of an i^{th} pixel in the second enhancement layer data, and f() indicates the transfer function.

Optionally, in some embodiments, the determining the second HDR object based on the second base layer data, the second enhancement layer data, and the transfer function obtained based on the first metadata or the preset information includes: The second base layer data, the second enhancement layer data, and the second HDR object satisfy the following relationship: $recHDR \left[i\right] = baseAfter \left[i\right] + f \left(enhanceAfter\left[i\right]\right)$
recHDR[i] indicates a value of an i^{th} pixel in the second HDR object, baseAfter[i] indicates a value of an i^{th} pixel in the second base layer data, enhanceAfter[i] indicates a value of an i^{th} pixel in the second enhancement layer data, and f() indicates the transfer function.

Optionally, in some embodiments, the determining the second HDR object based on the second base layer data, the second enhancement layer data, and the transfer function obtained based on the first metadata or the preset information includes: determining the second HDR object based on the second base layer data, the second enhancement layer data, and a first transfer function and a second transfer function that are obtained based on the first metadata or the preset information, where the second base layer data includes first reference filtered data and N pieces of base layer filtered data, the second enhancement layer data includes third reference filtered data and N pieces of enhancement layer filtered data, and the first transfer function, the second transfer function, the second base layer data, the second enhancement layer data, and the second HDR object satisfy the following relationship: $recHDR \left[i\right] = {\sum }_{j = 0}^{N} {A}_{j} \times g \left({baseAfter}_{j}\left[i\right]\times f\left({enhanceAfter}_{j}\left[i\right]\right)\right.$

Aⱼ is a j^{th} transfer parameter in N+1 transfer parameters, g() indicates the first transfer function, f() indicates the second transfer function, baseAfter₀[i] indicates a value of a pixel i in the first reference filtered data, baseAfterₙ[i] indicates a value of a pixel i in the n^{th} base layer filtered data, enhanceAfter₀[i] indicates a value of a pixel i in the third reference filtered data, enhanceAfterₙ[i] indicates a value of a pixel i in the n^{th} enhancement layer filtered data, and n=1, ..., N.

Optionally, in some embodiments, the determining the second HDR object based on the second base layer data, the second enhancement layer data, and the transfer function obtained based on the first metadata or the preset information includes: determining the second HDR object based on the second base layer data, the second enhancement layer data, and a third transfer function obtained based on the first metadata or the preset information, where the second base layer data includes first reference filtered data and base layer filtered data, the second enhancement layer data includes third reference filtered data and enhancement layer filtered data, and the third transfer function, the second base layer data, the second enhancement layer data, and the second HDR object satisfy the following relationship: $recHDR \left[i\right] = A \times {baseAfter}_{0} \left[i\right] + A 1 \times f 1 \left({enhanceAfter}_{0}\left[i\right]\right) + B \times {baseAfter}_{1} \left[i\right] ;$ or $recHDR \left[i\right] = A \times {baseAfter}_{0} \left[i\right] \times f 1 \left({enhanceAfter}_{0}\left[i\right]\right) + B \times {baseAfter}_{1} \left[i\right] ; or$ $recHDR \left[i\right] = A \times {baseAfter}_{0} \left[i\right] \times f 1 \left({enhanceAfter}_{0}\left[i\right]\right) \times f 1 \left({baseAfter}_{1}\left[i\right]\right)$

A, A1, and B are transfer parameters, f1() indicates the third transfer function, baseAfter₀[i] indicates a value of a pixel i in the first reference filtered data, baseAfter₁[i] indicates a value of a pixel i in the base layer filtered data, enhanceAfter₀[i] indicates a value of a pixel i in the third reference filtered data, and enhanceAfter₁[i] indicates a value of a pixel i in the enhancement layer filtered data.

Optionally, in some embodiments, the determining the second HDR object based on the second base layer data, the second enhancement layer data, and the transfer function obtained based on the first metadata or the preset information includes:
determining the second HDR object based on the second base layer data, the second enhancement layer data, and three transfer functions obtained based on the first metadata or the preset information, where the second base layer data includes first reference filtered data and N pieces of base layer filtered data, the second enhancement layer data includes third reference filtered data and N pieces of enhancement layer filtered data, N is equal to 2, and the three transfer functions, the second base layer data, and the second enhancement layer data satisfy the following relationship: 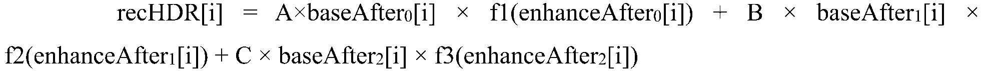 recHDR[i] = A×baseAfter0[i] × f1(enhanceAfter0[i]) + B × baseAfter1[i] × f2(enhanceAfter1[i]) + C × baseAfter2[i] × f3(enhanceAfter2[i])

A, B, and C are three transfer parameters, f1(), f2(), and f3() respectively indicate the three transfer functions, baseAfter₀[i] indicates a value of a pixel i in the first reference filtered data, baseAfterₙ[i] indicates a value of a pixel i in the n^{th} base layer filtered data, enhanceAfter₀[i] indicates a value of a pixel i in the third reference filtered data, enhanceAfterₙ[i] indicates a value of a pixel i in the n^{th} enhancement layer filtered data, and n=1, ..., 2.

Optionally, in some embodiments, the determining the second HDR object based on the second base layer data, the second enhancement layer data, and the transfer function obtained based on the first metadata or the preset information includes: determining the second HDR object based on the second base layer data, the second enhancement layer data, and a fourth transfer function obtained based on the first metadata or the preset information, where the second base layer data includes first reference filtered data and N pieces of base layer filtered data, the second enhancement layer data includes third reference filtered data and N pieces of enhancement layer filtered data, N is equal to 2, and the fourth transfer function, the second base layer data, and the second enhancement layer data satisfy the following relationship: 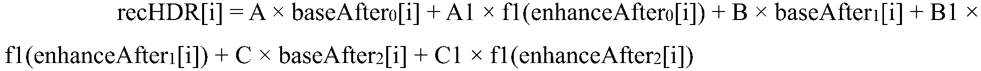 recHDR[i] = A × baseAfter0[i] + A1 × f1(enhanceAfter0[i]) + B × baseAfter1[i] + B1 × f1(enhanceAfter1[i]) + C × baseAfter2[i] + C1 × f1(enhanceAfter2[i])

A, A1, B, B1, C, and C1 are six transfer parameters, f1() indicates the fourth transfer function, baseAfter₀[i] indicates a value of a pixel i in the first reference filtered data, baseAfterₙ[i] indicates a value of a pixel i in the n^{th} base layer filtered data, enhanceAfter₀[i] indicates a value of a pixel i in the third reference filtered data, enhanceAfterₙ[i] indicates a value of a pixel i in the n^{th} enhancement layer filtered data, and n=1, ..., 2.

Optionally, in some embodiments, the determining the third HDR object based on the second HDR object includes: determining that the third HDR object is the same as the second HDR object.

Optionally, in some embodiments, the determining the third HDR object based on the second HDR object includes: transforming the second HDR object based on the first metadata, to obtain the third HDR object.

Optionally, in some embodiments, the transforming the first base layer data based on the first metadata, to obtain the second base layer data includes: transforming the second HDR object based on at least one reference value carried in the first metadata, to obtain the third HDR object.

Optionally, in some embodiments, the at least one reference value includes a ninth reference value and a tenth reference value, and the transforming the second HDR object based on the at least one reference value carried in the first metadata, to obtain the third HDR object includes: The ninth reference value, the tenth reference value, the third HDR object, and the second HDR object satisfy the following relationship: $recHDRAfter \left[i\right] = recHDR \left[i\right] \times {REF}_{9} + \left(A-recHDR\left[i\right]\right) \times {REF}_{10}$
recHDRAfter[i] indicates a value of an i^{th} pixel in the third HDR object, recHDR[i] indicates a value of an i^{th} pixel in the second HDR object, REF₉ indicates the ninth reference value, REF₁₀ indicates the tenth reference value, and A indicates a maximum value of a plurality of pixels included in the first base layer data.

Optionally, in some embodiments, the at least one reference value includes an eleventh reference value, and the transforming the second HDR object based on the at least one reference value carried in the first metadata, to obtain the third HDR object includes: The eleventh reference value, the third HDR object, and the second HDR object satisfy the following relationship: $recHDRAfter \left[i\right] = recHDR \left[i\right] + {REF}_{11}$
recHDRAfter[i] indicates a value of an i^{th} pixel in the third HDR object, recHDR[i] indicates a value of an i^{th} pixel in the second HDR object, and REF₁₁ indicates the eleventh reference value.

Optionally, in some embodiments, the at least one reference value includes a twelfth reference value, and the transforming the second HDR object based on the at least one reference value carried in the first metadata, to obtain the third HDR object includes: The twelfth reference value, the third HDR object, and the second HDR object satisfy the following relationship: $recHDRAfter \left[i\right] = {REF}_{12} + A - recHDR \left[i\right]$
recHDRAfter[i] indicates a value of an i^{th} pixel in the third HDR object, recHDR[i] indicates a value of an i^{th} pixel in the second HDR object, and REF₁₂ indicates the twelfth reference value.

FIG. 9A is a schematic flowchart of a signal processing method according to an embodiment of this application. The method includes the following steps. Step 0901: Obtain a first baseline image, a first gain map, and metadata. Step 0902: Process the first baseline image based on the metadata, to obtain a second baseline image. Step 0903: Obtain a target image based on the second baseline image and the first gain map.

Obtaining the first baseline image, the first gain map, and the metadata in step 0901 may be implemented by using the following solution.
A. Obtain the first baseline image from a bitstream. This process includes decoding a received bitstream by using any decoder (HEVC, JPEG, ProRes, or HEIF), to obtain image data. The image data obtained in this process includes image data in any color space form like RGB or YUV. It should be noted that a format of the bitstream is not limited in the present invention. From a perspective of a color space, the image data may be in a form of YUV or RGB. From a perspective of a bit width of data, the bitstream may include 8 bits, 10 bits, 12 bits, or the like. The decoder may be an HEVC decoder, a JPEG decoder, a ProRes decoder, a HEIF decoder, or the like.
B. Obtain the metadata from the bitstream. The metadata may be obtained from SEI of HEVC or VVC, a user-defined NAL unit, a reserved packet unit, APP extension information encapsulated in JFIF, a data segment encapsulated in MP4, or the like. Alternatively, the metadata may be obtained from another file location in the bitstream, for example, a location after an EOI (end of image) of a complete JPEG file. It should be noted that the metadata mainly includes data like a source data format, region division information, region traversal sequence information, an image feature, and a curve parameter, and one or more metadata information units. The metadata information unit includes data like coordinate information, an image feature, and a curve parameter.
C. Obtain enhancement data (namely, the first gain map). The enhancement data may be obtained from SEI of HEVC or VVC, a user-defined NAL unit, a reserved packet unit, APP extension information encapsulated in JFIF, a data segment encapsulated in MP4, or the like. Alternatively, the first gain map may be obtained from another file location indicated in the metadata, for example, a location after an EOI (end of image) of a complete JPEG file. The enhancement data may be as follows: One pixel value corresponds to one piece of enhancement data, or a plurality of pixel values correspond to one piece of enhancement data, where the enhancement data may include a plurality of values, and quantities of values included in enhancement data corresponding to each pixel are the same.

Processing the first baseline image based on the metadata, to obtain the second baseline image in step 0902 includes the following steps. Step A: Upsample/Downsample the baseline image based on the metadata or preset information if resolution of the baseline image is different from resolution of the enhancement data or is different from preset target resolution. Step B: Process a base layer Base based on base layer remapping information included in the metadata, to obtain baseAfter. It should be noted that the steps in the present invention may be performed in two sequences. In a first sequence, step A is performed before step B, to facilitate system implementation. In a second sequence, step B is performed before step A, so that an overall numerical processing process is more appropriate. In the second implementation in which step B is performed before step A, in step B, the first baseline image is processed to obtain baseAfter, and then in step A, baseAfter obtained in step B is upsampled/downsampled.

The upsampling/downsampling the baseline image based on the metadata or the preset information if the resolution of the baseline image is different from the resolution of the enhancement data or is different from the preset target resolution in step A includes the following cases.
(1) The metadata or the preset information includes phase information PhaseAx and PhaseAy related to the upsampling/downsampling of the baseline image.

The phase information is location information of a pixel of a current image relative to a pixel of an upsampled/downsampled image, or location information of an upsampled/downsampled image relative to a pixel of a current image.

FIG. 16 is a diagram of a location relationship between pixels of a current image and pixels of a sampled image according to an embodiment of this application. As shown in FIG. 16, a square in the figure represents a pixel of the current image, and a circle represents a pixel of the upsampled/downsampled image. In a case 1, sampling is performed on the pixels of the current image at intervals to obtain pixels of a downsampled image, and locations of the pixels of the downsampled image are the same as locations of a part of sampled image pixels. In a case 2, interpolation is performed based on a plurality of pixels of the current image to obtain pixels of a downsampled image, and locations of the pixels of the downsampled image are usually different from locations of sampled image pixels. The pixel herein may be luminance of a pixel or chrominance of a pixel.

There may be different correspondences between the pixels of the current image and the pixels of the upsampled/downsampled image at different locations. Therefore, location difference information of pixels, at a preset location, of the current image and the upsampled/downsampled image may be used as descriptions of the phase information. The preset location may be a preset image location like a pixel in an upper left corner, a pixel in an upper right corner, a pixel in a lower left corner, or a pixel in a lower right corner of an image. Alternatively, coordinates of an image pixel may be transmitted. For example, a pixel in an upper left corner is (y=0, x=0). In this case, a pixel on the right of the pixel in the upper left corner is (y=0, x=1), where x and y are a horizontal coordinate and a vertical coordinate of the pixel.

A preset manner may be used. For example, location information of a pixel at a preset location, for example, a pixel in an upper left corner, of the current image is the same as location information of a pixel, at the preset location, of the upsampled/downsampled image.

(2) The metadata or the preset information includes phase information PhaseBx and PhaseBy related to upsampling/downsampling of a channel other than a non-luminance channel.

In a case, an image in a YUV color space is transmitted, and a format other than 4:4:4 is used in YUV. The format may be 4:2:2, 4:2:0, or 4:1:1. In these formats, downsampling is performed on UV. The following figure shows a location relationship between a UV chrominance pixel and Y.

FIG. 17 is a diagram of phase information of luminance pixels and a chrominance pixel according to an embodiment of this application. In FIG. 17, a horizontal location difference is equivalent to a horizontal coordinate of the chrominance pixel minus a horizontal coordinate of a luminance pixel. A vertical location difference is equal to a vertical coordinate of the chrominance pixel minus a vertical coordinate of the luminance pixel.

A preset manner may be used. For example, a preset chrominance location is at a center of locations of two or four luminance pixels when the 4:2:2, 4:2:0, or 4:1:1 format, in which luminance is twice chrominance, is used.

(3) The metadata or the preset information includes information about an upsampling/downsampling algorithm.

Solution 1: An index is transmitted, and a good interpolation mode is selected from a preset set. The preset set may be a texture interpolation mode of OpenGL: GL_NEAREST (nearest-neighbor) and GL_LINEAR (nearest-neighbor); or may be a texture interpolation mode of Vulkan: NEAREST (nearest-neighbor) or LINEAR (nearest-neighbor); or may be a mode in which a plurality of groups of filters are transmitted or that includes a plurality of types of directional interpolation, or bicubic spline; or may be a full set or a subset of all of the foregoing modes.

Solution 2: An algorithm description is transmitted, and a default mode is selected from a texture interpolation mode of OpenGL, Vulkan, or Metal. The default mode may be a texture interpolation mode of OpenGL: GL_NEAREST (nearest-neighbor) and GL_LINEAR (nearest-neighbor); or may be a texture interpolation mode of Vulkan: NEAREST (nearest-neighbor) or LINEAR (nearest-neighbor); or may be a preset filter (similar to an 8-tap filter of an MC module in H.265, or an 8-tap filter used during inter-layer upsampling/downsampling of SHVC), or a mode including a plurality of types of directional interpolation; or may be a bicubic spline mode, or the like.

Solution 3: A preset algorithm is used, and a default mode is selected from a texture interpolation mode of OpenGL, Vulkan, or Metal. The default mode may be a texture interpolation mode of OpenGL: GL_NEAREST (nearest-neighbor) and GL_LINEAR (nearest-neighbor); or may be a texture interpolation mode of Vulkan: NEAREST (nearest-neighbor) or LINEAR (nearest-neighbor); or may be a preset filter (similar to an 8-tap filter of an MC module in H.265, or an 8-tap filter used during inter-layer upsampling/downsampling of SHVC), or a mode including a plurality of types of directional interpolation; or may be a bicubic spline mode, or the like.

(4) Upsample/downsample the base image base based on phase information related to upsampling/downsampling, algorithm information related to upsampling/downsampling, and other related information, to obtain an upsampled/downsampled base image base. An example solution is as follows: 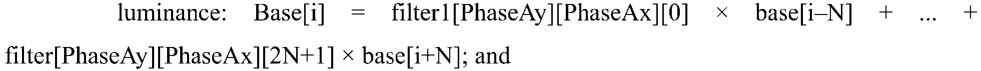 luminance: Base[i] = filter1[PhaseAy][PhaseAx][0] × base[i-N] + ... + filter[PhaseAy][PhaseAx][2N+1] × base[i+N]; and chrominance: Base[i] = filter2[PhaseBy][PhaseBx][0] × base[i-M] + ... + filter[PhaseBy][PhaseBx][2M+1] × base[i+M], where filter1 is a (2N+1)^{th}-order luminance upsampling filter, and filter2 is a (2M+1)^{th}-order chrominance upsampling filter.

How to perform upsampling/downsampling is not described in detail in the present invention. Upsampling/downsampling may be performed based on an existing algorithm specified to be used and a related parameter. No upsampling/downsampling algorithm is modified in the present invention.

It should be noted that the resolution of the baseline image is different from the resolution of the enhancement data or is different from the preset target resolution, and upsampling/downsampling the base image may be performed in the following manner: No upsampling/downsampling is performed, only the base image is upsampled/downsampled, or both the base image and the enhancement data are upsampled/downsampled.

Processing the base layer Base based on the base layer remapping information included in the metadata, to obtain baseAfter in step B includes the following solutions.

Solution 1: baseAfter[i] = Base[i].

Solution 2: The metadata includes an upper limit THL and/or a lower limit THH of base layer data, and baseAfter[i] = base[i] × THH + (A - base[i]) × THL, where A is a maximum value stored in base, and when base is normalized to range from 0 to 1.0, A is 1.0.

Solution 3: The metadata includes a lower limit THL of base layer data, and baseAfter[i] = base[i] + THL.

Solution 4: The metadata includes an upper THH of base layer data, and baseAfter[i] = THH + A - base[i], where A is a maximum value stored in base, and when base is normalized to range from 0 to 1.0, A is 1.0.

Solution 5: The metadata includes a parameter of a mapping relationship, TMB() is obtained based on the parameter, and baseAfter[i] = TMB(base[i]).

Solution 6: The metadata includes a parameter of a mapping relationship, TMB() is obtained based on the parameter, and baseAfter[i] = TMB() × base[i].

Solution 7: The metadata includes a parameter of a mapping relationship, and an upper limit THL and/or a lower limit THH of base layer data, TMB() is obtained based on the parameter, and baseAfter[i] = TMB(base[i] × THH + (A - base[i]) × THL).

Solution 8: The metadata includes a parameter of a mapping relationship, and an upper limit THL and/or a lower limit THH of base layer data, TMB() is obtained based on the parameter, and baseAfter[i] = TMB() × (base[i] × THH + (A - base[i]) × THL).

Solution 9: The metadata includes a parameter of a mapping relationship and a lower limit THL of base layer data, TMB() is obtained based on the parameter, and baseAfter[i] = TMB(base[i] + THL).

Solution 10: The metadata includes a parameter of a mapping relationship and a lower limit THL of base layer data, TMB() is obtained based on the parameter, and baseAfter[i] = TMB() × (base[i] + THL).

Solution 11: The metadata includes a parameter of a mapping relationship; TMB() and TMB1() are obtained based on the parameter, where TMB() may be a global tone mapping function and/or a local tone mapping function, and TMB1 may be in a linear form, a spline form, a piecewise curve form, or the like; and baseAfter[i] = TMB(TMB1(base[i])).

Solution 12: The data includes a parameter of a mapping relationship; TMB() and TMB1() are obtained based on the parameter, where TMB() may be a global tone mapping function and/or a local tone mapping function, and TMB1 may be in a linear form, a spline form, a piecewise curve form, or the like; and baseAfter[i] = TMB() × TMB1(base[i]).

Solution 13: The metadata includes a parameter of a mapping relationship; TMB(), TMB1(), and F[] are obtained based on the parameter, where TMB() may be a global tone mapping function and/or a local tone mapping function, TMB1 may be in a linear form, a spline form, a piecewise curve form, or the like, and F[] is a spatial filter parameter or another image smoothing function; and baseMid1[i] and baseAfter2[i] are obtained according to F[]: baseMid1[i] = F[base[i]] or ΣF[n] × base[i+n], and baseAfter2[i] = base[i] - baseMid1[i]. There are various forms of filtering, such as bilateral filtering and interpolation filtering. This is not limited in the present invention. Further, baseAfter[i] = TMB() × TMB1(baseMid1[i]), or baseAfter[i] = TMB(TMB 1 (baseMidl [i])).

Solution 14: The metadata includes a parameter of a mapping relationship; F[] is obtained based on the parameter, where F[] is a spatial filter parameter or another image smoothing function; and baseAfter[i] and baseAfter2 [i] are obtained according to F[]: baseAfter[i] = F[base[i]] or ΣF[n] × base[i+n], and baseAfter2[i] = base[i] - baseMid1[i]. There are various forms of filtering, such as bilateral filtering and interpolation filtering. This is not limited in the present invention.

Solution 15: The metadata includes a filtering parameter or other image processing parameters, and a specific function F() is obtained based on the parameters, where F() operates at a base layer, to obtain a plurality of pieces of processed data: baseAfter[i] = F(base[i]) = [baseAfter1[i], baseAfter2[i], baseAfter3[i], ...]. There are various forms of filtering, such as bilateral filtering and interpolation filtering. This is not limited in the present invention (modification may be performed as needed).

The mapping relationship has various forms: Sigmoid, cubic spline, gamma, a straight line, or the like, or an inverse function form thereof. This is not limited in the present invention. The following curve may be used: $L ′ = F \left(L\right) = a \times {\left(\frac{p \times {L}^{n}}{\left(p-1\right) \times {L}^{n} + 1}\right)}^{m} + b$

Alternatively, an inverse curve of the foregoing curve may be used. It should be noted that L and L' may be normalized optical signals or electrical signals. This is not limited in the present invention.

It should be noted that a format of the metadata is not limited in the present invention. The metadata may include histogram information and tone-mapping curve parameter information, as specified in ST 2094-40; or may include tone-mapping curve parameter information, as specified in ST 2094-10.

It should be noted that, in the present invention, baseAfter[i] and base[i] are not limited to being in any domain, and may be in linear domain, PQ domain, log domain, or the like. In addition, in the present invention, color spaces of baseAfter[i] and base[i] are not limited, and may be the following color spaces: YUV, RGB, Lab, HSV, and the like.

It should be noted that color gamut mapping may be added before or after processing, to perform conversion from a current color gamut to a target color gamut. The current color gamut and the target color gamut include but are not limited to BT.2020, BT.709, DCI-P3, sRGB, and the like.

Obtaining the target image based on the second baseline image and the first gain map in step 0903 includes the following steps. Step A: Obtain a reconstructed high dynamic range image recHDR based on baseAfter (namely, the second baseline image) and enhance (namely, the first gain map). Step B: Obtain a reconstructed high dynamic range image recHDRAfter (namely, the target image) based on the metadata. Optionally, step 0903 further includes step C: Transform the reconstructed high dynamic range image recHDRAfter. The transformation may be an exponent of 2, log, or other processing. This is not limited in this application. In an embodiment, the target image is a standard dynamic range image. In this case, an SDR may be used to replace an HDR in the following steps.

Obtaining the reconstructed high dynamic range image recHDR based on baseAfter (namely, the second baseline image) and enhance (namely, the first gain map) in step A may be implemented by using the following solutions.

Solution 1: recHDR[i] = baseAfter[i] × f(enhance[i]), where f() is a transfer function in numerical domain.

Solution 2: recHDR[i] = baseAfter[i] + f(enhance[i]), where f() is a transfer function in numerical domain.

recHDR[i] may be any component of RGB or YUV, and f(enhance[i]) is a gain of any component obtained based on the enhancement data.

Solution 3: recHDR[i] = f(baseAfter[i] × g(enhance[i])), where baseAfter corresponds to a first optical-electro transfer function or electro-optical transfer function, enhance corresponds to a second optical-electro transfer function or electro-optical transfer function, g() indicates transfer from the second optical-electro transfer function or electro-optical transfer function to the first optical-electro transfer function or electro-optical transfer function, and f() indicates a third optical-electro transfer function or electro-optical transfer function corresponding to transfer from a composite image to recHDR.

Solution 4: recHDR[i] = f(baseAfter[i] + g(enhance[i])), where baseAfter corresponds to a first optical-electro transfer function or electro-optical transfer function, enhance corresponds to a second optical-electro transfer function or electro-optical transfer function, g() indicates transfer from the second optical-electro transfer function or electro-optical transfer function to the first optical-electro transfer function or electro-optical transfer function, and f() indicates a third optical-electro transfer function or electro-optical transfer function corresponding to transfer from a composite image to recHDR.

Solution 5: recHDR[i] = f(g(baseAfter[i]) × enhance[i]), where baseAfter corresponds to a first optical-electro transfer function or electro-optical transfer function, enhance corresponds to a second optical-electro transfer function or electro-optical transfer function, g() indicates transfer from the first optical-electro transfer function or electro-optical transfer function to the second optical-electro transfer function or electro-optical transfer function, and f() indicates a third optical-electro transfer function or electro-optical transfer function corresponding to transfer from a composite image to recHDR.

Solution 6: recHDR[i] = f(g(baseAfter[i]) + enhance[i]), where baseAfter corresponds to a first optical-electro transfer function or electro-optical transfer function, enhance corresponds to a second optical-electro transfer function or electro-optical transfer function, g() indicates transfer from the first optical-electro transfer function or electro-optical transfer function to the second optical-electro transfer function or electro-optical transfer function, and f() indicates a third optical-electro transfer function or electro-optical transfer function corresponding to transfer from a composite image to recHDR.

Solution 7: recHDR[i] = f(g1(baseAfter[i]) × g2(enhance[i])), where baseAfter corresponds to a first optical-electro transfer function or electro-optical transfer function, enhance corresponds to a second optical-electro transfer function or electro-optical transfer function, g1() indicates transfer from the first optical-electro transfer function or electro-optical transfer function to a fourth optical-electro transfer function or electro-optical transfer function, g2() indicates transfer from the second optical-electro transfer function or electro-optical transfer function to the fourth optical-electro transfer function or electro-optical transfer function, and f() indicates a third optical-electro transfer function or electro-optical transfer function corresponding to transfer from a composite image to recHDR.

Solution 8: recHDR[i] = f(g1(baseAfter[i]) + g2(enhance[i])), where baseAfter corresponds to a first optical-electro transfer function or electro-optical transfer function, enhance corresponds to a second optical-electro transfer function or electro-optical transfer function, g1() indicates transfer from the first optical-electro transfer function or electro-optical transfer function to a fourth optical-electro transfer function or electro-optical transfer function, g2() indicates transfer from the second optical-electro transfer function or electro-optical transfer function to the fourth optical-electro transfer function or electro-optical transfer function, and f() indicates a third optical-electro transfer function or electro-optical transfer function corresponding to transfer from a composite image to recHDR.

The optical-electro transfer function or the electro-optical transfer function in the solutions 3 to 8 may be a linear function, a log function, an HLG function, a PQ function, or an inverse function thereof. The second optical-electro transfer function or electro-optical transfer function may be the same as the third optical-electro transfer function or electro-optical transfer function.

Obtaining the reconstructed high dynamic range image recHDRAfter (namely, the target image) based on the metadata in step B may be implemented by using the following solutions.

Solution 1: recHDRAfter[i] = recHDR[i].

Solution 2: The metadata includes an upper limit THL and/or a lower limit THH of the reconstructed high dynamic range image, and recHDRAfter[i] = recHDR[i] × THH + (A - recHDR[i]) × THL, where A is a maximum value stored in recHDR. For example, when recHDR is normalized to range from 0 to 1.0, A is 1.0.

Solution 3: The metadata includes a lower limit THL of the reconstructed high dynamic range image, and recHDRAfter[i] = recHDR[i] + THL.

Solution 4: The metadata includes an upper limit THH of the reconstructed high dynamic range image, and recHDRAfter[i] = THH + A - base[i], where A is a maximum value stored in base, and when recHDR is normalized to range from 0 to 1.0, A is 1.0.

Solution 5: The data includes a parameter of a mapping relationship, TME() is obtained based on the parameter, and recHDRAfter[i] = TMB(recHDR[i]).

Solution 6: recHDR[i] = A × g(baseAfter1[i] × f1(enhance1[i])) + B × g(baseAfter2[i])..., where the transfer function f1() may be a specific numerical-domain transfer function obtained based on the metadata, or may be an agreed-upon transfer function, and f1(x)=x, or is another form. This is not limited in this patent. A, B, ... are preset constants, or are values transmitted in the metadata. g() is a function sent in the metadata, or a preset numerical variation or inverse normalization function, or recHDR[i]+THL, or y=x.

Solution 7: recHDR[i] = A × baseAfter1[i] + A1 × f1(enhance1[i]) + baseAfter1[i] + B × baseAfter2[i], where the transfer function f1() may be a specific transfer function obtained based on the metadata, or may be an agreed-upon transfer function, and f1(x)=x, or is another form. This is not limited in this patent. A and B are constants, or are values transmitted in the metadata. g() is a function sent in the metadata, or a preset numerical variation or inverse normalization function, or y=x.

Solution 8: The reconstructed high dynamic range image recHDR is obtained based on baseAfter1, baseAfter2, baseAfter3, ..., and enhance1, enhance2, enhance3, ...; and recHDR[i] = A × baseAfter1[i] × f1(enhance1[i]) + B × baseAfter2[i] × f2(enhance2[i]) + C × B × baseAfter3[i] × f3(enhance3[i]) + ..., where the transfer functions f1(), f2(), and f3() may be specific transfer functions obtained based on the metadata, or may be agreed-upon transfer functions, and f1(x)=x, or is another form. This is not limited in this patent. A, B, and C are constants, or are values transmitted in the metadata.

Solution 9: recHDR[i] = A × baseAfter1[i] + A1 × f1(enhance1[i]) + baseAfter1[i] + B × baseAfter2[i] + B1 × f1(enhance2[i]) + C × baseAfter3[i] + C1 × f1(enhance3[i])..., where the transfer functions f1(), f2(), and f3() may be specific transfer functions obtained based on the metadata, or may be agreed-upon transfer functions, and f1(x)=x, or is another form. This is not limited in this patent. A, B, C, ... are constants, or are values transmitted in the metadata. C. Optionally, the reconstructed image is transformed. The transformation may be an exponent of 2, log, or other processing. This is not limited in this patent.

It should be noted that a form of f(x) is not limited in the present invention. To be specific, baseAfter[i] and enhance[i] are not limited to being in any domain, and may be in linear domain, PQ domain, log domain, or the like. In addition, in the present invention, color spaces of baseAfter[i] and enhance[i] are not limited, and may be the following color spaces: YUV, RGB, Lab, HSV, and the like.

It should be noted that whether to perform other image processing on the reconstructed high dynamic range image recHDR after recHDR is obtained and before recHDR is displayed is not limited in the present invention.

Optionally, in an implementation, obtaining the target image based on the second baseline image and the first gain map in step 0903 includes the following steps. Step A1: Transform the enhancement data (namely, the first gain map) based on the metadata, to obtain a second gain map.

Step B1: Obtain a reconstructed high dynamic range image recHDR based on baseAfter (namely, the second baseline image) and enhanceAfter (namely, the second gain map). Step C1: Obtain a reconstructed high dynamic range image recHDRAfter (namely, the target image) based on the metadata. Optionally, step 0903 further includes step D1: Transform the reconstructed high dynamic range image recHDRAfter. The transformation may be an exponent of 2, log, or other processing. This is not limited in this application. In an embodiment, the target image is a standard dynamic range image. In this case, an SDR may be used to replace an HDR in the following steps.

Transforming the enhancement data (namely, the first gain map) based on the metadata, to obtain the second gain map in step A1 includes the following steps. Step A11: Resolution of the enhancement data is different from resolution of the base image or is different from preset target resolution, and the enhancement data is upsampled/downsampled based on the metadata or the preset information. Step A12: Process an enhancement layer enhance based on enhancement layer remapping information included in the metadata, to obtain enhanceAfter. It should be noted that the steps in the present invention may be performed in two sequences. In a first sequence, step A11 is performed before step A12, to facilitate system implementation. In a second sequence, step A12 is performed before step A11, so that an overall numerical processing process is more appropriate. In an example of the second implementation (that is, step A12 is performed before step A11), step A12 is first performed to process the first gain map to obtain enhanceAfter, and then in step A11, enhanceAfter obtained in step A12 is upsampled/downsampled. In another example of the second implementation (that is, step A12 is performed before step A11), step A12 is first performed to perform numerical processing or mapping processing on the first gain map to obtain enhanceAfter, and then in step A11, enhanceAfter obtained in step A12 is upsampled/downsampled. In another example of the second implementation (that is, step A12 is performed before step A11), step A12 is first performed to perform numerical processing or mapping processing on the first gain map to obtain enhanceAfter, where the processing may be processing the first gain map based on information, such as an upper limit/lower limit of the enhancement data, a feature value, and a mapping function, included in the metadata, to obtain enhanceAfter; and then in step A11, enhanceAfter obtained in step A12 is upsampled/downsampled.

That the resolution of the enhancement data is different from the resolution of the base image or is different from the preset target resolution, and the enhancement data is upsampled/downsampled based on the metadata or the preset information in step A11 and processing the enhancement layer enhance based on the enhancement layer remapping information included in the metadata, to obtain enhanceAfter in step A12 include:

A possible step before the processing is normalizing the enhance data. Usually, a range of 8-bit data is 0 to 255. All numbers are divided by 255.0 to be converted to a range of 0 to 1.0. This is not limited in this application.

Solution 1: enhanceAfter[i] = enhance[i].

Solution 2: The metadata includes an upper limit THL and a lower limit THH of the enhancement data, and enhanceAfter[i] = enhance[i] × THH + (A - enhance[i]) × THL, where A is a maximum value stored in enhance, and when enhance is normalized to range from 0 to 1.0, A is 1.0.

Solution 3: The metadata includes an upper limit THL and a lower limit THH of the enhancement data, where the enhancement data may be nonlinear-domain data, for example, log, PQ, HLG, or gamma data. First, enhance[i] is converted to a linear domain. Then, the following formula is used: enhanceAfter[i] = enhance[i] × THH + (A - enhance[i]) × THL, where A is a maximum value stored in enhance, and when enhance is normalized to range from 0 to 1.0, A is 1.0.

Solution 4: The data includes a lower limit THL of the base layer data, and enhanceAfter[i] = enhance[i] + THL.

Solution 5: The data includes an upper THH of the base layer data, and enhanceAfter[i] = THH + A - enhance[i], where A is a maximum value stored in enhance, and when enhance is normalized to range from 0 to 1.0, A is 1.0.

Solution 6: The data includes a parameter of a mapping relationship, TME() is obtained based on the parameter, and enhanceAfter[i] = TMB(enhance[i]).

Solution 6: The data includes a parameter of a mapping relationship, TME() is obtained based on the parameter, and enhanceAfter[i] = TMB() × enhance[i].

Solution 7: The data includes a parameter of a mapping relationship, and an upper limit THL and a lower limit THH of the enhancement data, TME() is obtained based on the parameter, and enhanceAfter[i] = TMB(enhance[i] × THH + (A - enhance[i]) × THL).

Solution 8: The data includes a parameter of a mapping relationship, and an upper limit THL and a lower limit THH of the enhancement data, TME() is obtained based on the parameter, and enhanceAfter[i] = TMB() × enhance[i] × THH + (A - enhance[i]) × THL.

The mapping relationship has various forms: Sigmoid, cubic spline, gamma, a straight line, or the like, or an inverse function form thereof. This is not limited in the present invention. The following curve may be used: $L ′ = F \left(L\right) = a \times {\left(\frac{p \times {L}^{n}}{\left(p-1\right) \times {L}^{n} + 1}\right)}^{m} + b$

Alternatively, an inverse curve of the foregoing curve may be used. It should be noted that L and L' may be normalized optical signals or electrical signals. This is not limited in the present invention. Alternatively, transformation may be performed in a form of a neural network: obtaining type information of the neural network, for example, a transformer or a convolutional neural network; constructing the neural network based on network information in the enhancement data; and processing the enhancement data by using the neural network. It should be noted that the mapping relationship may be a global tone mapping or a local tone mapping. This is not limited in the present invention.

It should be noted that, in the present invention, enhanceAfter[i] and enhance[i] are not limited to being in any domain, and may be in linear domain, PQ domain, log domain, or the like. In addition, in the present invention, color spaces of enhanceAfter[i] and enhance[i] are not limited, and may be the following color spaces: YUV, RGB, Lab, HSV, and the like.

It should be noted that a color gamut mapping may be added before or after processing, to perform conversion from a current color gamut to a target color gamut. The current color gamut and the target color gamut include but are not limited to BT.2020, BT.709, DCI-P3, sRGB, and the like.

It should be noted that there may be more than one piece of enhancement layer information, and there are a plurality of pieces of enhance1, enhance2, enhance3, ...; and enhanceAfter1, enhanceAfter2, enhanceAfter3, ... are obtained. Alternatively, enhanceAfter 1 =enhance 1, enhanceAfter2=enhance2, and enhanceAfter3=enhance3.

Obtaining the reconstructed high dynamic range image recHDR based on baseAfter (namely, the second baseline image) and enhanceAfter (namely, the second gain map) in step B1 may be implemented by using the following solutions.

Solution 1: recHDR[i] = baseAfter[i] × f(enhanceAfter[i]), where f() is a transfer function in numerical domain.

Solution 2: recHDR[i] = baseAfter[i] + f(enhanceAfter[i]), where f() is a transfer function in numerical domain.

recHDR[i] may be any component of RGB or YUV, and f(enhanceAfter[i]) is a gain of any component obtained based on the enhancement data.

Solution 3: recHDR[i] = f(baseAfter[i] × g(enhanceAfter[i])), where baseAfter corresponds to a first optical-electro transfer function or electro-optical transfer function, enhanceAfter corresponds to a second optical-electro transfer function or electro-optical transfer function, g() indicates transfer from the second optical-electro transfer function or electro-optical transfer function to the first optical-electro transfer function or electro-optical transfer function, and f() indicates a third optical-electro transfer function or electro-optical transfer function corresponding to transfer from a composite image to recHDR.

Solution 4: recHDR[i] = f(baseAfter[i] + g(enhanceAfter[i])), where baseAfter corresponds to a first optical-electro transfer function or electro-optical transfer function, enhanceAfter corresponds to a second optical-electro transfer function or electro-optical transfer function, g() indicates transfer from the second optical-electro transfer function or electro-optical transfer function to the first optical-electro transfer function or electro-optical transfer function, and f() indicates a third optical-electro transfer function or electro-optical transfer function corresponding to transfer from a composite image to recHDR.

Solution 5: recHDR[i] = f(g(baseAfter[i]) × enhanceAfter[i]), where baseAfter corresponds to a first optical-electro transfer function or electro-optical transfer function, enhanceAfter corresponds to a second optical-electro transfer function or electro-optical transfer function, g() indicates transfer from the first optical-electro transfer function or electro-optical transfer function to the second optical-electro transfer function or electro-optical transfer function, and f() indicates a third optical-electro transfer function or electro-optical transfer function corresponding to transfer from a composite image to recHDR.

Solution 6: recHDR[i] = f(g(baseAfter[i]) + enhanceAfter[i]), where baseAfter corresponds to a first optical-electro transfer function or electro-optical transfer function, enhanceAfter corresponds to a second optical-electro transfer function or electro-optical transfer function, g() indicates transfer from the first optical-electro transfer function or electro-optical transfer function to the second optical-electro transfer function or electro-optical transfer function, and f() indicates a third optical-electro transfer function or electro-optical transfer function corresponding to transfer from a composite image to recHDR.

Solution 7: recHDR[i] = f(g1(baseAfter[i]) × g2(enhanceAfter[i])), where baseAfter corresponds to a first optical-electro transfer function or electro-optical transfer function, enhanceAfter corresponds to a second optical-electro transfer function or electro-optical transfer function, g1() indicates transfer from the first optical-electro transfer function or electro-optical transfer function to a fourth optical-electro transfer function or electro-optical transfer function, g2() indicates transfer from the second optical-electro transfer function or electro-optical transfer function to the fourth optical-electro transfer function or electro-optical transfer function, and f() indicates a third optical-electro transfer function or electro-optical transfer function corresponding to transfer from a composite image to recHDR.

Solution 8: recHDR[i] = f(gl(baseAfter[i]) + g2(enhanceAfter[i])), where baseAfter corresponds to a first optical-electro transfer function or electro-optical transfer function, enhanceAfter corresponds to a second optical-electro transfer function or electro-optical transfer function, g1() indicates transfer from the first optical-electro transfer function or electro-optical transfer function to a fourth optical-electro transfer function or electro-optical transfer function, g2() indicates transfer from the second optical-electro transfer function or electro-optical transfer function to the fourth optical-electro transfer function or electro-optical transfer function, and f() indicates a third optical-electro transfer function or electro-optical transfer function corresponding to transfer from a composite image to recHDR.

The optical-electro transfer function or the electro-optical transfer function in the solutions 3 to 8 may be a linear function, a log function, an HLG function, a PQ function, or an inverse function thereof. The second optical-electro transfer function or electro-optical transfer function may be the same as the third optical-electro transfer function or electro-optical transfer function.

Obtaining the reconstructed high dynamic range image recHDRAfter (namely, the target image) based on the metadata in step C1 may be implemented by using the following solutions.

Solution 1: $recHDRAfter \left[i\right] = recHDR \left[i\right] .$

Solution 2: The metadata includes an upper limit THL and/or a lower limit THH of the reconstructed high dynamic range image, and recHDRAfter[i] = recHDR[i] × THH + (A - recHDR[i]) × THL, where A is a maximum value stored in recHDR. For example, when recHDR is normalized to range from 0 to 1.0, A is 1.0.

Solution 3: The metadata includes a lower limit THL of the reconstructed high dynamic range image, and recHDRAfter[i] = recHDR[i] + THL.

Solution 4: The metadata includes an upper limit THH of the reconstructed high dynamic range image, and recHDRAfter[i] = THH + A - base[i], where A is a maximum value stored in base, and when recHDR is normalized to range from 0 to 1.0, A is 1.0.

Solution 5: The data includes a parameter of a mapping relationship, TME() is obtained based on the parameter, and recHDRAfter[i] = TMB(recHDR[i]).

Solution 6: recHDR[i] = A × g(baseAfter1[i] × f1(enhanceAfter1[i])) + B × g(baseAfter2[i])..., where the transfer function f1() may be a specific numerical-domain transfer function obtained based on the metadata, or may be an agreed-upon transfer function, and f1(x)=x, or is another form. This is not limited in this patent. A, B, ... are preset constants, or are values transmitted in the metadata. g() is a function sent in the metadata, or a preset numerical variation or inverse normalization function, or recHDR[i]+THL, or y=x.

Solution 7: recHDR[i] = A × baseAfter1[i] + A1 × f1(enhanceAfter1[i]) + baseAfter1[i] + B × baseAfter2[i], where the transfer function f1() may be a specific transfer function obtained based on the metadata, or may be an agreed-upon transfer function, and f1(x)=x, or is another form. This is not limited in this patent. A and B are constants, or are values transmitted in the metadata. g() is a function sent in the metadata, or a preset numerical variation or inverse normalization function, or y=x.

Solution 8: The reconstructed high dynamic range image recHDR is obtained based on baseAfter1, baseAfter2, baseAfter3, ..., and enhanceAfter1, enhanceAfter2, enhanceAfter3, ...; and recHDR[i] = A × baseAfter1[i] × f1(enhanceAfter1[i]) + B × baseAfter2[i] × f2(enhanceAfter2[i]) + C × B × baseAfter3[i] × f3(enhanceAfter3[i]) + ..., where the transfer functions f1(), f2(), and f3() may be specific transfer functions obtained based on the metadata, or may be agreed-upon transfer functions, and f1(x)=x, or is another form. This is not limited in this patent. A, B, and C are constants, or are values transmitted in the metadata.

Solution 9: recHDR[i] = A × baseAfter1[i] + A1 × f1(enhanceAfter1[i]) + baseAfter1[i] + B × baseAfter2[i] + B1 × f1(enhanceAfter2[i]) + C × baseAfter3[i] + C1 × f1(enhanceAfter3[i])..., where the transfer functions f1(), f2(), and f3() may be specific transfer functions obtained based on the metadata, or may be agreed-upon transfer functions, and f1(x)=x, or is another form. This is not limited in this patent. A, B, C, ... are constants, or are values transmitted in the metadata. C. Optionally, the reconstructed image is transformed. The transformation may be an exponent of 2, log, or other processing. This is not limited in this patent.

It should be noted that a form of f(x) is not limited in the present invention. To be specific, baseAfter[i] and enhanceAfter[i] are not limited to being in any domain, and may be in linear domain, PQ domain, log domain, or the like. In addition, in the present invention, color spaces of baseAfter[i] and enhanceAfter[i] are not limited, and may be the following color spaces: YUV, RGB, Lab, HSV, and the like.

It should be noted that whether to perform other image processing on the reconstructed high dynamic range image recHDR after recHDR is obtained and before recHDR is displayed is not limited in the present invention.

The solutions provided in this application are compatible with image encoding and processing in a plurality of formats, and good image quality can be achieved on systems with different support capabilities. A file size can be significantly reduced through upsampling/downsampling.

FIG. 9B is a schematic flowchart of a signal processing method according to an embodiment of this application. The method includes the following steps. Step 00901: Obtain a first baseline image, a first gain map, and metadata. Step 00902: Process the first gain map based on the metadata, to obtain a second gain map. Step 00903: Obtain a target image based on the first baseline image and the second gain map.

For a specific implementation of obtaining the first baseline image, the first gain map, and the metadata in step 00901, refer to the implementation of step 0901 in the embodiment in FIG. 9A. Details are not described herein again.

Processing the first gain map based on the metadata, to obtain the second gain map in step 00902 includes: upsampling or downsampling the first gain map based on the metadata, to obtain the second gain map, where resolution of the second gain map is second target resolution.

In a possible implementation, the second target resolution is resolution of the first baseline image.

In a possible implementation, the second target resolution is second preset resolution.

In a possible implementation, the metadata includes a scaling ratio, and the upsampling or downsampling the first gain map based on the metadata includes: upsampling or downsampling the first gain map based on the scaling ratio.

In a possible implementation, the scaling ratio includes a horizontal scaling ratio and/or a vertical scaling ratio, and the upsampling or downsampling the first gain map based on the scaling ratio includes: upsampling or downsampling the first gain map based on the horizontal scaling ratio and/or the vertical scaling ratio.

In a possible implementation, for an implementation of step 00902, refer to the implementation of step A1 in step 0903 in the embodiment in FIG. 9A. Details are not described herein again.

Obtaining the target image based on the first baseline image and the second gain map in step 00903 includes: processing the first baseline image based on the metadata, to obtain a second baseline image. Then, for obtaining the target image, refer to the implementations of step B1 and step C1 (optionally, the implementation of step D1) in step 0903 in the embodiment in FIG. 9A. Details are not described herein again.

FIG. 9 is a diagram of a digital signal processing method according to an embodiment of this application. The method shown in FIG. 9 may be applied to a decoder side, for example, the decoding module shown in FIG. 6.

901: Obtain metadata, base layer data, and enhancement layer data from a bitstream.

902: Transform the base layer data.

903: Transform the enhancement layer data.

904: Merge transformed base layer data and transformed enhancement layer data based on the metadata, to obtain a reconstructed HDR object.

FIG. 10 is a schematic flowchart of another digital signal processing method according to an embodiment of this application. The method shown in FIG. 10 may be applied to a decoder side, for example, the decoding module shown in FIG. 6.

1001: Obtain metadata, base layer data, and enhancement layer data from a bitstream.

1002: Transform the base layer data based on the metadata.

1003: Transform the enhancement layer data based on the metadata.

1004: Combine processed base layer data and transformed enhancement layer data based on the metadata, to obtain a reconstructed HDR object.

FIG. 11 is a schematic flowchart of another digital signal processing method according to an embodiment of this application. The method shown in FIG. 11 may be applied to a decoder side, for example, the decoding module shown in FIG. 6.

1101: Obtain metadata, base layer data, and enhancement layer data from a bitstream.

1102: Transform the base layer data based on the metadata.

1103: Transform the enhancement layer data based on the metadata.

1104: Combine processed base layer data and transformed enhancement layer data, to obtain a reconstructed HDR object.

FIG. 12 is a schematic flowchart of another digital signal processing method according to an embodiment of this application. The method shown in FIG. 12 may be applied to a decoder side, for example, the decoding module shown in FIG. 6.

1201: Obtain base layer data and enhancement layer data from a bitstream.

1202: Transform the base layer data.

1203: Transform the enhancement layer data.

1204: Combine processed base layer data and transformed enhancement layer data, to obtain a reconstructed HDR object.

The following describes embodiments of this application in detail with reference to FIG. 9 to FIG. 12.

As described above, in some embodiments, the decoding module needs to obtain the metadata, the base layer data, and the enhancement layer data from the bitstream. In other words, the decoding module needs to obtain the metadata from the bitstream, obtain the base layer data from the bitstream, and obtain the enhancement data from the bitstream.

The decoding module obtains the base layer data from the bitstream.

A format of an HDR object is not limited in embodiments of this application. The HDR object may be an image or a video based on any compression standard. For example, in some embodiments, the HDR object may be an image or a video obtained based on high efficiency video coding (high efficiency video coding, HEVC), joint photographic experts group (joint photographic experts group, JPEG), Apple ProRes (Apple ProRes, ProRes), or high efficiency image file format (high efficiency image file format, HEIF). Correspondingly, a type of a decoder or the decoding module is not limited in embodiments of this application either. For example, the decoding module may be an HEVC decoding module, a JPEG decoding module, a ProRes decoding module, or an HEIF decoding module.

A form of a color space of the HDR object is not limited in embodiments of this application either. For example, red-green-blue (red green blue, RGB), luminance-chrominance (luminance-chrominance, YUV), lightness-AB (lightness-AB, LAB), or hue-saturation-lightness (hue saturation lightness, HSL) may be used.

A bit width of the HDR object is not limited in embodiments of this application either. For example, the bit width of the HDR object may be 10 bits, 12 bits, or 12 bits.

The decoding module obtains the metadata from the bitstream.

A location of the metadata is not limited in embodiments of this application. A location of the metadata in the bitstream may be the same as a location of metadata in a bitstream in an existing protocol or application, and a manner of obtaining the metadata may also be the same as a manner in the existing protocol or application. For example, in some embodiments, the decoding module may obtain the metadata from supplemental enhancement information (supplemental enhancement information, SEI) of an HEVC or versatile video coding (versatile video coding, VVC) file, a user-defined network abstraction layer (network abstraction layer, NAL) or reserved unit, application (application, APP) extension information encapsulated in JPEG File Interchange Format (JPEG file interchange format, JFIF), or a data segment encapsulated in moving picture experts group (moving picture experts group, MPEG)-4 (MPEG-4, MP4). In some other embodiments, some metadata may alternatively be obtained from some specified locations, for example, obtained from a location after an end of image (end of image, EOI) of a complete JPEG file. The specified locations may be indicated by information originally used to carry the location of the metadata.

The metadata mainly includes data like a source data format, region division information, region traversal sequence information, an image feature, and a curve parameter, and one or more metadata information units. The metadata information unit includes data like coordinate information, an image feature, and a curve parameter.

The decoding module obtains the enhancement layer data from the bitstream.

In some embodiments, a location of the enhancement layer data in the bitstream is the same as the location of the metadata in the bitstream. Alternatively, in other words, the enhancement layer data may be carried in the metadata. For example, in some embodiments, the decoding module may obtain the enhancement layer data from SEI of an HEVC or VVC file, a user-defined NAL or reserved unit, APP extension information encapsulated in JFIF, or a data segment encapsulated in MP4. In some other embodiments, the enhancement layer data may alternatively be obtained from some specified locations, for example, obtained from a location after an end of image (end of image, EOI) of a complete JPEG file.

One pixel value corresponds to one piece of enhancement data, or a plurality of pixel values correspond to one piece of enhancement data, where the enhancement data may include a plurality of values, and quantities of values included in enhancement data corresponding to each pixel are the same.

In other words, in some embodiments, one pixel value in the baseline layer data may correspond to one piece of enhancement data in the enhancement layer data. In some other embodiments, a plurality of pixel values in the baseline layer image may correspond to one piece of enhancement data in the enhancement layer data.

In some embodiments, one piece of enhancement data may include one value. In some other embodiments, one piece of enhancement data may include a plurality of values. Quantities of values included in enhancement data corresponding to each pixel are the same.

The base layer data is transformed. The base layer data in step 902 and the enhancement layer data in step 903 are base layer data and enhancement layer data of a same HDR object. Similarly, the base layer data in step 1002 and the enhancement layer data in step 1003 are base layer data and enhancement layer data of a same HDR object. The base layer data in step 1102 and the enhancement layer data in step 1103 are base layer data and enhancement layer data of a same HDR object. The base layer data in step 1202 and the enhancement layer data in step 1203 are base layer data and enhancement layer data of a same HDR object. For ease of description, the base layer data in step 902, step 1002, step 1102, and step 1202 may be referred to as first base layer data, and the enhancement layer data in step 903, step 1003, step 1103, and step 1203 may be referred to as first enhancement layer data. Correspondingly, the first base layer data and the first enhancement layer data are base layer data and enhancement layer data of a first HDR object. Correspondingly, the metadata mentioned in FIG. 9 to FIG. 11 may be referred to as first metadata.

Therefore, transforming the base layer data in FIG. 9 to FIG. 12 may also be expressed as transforming the first base layer data, and transforming the enhancement layer data in FIG. 9 to FIG. 12 may also be expressed as transforming the first enhancement layer data. For ease of description, transformed first base layer data may be referred to as second base layer data. Correspondingly, transformed first enhancement layer data may be referred to as second enhancement layer data. Therefore, combining the processed base layer data and the transformed enhancement layer data in FIG. 9 to FIG. 12 may be expressed as combining the second base layer data and the second enhancement layer data. Correspondingly, the reconstructed HDR object in FIG. 9 to FIG. 12 may be referred to as a second HDR object.

For ease of description, base[i] may indicate a value of an i^{th} pixel in the first base layer data, and baseAfter[i] may indicate a value of an i^{th} pixel in the second base layer data, where i is a positive integer greater than or equal to 1. As described above, a color space is not limited in embodiments of this application. Therefore, the value of the i^{th} pixel may be a color value in an RGB color space, or may be a Y value, a U value, or a V value in a YUV color space, or the like.

The following provides several transform solutions for the first base layer data. An encoding module may transform the first base layer data into the second base layer data by using any one of the following transformation solutions.

Optionally, in some embodiments, a default transformation solution is used for the first base layer data. In other words, after obtaining the first base layer data, the encoding module may transform the first base layer data into the second base layer data by using the default transformation solution.

Optionally, in some other embodiments, a transformation solution for the first base layer data is determined by the encoding module. The encoding module may select, based on some reference information, one transformation solution from a plurality of transformation solutions to transform the first base layer data into the second base layer data. For example, the reference information may be some feature information of the first base layer data, for example, a data feature of the base layer data, for example, a maximum value, a minimum value, or an average value of pixel values, or distribution of pixel values.

Optionally, in some other embodiments, the first metadata may include base layer data transformation solution indication information. The base layer data transformation solution indication information indicates a base layer data transformation solution. The encoding module may transform the first base layer data according to the transformation solution indicated by the base layer data transformation solution indication information. For example, each transformation solution has an index, and the base layer transformation solution indication information may carry the index of the transformation solution. In this way, the encoding module may determine, based on the index, a transformation solution to be used. For another example, the transformation solution indication information may be implicit indication information. For example, if the first metadata includes some related information needed by the transformation solution, for example, a parameter, a mapping relationship, and filter information, the encoding module may perform a transformation operation on the first base layer data by using a corresponding transformation solution based on the obtained related information of the transformation solution.

Optionally, in some other embodiments, the encoding module may first determine whether the first metadata includes the base layer data transformation solution indication information. If the first metadata includes the base layer data transformation indication information, the encoding module may transform the first base layer data in a transformation mode indicated by the base layer data transformation indication information. If the first metadata does not include the base layer data transformation indication information, the encoding module may use a default transformation solution or determine a transformation solution.

In some embodiments, the transformation solution may be one of the following solution 1 to solution 15.

Solution 1: $baseAfter \left[i\right] = Base \left[i\right] .$

Solution 2: The metadata includes an upper limit THL and/or a lower limit THH of base layer data, and baseAfter[i] = base[i] × THH + (A - base[i]) × THL, where A is a maximum value stored in base, and when base is normalized to range from 0 to 1.0, A is 1.0.

Solution 3: The metadata includes a lower limit THL of base layer data, and baseAfter[i] = base[i] + THL.

Solution 4: The metadata includes an upper limit THH of base layer data, and baseAfter[i] = THH + A - base[i], where A is a maximum value stored in base, and when base is normalized to range from 0 to 1.0, A is 1.0.

Solution 5: The metadata includes a parameter of a mapping relationship, TMB() is obtained based on the parameter, and baseAfter[i] = TMB(base[i]).

Solution 6: The metadata includes a parameter of a mapping relationship, TMB() is obtained based on the parameter, and baseAfter[i] = TMB(Lᵢ) × base[i], where Lᵢ is a value determined based on base[i], for example, may be a luminance value determined based on a pixel value of an i^{th} pixel or another value.

Solution 7: The metadata includes a parameter of a mapping relationship, and an upper limit THL and/or a lower limit THH of base layer data, TMB() is obtained based on the parameter, and baseAfter[i] = TMB(base[i] × THH + (A - base[i]) × THL).

Solution 8: The metadata includes a parameter of a mapping relationship, and an upper limit THL and/or a lower limit THH of base layer data, TMB() is obtained based on the parameter, and baseAfter[i] = TMB(Lᵢ) × (base[i] × THH + (A - base[i]) × THL), where Lᵢ is a value determined based on base[i], for example, may be a luminance value determined based on a pixel value of an i^{th} pixel, or another value.

Solution 9: The metadata includes a parameter of a mapping relationship and a lower limit THL of base layer data, TMB() is obtained based on the parameter, and baseAfter[i] = TMB(base[i] + THL).

Solution 10: The metadata includes a parameter of a mapping relationship and a lower limit THL of the base layer data, TMB() is obtained based on the parameter, and baseAfter[i] = TMB(Lᵢ) × (base[i] + THL), where Lᵢ is a value determined based on base[i], for example, may be a luminance value determined based on a pixel value of an i^{th} pixel, or another value.

Solution 11: The data includes a parameter of a mapping relationship; TMB() and TMB1() are obtained based on the parameter, where TMB() may be a global tone mapping function and/or a local tone mapping function, and TMB1 may be in a linear form, a spline form, a piecewise curve form, or the like; and baseAfter[i]=TMB(TMB1(base[i])).

Solution 12: The data includes a parameter of a mapping relationship, TMB() and TMB1() are obtained based on the parameter, where TMB() may be a global tone mapping function and/or a local tone mapping function, TMB1 may be in a linear form, a spline form, a piecewise curve form, or the like; and baseAfter[i] = TMB(Lᵢ) × TMB1(base[i]), where Lᵢ is a value determined based on base[i], for example, may be a luminance value determined based on a pixel value of an i^{th} pixel or another value.

Solution 13: The metadata includes a parameter of a mapping relationship. TMB(), TMB1(), and F[] are obtained based on the parameter, where TMB() may be a global tone mapping function and/or a local tone mapping function, TMB1 may be in a linear form, a spline form, a piecewise curve form, or the like, and F[] is a spatial filter parameter or another image smoothing function; and baseMid1[i] and baseAfter2[i] are obtained according to F[]: baseMid1[i] = F[base[i]] or ΣF[n] × base[i+n], and baseAfter2[i] = base[i] - baseMid1[i]. There are various forms of filtering, such as bilateral filtering and interpolation filtering. This is not limited in this application. Further, baseAfter[i] = TMB(Lᵢ) × TMB1(baseMid1[i]) or baseAfter[i] = TMB(TMB1(baseMid1[i])), where Lᵢ is a value determined based on base[i], for example, may be a luminance value determined based on a pixel value of an i^{th} pixel, or another value.

Solution 14: The metadata includes a parameter of a mapping relationship, and F[] is obtained based on the parameter, where F[] is a spatial filter parameter or another image smoothing function; and baseAfter[i] and baseAfter2[i] are obtained according to F[]: baseAfter[i] = F[base[i]] or ΣF[n] × base[i+n], and baseAfter2[i] = base[i] - baseMid1[i]. There are various forms of filtering, such as bilateral filtering and interpolation filtering. This is not limited in this application.

Solution 15: The metadata includes a filtering parameter or other image processing parameters, and a specific function F() is obtained based on the parameters, where F() operates at a base layer, to obtain a plurality of pieces of processed data: baseAfter[i] = F(base[i]) = [baseAfter1[i], baseAfter2[i], baseAfter3[i], ...]. There are various forms of filtering, such as bilateral filtering and interpolation filtering. This is not limited in this application (modification may be performed as needed).

The mapping relationship (namely, TMB or TMB1 in the foregoing embodiments) has various forms: Sigmoid, cubic spline, gamma, a straight line, or the like, or an inverse function form thereof. This is not limited in this application. The following curve may be used: $L ′ = F \left(L\right) = a \times {\left(\frac{p \times {L}^{n}}{\left(p-1\right) \times {L}^{n} + 1}\right)}^{m} + b$

Alternatively, an inverse curve of the foregoing curve may be used. It should be noted that L and L' may be normalized optical signals or electrical signals. This is not limited in this application. For an i^{th} element at a base layer, the foregoing formula may be transformed into the following: ${L}_{i} ′ = F \left({L}_{i}\right) = a \times {\left(\frac{p \times {{L}_{i}}^{n}}{\left(p-1\right) \times {{L}_{i}}^{n} + 1}\right)}^{m} + b$

In other words, TMB(Lᵢ) = F(Lᵢ).

It should be noted that a format of the metadata is not limited in this application. The metadata may include histogram information and tone-mapping curve parameter information, as specified in ST 20114-40; or may include tone-mapping curve parameter information, as specified in ST 20114-12.

It should be noted that, in this application, baseAfter[i] and base[i] are not limited to being in any domain, and may be in linear domain, PQ domain, log domain, or the like. In addition, in this application, color spaces of baseAfter[i] and base[i] are not limited, and may be the following color spaces: YUV, RGB, Lab, HSV, and the like.

It should be noted that color gamut mapping may be added before or after processing, to perform conversion from a current color gamut to a target color gamut. The current color gamut and the target color gamut include but are not limited to BT.2020, BT.9011, DCI-P3, sRGB, and the like.

Solution 1: The second base layer data may be the same as the first base layer data. In other words, the second base layer data and the first base layer data satisfy the following relationship: $baseAfter \left[i\right] = base \left[i\right]$

In some embodiments, the first metadata may carry one piece of indication information, and the indication information indicates the decoding module to determine the second base layer data based on the relationship between the second base layer data and the first base layer data shown in the formula 6. In some other embodiments, the relationship between the second base layer data and the first base layer data shown in the formula 6 may be a default relationship. Therefore, in this case, the decoding module may directly determine the second base layer data without obtaining information from the first metadata.

In some other embodiments, the relationship between the second base layer data and the first base layer data may be determined based on one or more mapping relationships. In some embodiments, the one or more mapping relationships may be in a form of a mapping table. In other words, the one or more mapping relationships may be one or more mapping tables. In some other embodiments, the one or more mapping relationships may be a function relationship. In other words, the one or more mapping relationships may be one or more functions. In some other embodiments, if there are a plurality of mapping relationships, some of the mapping relationships may be functions, and the other mapping relationships may be mapping tables. It can be understood that "a plurality of" (for example, a plurality of mapping relationships, a plurality of functions, or a plurality of mapping tables) herein may include two or more.

In some embodiments, the first base layer data may be transformed according to one or more functions, to obtain the second base layer data.

Solution 2: The first metadata includes an upper limit and/or a lower limit of the first base layer data. The first base layer data and the second base layer data satisfy the following relationship: $baseAfter \left[i\right] = base \left[i\right] \times THH + \left(A-base\left[i\right]\right) \times THL$
base[i] indicates a value of an i^{th} pixel in the first base layer data, baseAfter[i] indicates a value of an i^{th} pixel in the second base layer data, THL indicates the upper limit of the first base layer data, THH indicates the lower limit of the first base layer data, and A is a maximum value stored in the first base layer data. When the first base layer data is normalized to range from 0 to 1.0, A is a maximum value in the normalized range, that is, 1.0.

It can be understood that the normalized range 0 to 1.0 is merely an example normalized range. The normalized range may alternatively be another numerical range, for example, 0 to 2.0, 0.5 to 1, or 1.0 to 3.0.

It can be understood that the upper limit and/or the lower limit of the first base layer data in the formula 9 are/is merely two example reference values for transforming the first base layer data. In other words, the first metadata may carry two reference values, which may be referred to as a first reference value and a second reference value. The first reference value, the second reference value, the first base layer data, and the second base layer data satisfy the following relationship: $baseAfter \left[i\right] = base \left[i\right] \times {REF}_{1} + \left(A-base\left[i\right]\right) \times {REF}_{2}$
baseAfter[i] indicates a value of an i^{th} pixel in the second base layer data, base[i] indicates a value of an i^{th} pixel in the first base layer data, REF₁ indicates the first reference value, REF₂ indicates the second reference value, and A indicates a maximum value of a plurality of pixels included in the first base layer data. Similarly, the first base layer data in the formula 10 may alternatively be normalized to a normalized range. A is a maximum value in the normalized range.

As described above, when the first reference value is equal to THH and the second reference value is equal to THL, the formula 10 is the same as the formula 9. The first reference value and/or the second reference value may alternatively be other values. For example, in some embodiments, the first reference value may be equal to an average value of the first base layer data. For another example, in some other embodiments, the first reference value and/or the second reference value each may be a preset value, or may be a value determined through negotiation between an encoder and a decoder, or may be a value determined based on feature information of the first base layer data, or may be a value determined based on a coding scheme.

As described above, the formula 9 is merely an example of the solution 2, and the solution 2 may alternatively be expressed as the formula 3.

Solution 3: The first metadata includes a lower limit of the first base layer data, and the first base layer data and the second base layer data satisfy the following relationship: $baseAfter \left[i\right] = base \left[i\right] + THL$
base[i] indicates a value of an i^{th} pixel in the first base layer data, baseAfter[i] indicates a value of an i^{th} pixel in the second base layer data, and THH indicates a lower limit of the first base layer data.

Similarly, the lower limit of the first base layer data in the formula 11 indicates an example reference value. The reference value may be referred to as a third reference value. The third reference value, the first base layer data, and the second base layer data satisfy the following relationship: $baseAfter \left[i\right] = base \left[i\right] + {REF}_{3}$
baseAfter[i] indicates a value of an i^{th} pixel in the second base layer data, base[i] indicates a value of an i^{th} pixel in the first base layer data, and REF₃ indicates the third reference value.

Similarly, the third reference value may be a lower limit of the first base layer data. In this case, the formula 11 may be equal to the formula 12. The third reference value may alternatively be another value, for example, may be a preset value, a value determined based on a coding scheme, a value determined through negotiation between the encoding module and the decoding module, or a value determined based on a feature of the first base layer data.

As described above, the formula 11 is merely an example of the solution 3, and the solution 3 may alternatively be expressed as the formula 12. Similarly, the first base layer data in the formula 11 and the formula 12 may alternatively be normalized to a normalized range.

Solution 4: The first metadata includes an upper limit of the first base layer data, and the first base layer data and the second base layer data satisfy the following relationship: $baseAfter \left[i\right] = THH + A - base \left[i\right]$
base[i] indicates a value of an i^{th} pixel in the first base layer data, baseAfter[i] indicates a value of an i^{th} pixel in the second base layer data, THL indicates the upper limit of the first base layer data, and A is a maximum value stored in the first base layer data. When the first base layer data is normalized to range from 0 to 1.0, A is a maximum value in the normalized range, that is, 1.0. Similarly, the normalized range [0, 1.0] is merely an example, and an upper limit and/or a lower limit of the normalized range may alternatively be other values.

Similarly, the lower limit of the first base layer data in the formula 11 indicates an example reference value. The reference value may be referred to as a fourth reference value. The fourth reference value, the first base layer data, and the second base layer data satisfy the following relationship: $baseAfter \left[i\right] = {REF}_{4} + A - base \left[i\right]$
baseAfter[i] indicates a value of an i^{th} pixel in the second base layer data, base[i] indicates a value of an i^{th} pixel in the first base layer data, and REF₄ indicates the fourth reference value.

Similarly, the fourth reference value may be an upper limit of the first base layer data. In this case, the formula 11 may be equal to the formula 12. The fourth reference value may alternatively be another value, for example, may be a preset value, a value determined based on a coding scheme, a value determined through negotiation between the encoding module and the decoding module, or a value determined based on a feature of the first base layer data.

As described above, the formula 11 is merely an example of the solution 4, and the solution 4 may alternatively be expressed as the formula 12. Similarly, the first base layer data in the formula 11 and the formula 12 may alternatively be normalized to a normalized range.

Solution 5: The first metadata includes a first mapping relationship. The first base layer data and the second base layer data satisfy the following relationship: $baseAfter \left[i\right] = {TMB}_{1} \left({R}_{base \left[i\right] _ 1}\right)$
baseAfter[i] indicates a value of an i^{th} pixel in the second base layer data, R_{base[i]_1} indicates a first reference value, of an i^{th} pixel, determined based on a value of the i^{th} pixel in the first base layer data, and TMB₁() indicates the first mapping relationship.

In some embodiments, R_{base[i]_1} may be another value determined based on base[i].

For example, in some embodiments, R_{base[i]_1} and base[i] satisfy the following relationship: ${R}_{base \left[i\right] _ 1} = base \left[i\right] \times {REF}_{1} + \left(A-base\left[i\right]\right) \times {REF}_{2}$
base[i] indicates a value of an i^{th} pixel in the first base layer data, REF₁ indicates the first reference value, REF₂ indicates the second reference value, and A indicates a maximum value of a plurality of pixels included in the first base layer data.

If REF₁ is the lower limit of the first base layer data, and REF₂ is the upper limit of the first base layer data, the formula 14 may be expressed as: ${R}_{base \left[i\right] _ 1} = base \left[i\right] \times THH + \left(A-base\left[i\right]\right) \times THL$
baseAfter[i] indicates a value of an i^{th} pixel in the second base layer data, THL indicates the upper limit of the first base layer data, THH indicates the lower limit of the first base layer data, and A is a maximum value stored in the first base layer data. When the first base layer data is normalized to range from 0 to 1.0, A is a maximum value in the normalized range, that is, 1.0.

If the formula 15 is substituted into the formula 13, the following formula may be obtained: $baseAfter \left[i\right] = {TMB}_{1} \left(base\left[i\right]\times THH+\left(A-base\left[i\right]\right)\times THL\right)$

If the formula 13 is substituted into the formula 13, the following formula may be obtained: $baseAfter \left[i\right] = {TMB}_{1} \left(base\left[i\right]\times {REF}_{1}+\left(A-base\left[i\right]\right)\times {REF}_{2}\right)$

In some other embodiments, R_{base[i]_1} may be equal to base[i].

A main product form in this application is a video terminal device like a mobile phone, a television, a tablet computer, or a projector.

Implementations of this application are as follows: On a video terminal device like a mobile phone, a television, a tablet computer, or a projector, this application is mainly implemented in a form of a hardware chip; and on a live streaming or video play device, this application is mainly implemented by using software program code.

The enhancement data is transformed based on the metadata.
A. Obtain enhancement data corresponding to each pixel value, that is, upsample the enhancement data.

Solution 1: One index is transmitted, or one index is transmitted for each region, and a good interpolation mode is selected from a preset set. The preset set may be a texture interpolation mode of OpenGL: GL_NEAREST (nearest-neighbor) and GL_LINEAR (nearest-neighbor); or may be a texture interpolation mode of Vulkan: NEAREST (nearest-neighbor) or LINEAR (nearest-neighbor); or may be a mode in which a plurality of groups of filters are transmitted or that includes a plurality of types of directional interpolation, or bicubic spline; or may be a full set or a subset of all of the foregoing modes.

Solution 2: A default mode is selected from a texture interpolation mode of OpenGL, Vulkan, or Metal. The default mode may be a texture interpolation mode of OpenGL: GL_NEAREST (nearest-neighbor) and GL_LINEAR (nearest-neighbor); or may be a texture interpolation mode of Vulkan: NEAREST (nearest-neighbor) or LINEAR (nearest-neighbor).

Solution 3: A preset filter, or a mode including a plurality of types of directional interpolation, or a bicubic spline mode, or the like may be used.

Solution 4: If the enhancement data and the base layer image data are in an integer-multiple sampling relationship, for example, two, three, or N base layer image pixels in a width direction or a height direction correspond to one piece of enhancement data, where coordinates of one specific pixel in the two, three, or N base layer image pixels is the same as or quite close to coordinates of the enhancement data in the image:
(1) Obtain a baseline image pixel value base[i] of a base layer image corresponding to a current pixel.
(2) Obtain a plurality of specific pixels in pixels around the current pixel, where the pixels have corresponding enhancement data.
(3) Find one of the specific pixels that corresponds to a base layer image value closest to a base layer image value at a current location, and directly use enhancement data corresponding to the specific pixel as enhancement data of the current pixel; or
   find two specific pixels, and obtain enhancement data of the current pixel based on enhancement data interpolation or fitting curves corresponding to the two specific pixels.

Gain map sampling needs to be performed based on an SDR. If the current location has no gain map value and a plurality of adjacent SDRs have corresponding gain map values, a gain map corresponding to an SDR value closest to an SDR luminance value of the current location is selected from the values.

B. Process an enhancement layer enhance based on enhancement layer remapping information included in the metadata, to obtain enhanceAfter.

A possible step before the processing is normalizing the enhance data. Usually, a range of 8-bit data is 0 to 255. All numbers are divided by 255.0 to be converted to a range of 0 to 1.0. This process is beyond the scope specified in this application.

Solution 1: $enhanceAfter \left[i\right] = enhance \left[i\right] .$

Solution 2: The metadata includes an upper limit THL and a lower limit THH of the enhancement data, and enhanceAfter[i] = enhance[i] × THH + (A - enhance[i]) × THL, where A is a maximum value stored in enhance, and when enhance is normalized to range from 0 to 1.0, A is 1.0.

Solution 3: The metadata includes an upper limit THL and a lower limit THH of the enhancement data, where the enhancement data may be nonlinear-domain data, for example, log, PQ, HLG, or gamma data. First, enhance[i] is converted to a linear domain. Then, the following formula is used: enhanceAfter[i] = enhance[i] × THH + (A - enhance[i]) × THL, where A is a maximum value stored in enhance, and when enhance is normalized to range from 0 to 1.0, A is 1.0.

Solution 4: The data includes a lower limit THL of the base layer data, and enhanceAfter[i] = enhance[i] + THL.

Solution 5: The data includes an upper THH of the base layer data, and enhanceAfter[i] = THH + A - enhance[i], where A is a maximum value stored in enhance, and when enhance is normalized to range from 0 to 1.0, A is 1.0.

Solution 6: The data includes a parameter of a mapping relationship, TME() is obtained based on the parameter, and enhanceAfter[i] = TMB(enhance[i]).

Solution 6: The data includes a parameter of a mapping relationship, TME() is obtained based on the parameter, and enhanceAfter[i] = TMB() × enhance[i].

Solution 6: The data includes a parameter of a mapping relationship, and an upper limit THL and a lower limit THH of the enhancement data, TME() is obtained based on the parameter, and enhanceAfter[i] = TMB(enhance[i] × THH + (A - enhance[i]) × THL).

Solution 6: The data includes a parameter of a mapping relationship, and an upper limit THL and a lower limit THH of the enhancement data, TME() is obtained based on the parameter, and enhanceAfter[i] = TMB() × enhance[i] × THH + (A - enhance[i]) × THL.

The mapping relationship has various forms: Sigmoid, cubic spline, gamma, a straight line, a piecewise curve, or the like, or an inverse function form thereof. This is not limited in this application. The following curve may be used: $L ′ = F \left(L\right) = a \times {\left(\frac{p \times {L}^{n}}{\left(p-1\right) \times {L}^{n} + 1}\right)}^{m} + b$

Alternatively, an inverse curve of the foregoing curve may be used. It should be noted that L and L' may be normalized optical signals or electrical signals. This is not limited in this application.

Alternatively, transformation may be performed in a form of a neural network: obtaining type information of the neural network, for example, a transformer or a convolutional neural network; constructing the neural network based on network information in the enhancement data; and processing the enhancement data by using the neural network. It should be noted that the mapping relationship may be a global tone mapping or a local tone mapping. This is not limited in this application.

It should be noted that, in this application, enhanceAfter[i] and enhance[i] are not limited to being in any domain, and may be in linear domain, PQ domain, log domain, or the like. In addition, in this application, color spaces of enhanceAfter[i] and enhance[i] are not limited, and may be the following color spaces: YUV, RGB, Lab, HSV, and the like.

It should be noted that a color gamut mapping may be added before or after processing, to perform conversion from a current color gamut to a target color gamut. The current color gamut and the target color gamut include but are not limited to BT.2020, BT.709, DCI-P3, sRGB, and the like.

It should be noted that there may be more than one piece of enhancement layer information, and there are a plurality of pieces of enhance1, enhance2, enhance3, ...; and enhanceAfter1, enhanceAfter2, enhanceAfter3, ... are obtained. Alternatively, enhanceAfter 1 =enhance 1, enhanceAfter2=enhance2, and enhanceAfter3=enhance3.

The baseline image and the enhancement data are combined based on the metadata, to obtain a reconstructed high dynamic range image.
A. Obtain a reconstructed high dynamic range image recHDR based on baseAfter and enhanceAfter.
   Solution 1: recHDR[i] = baseAfter[i] × f(enhanceAfter[i]), where f() is a transfer function in numerical domain.
   Solution 2: recHDR[i] = baseAfter[i] + f(enhanceAfter[i]), where f() is a transfer function in numerical domain.
   recHDR[i] may be any component of RGB or YUV, and f(enhanceAfter[i]) is a gain of any component obtained based on the enhancement data.
B. Obtain a reconstructed high dynamic range image recHDRAfter based on the metadata.
   Solution 1 $: recHDRAfter \left[i\right] = recHDR \left[i\right] .$
   Solution 2: The metadata includes an upper limit THL and/or a lower limit THH of the reconstructed high dynamic range image, and recHDRAfter[i] = recHDR[i] × THH + (A - recHDR[i]) × THL, where A is a maximum value stored in recHDR. For example, when recHDR is normalized to range from 0 to 1.0, A is 1.0.
   Solution 3: The metadata includes a lower limit THL of the reconstructed high dynamic range image, and recHDRAfter[i] = recHDR[i] + THL.
   Solution 4: The metadata includes an upper limit THH of the reconstructed high dynamic range image, and recHDRAfter[i] = THH + A - base[i], where A is a maximum value stored in base, and when recHDR is normalized to range from 0 to 1.0, A is 1.0.
   Solution 5: recHDR[i] = A × g(baseAfter1[i] × f1(enhanceAfter1[i])) + B × g(baseAfter2[i])..., where the transfer function f1() may be a specific numerical-domain transfer function obtained based on the metadata, or may be an agreed-upon transfer function, and f1(x)=x, or is another form. This is not limited in this patent. A, B, ... are preset constants, or are values transmitted in the metadata. g() is a function sent in the metadata, or a preset numerical variation or inverse normalization function, or recHDR[i]+THL, or y=x.
   Solution 6: recHDR[i] = A × baseAfter1[i] + A1 × f1(enhanceAfter1[i]) + baseAfter1[i] + B × baseAfter2[i], where the transfer function f1() may be a specific transfer function obtained based on the metadata, or may be an agreed-upon transfer function, and f1(x)=x, or is another form. This is not limited in this patent. A and B are constants, or are values transmitted in the metadata. g() is a function sent in the metadata, or a preset numerical variation or inverse normalization function, or y=x.
   Solution 7: The reconstructed high dynamic range image recHDR is obtained based on baseAfter1, baseAfter2, baseAfter3, ..., and enhanceAfter1, enhanceAfter2, enhanceAfter3, ...; and recHDR[i] = A × baseAfter1[i] × f1(enhanceAfter1[i]) + B × baseAfter2[i] × f2(enhanceAfter2[i]) + C × B × baseAfter3[i] × f3(enhanceAfter3[i]) + ..., where the transfer functions f1(), f2(), and f3() may be specific transfer functions obtained based on the metadata, or may be agreed-upon transfer functions, and f1(x)=x, or is another form. This is not limited in this patent. A, B, C, ... are constants, or are values transmitted in the metadata. C. Optionally, the reconstructed image is transformed. The transformation may be an exponent of 2, log, or other processing. This is not limited in this patent.
   Solution 8: recHDR[i] = A × baseAfter1[i] + A1 × f1(enhanceAfter1[i]) + baseAfter1[i] + B × baseAfter2[i] + B1 × f1(enhanceAfter2[i]) + C × baseAfter3[i] + C1 × f1(enhanceAfter3[i]) ..., where the transfer functions f1(), f2(), and f3() may be specific transfer functions obtained based on the metadata, or may be agreed-upon transfer functions, and f1(x)=x, or is another form. This is not limited in this patent. A, B, C, ... are constants, or are values transmitted in the metadata. C. Optionally, the reconstructed image is transformed. The transformation may be an exponent of 2, log, or other processing. This is not limited in this patent.
   It should be noted that a form of f(x) is not limited in this application. To be specific, baseAfter[i] and enhanceAfter[i] are not limited to being in any domain, and may be in linear domain, PQ domain, log domain, or the like. In addition, in this application, color spaces of baseAfter[i] and enhanceAfter[i] are not limited, and may be the following color spaces: YUV, RGB, Lab, HSV, and the like.

It should be noted that whether to perform other image processing on the reconstructed high dynamic range image recHDR after recHDR is obtained and before recHDR is displayed is not limited in this application.

The technical solutions of this application are compatible with image encoding and processing in a plurality of formats, and good image quality can be achieved on systems with different support capabilities. This application provides an encoding/decoding scheme compatible with bitstreams in a plurality of formats, to provide compatibility with systems with different capabilities.

An encoding solution of the present invention mainly includes the following processes.

High dynamic range image data is obtained.

The high dynamic range image data is obtained from an image capture channel of a camera.

In this process, a plurality of low dynamic range images with different exposure values are captured by the camera, and high dynamic range image data is obtained through merging.

In this process, a photosensitive element of the camera may have different photoelectric characteristics at different locations, to obtain high dynamic range data with more image grayscales.

The high dynamic range image data is obtained in another manner.

In this process, a high dynamic range image may be obtained through photographing by a professional capture device, and then transmitted to a processing device through sending, copying, or the like.

It should be noted that a manner of obtaining the high dynamic range image data is not limited in the present invention.

It should be noted that a format of the high dynamic range image data is not limited in the present invention. From a perspective of a color space, the high dynamic range image data may be in a form of YUV or RGB. From a perspective of a bit width of data, the high dynamic range image data may include 8 bits, 10 bits, 12 bits, or the like. An optical-electro transfer characteristic may be PQ, gamma, log, HLG, or the like.

It should be noted that the present invention may further include numerical-domain processing on the high dynamic range image data: obtaining a data range (a minimum value and/or a maximum value) of the high dynamic range image data; and mapping a minimum value of intermediate base layer image data to 0 or a preset value, and/or mapping a maximum value to 1.0 or a preset value, and/or mapping an intermediate value to a specific intermediate value based on a mapping relationship between a maximum value and/or a minimum value, to obtain high dynamic range image data used for subsequent calculation.

Base layer image data is obtained.

The base layer data is obtained from an image capture channel of a camera.

In this process, the camera captures base layer image data that has light-and-shade features different from those of high dynamic range image data or that is in a format adapting to display characteristic of more existing devices.

The base layer image data is obtained in another manner.

In this process, high-quality base layer data may be obtained through photographing by a professional capture device, and then transmitted to a processing device through sending, copying, or the like.

The base layer image data is obtained from high dynamic range data.

In this process, the base layer image data may be obtained through tone mapping or a neural network.

It should be noted that a manner of obtaining the base layer image data is not limited in the present invention.

It should be noted that a format of the base layer image data is not limited in the present invention 2001. From a perspective of a color space, the base layer image data may be in a form of YUV or RGB. From a perspective of a bit width of data, the base layer image data may include 8 bits, 10 bits, 12 bits, or the like. An optical-electro transfer characteristic may be PQ, gamma, log, HLG, or the like.

Encoding, decoding, and/or processing is performed on a base layer image base[i], to obtain second base layer image data baseAfter[i].

Intermediate base layer image data is obtained.

### Solution 1:

The base layer image is directly used as the intermediate base layer image data.

### Solution 2:

The base layer image is encoded, to generate a base bitstream. Encoding may be performed by using a JPEG codec, an HEIF codec, an H.264 codec, an HEVC codec, or the like. This is not limited in the present invention.

The base bitstream is decoded, to obtain the intermediate base layer image data.

The intermediate base layer image data is processed, to obtain the second base layer image data, and obtain base metadata.

Solution 1: The intermediate base layer image data is used as the second base layer image data.

Solution 2: A data range (a minimum value and/or a maximum value) of the intermediate base layer image data is obtained. The minimum value of the intermediate base layer image data is mapped to 0 or a preset value, and/or the maximum value is mapped to 1.0 or a preset value, and/or then an intermediate value is mapped to a specific intermediate value based on a mapping relationship of the maximum value and/or a mapping relationship of the minimum value, to obtain the second base layer image data.

Solution 3: A local or global mapping relationship between the intermediate layer data and the high dynamic range image data is obtained, and the intermediate base layer image data is mapped based on the mapping relationship, to obtain the second base layer image data.

The local or global mapping relationship between the intermediate layer data and the high dynamic range data is obtained.

A plurality of feature luminance values of the high dynamic range image are obtained, and base layer image data corresponding to pixel locations of the feature luminance values is obtained.

For example, a histogram of the high dynamic range image is obtained, and luminance at a peak location in the histogram is obtained as a luminance feature value.

For example, an average luminance value of a specific region (a face, a green plant, or a blue sky) in the high dynamic range image is obtained as a feature luminance value.

A mapping relationship is obtained based on the feature luminance values and the corresponding base layer image data.

The mapping relationship has various forms: Sigmoid, cubic spline, gamma, a straight line, or the like, or an inverse function form thereof. This is not limited in the present invention. The following curve may be used: $L ′ = F \left(L\right) = a \times {\left(\frac{p \times {L}^{n}}{\left(p-1\right) \times {L}^{n} + 1}\right)}^{m} + b$

Alternatively, an inverse curve of the foregoing curve may be used. It should be noted that L and L' may be normalized optical signals or electrical signals. This is not limited in the present invention.

After the intermediate base layer image data is mapped based on the mapping relationship TMB(), the second base layer image data is obtained: baseAfter[i] = TMB(base[i]), or baseAfter[i] = TMB() × base[i].

It should be noted that, in the present invention, baseAfter[i] and base[i] are not limited to being in any domain, and may be in linear domain, PQ domain, log domain, or the like. In addition, in the present invention, color spaces of baseAfter[i] and base[i] are not limited, and may be the following color spaces: YUV, RGB, Lab, HSV, and the like.

It should be noted that a color gamut mapping may be added before or after processing, to perform conversion from a current color gamut to a target color gamut. The current color gamut and the target color gamut include but are not limited to BT.2020, BT.709, DCI-P3, sRGB, and the like.

The base metadata is encoded, and encoded data is placed in the bitstream.

Enhancement data enhanceAfter and enhancement metadata are obtained, and the enhancement data and the enhancement metadata are encoded into the bitstream.

Intermediate enhancement data is obtained based on the high dynamic range image and the second base layer data.

Solution 1: Intermediate enhancement data = high dynamic range data/f(baseAfter[i]), where f() is a transfer function in numerical domain, for example, log, OETF, EOTF, or a piecewise curve, or may include processing of second base layer data (obtaining a data range (a minimum value and/or a maximum value) of the second base layer data, and mapping the minimum value of the second base layer data to 0 or a preset value, and/or mapping the maximum value to 1.0 or a preset value, and/or mapping an intermediate value to a specific intermediate value based on a mapping relationship of the maximum value and/or a mapping relationship of the minimum value).

Solution 2: The intermediate enhancement data = high dynamic range data - f(baseAfter[i]), where f() is a transfer function in numerical domain, , for example, log, OETF, EOTF, or a piecewise curve, or may include processing of second base layer data (obtaining a data range (a minimum value and/or a maximum value) of the second base layer data, and mapping the minimum value of the second base layer data to 0 or a preset value, and/or mapping the maximum value to 1.0 or a preset value, and/or mapping an intermediate value to a specific intermediate value based on a mapping relationship of the maximum value and/or a mapping relationship of the minimum value).

The intermediate enhancement data is downsampled, to obtain second intermediate enhancement data enhance.

Solution 1: Downsampling is not performed, and the second intermediate enhancement data = the intermediate enhancement data.

Solution 2: One index is transmitted, or one index is transmitted for each region, and a good interpolation mode is selected from a preset set. The preset set may be a texture interpolation mode of OpenGL: GL_NEAREST (nearest-neighbor) and GL_LINEAR (nearest-neighbor); or may be a texture interpolation mode of Vulkan: NEAREST (nearest-neighbor) or LINEAR (nearest-neighbor); or may be a mode in which a plurality of groups of filters are transmitted or that includes a plurality of types of directional interpolation, or bicubic spline; or may be a full set or a subset of all of the foregoing modes. A mode in which a difference between raw intermediate enhancement data and the second intermediate enhancement data obtained through upsampling by using the method after the downsampling is the smallest is selected, and the mode is added to enhancement metadata.

Solution 2: A default mode is selected from a texture interpolation mode of OpenGL, Vulkan, or Metal. The default mode may be a texture interpolation mode of OpenGL: GL_NEAREST (nearest-neighbor) and GL_LINEAR (nearest-neighbor); or may be a texture interpolation mode of Vulkan: NEAREST (nearest-neighbor) or LINEAR (nearest-neighbor); or A mode in which a difference between raw intermediate enhancement data and the second intermediate enhancement data obtained through upsampling by using the method after the downsampling is the smallest is selected, and the mode is added to enhancement metadata.

Solution 3: A preset filter, or a mode including a plurality of types of directional interpolation, or a bicubic spline mode, or the like may be used. A mode in which a difference between raw intermediate enhancement data and the second intermediate enhancement data obtained through upsampling by using the method after the downsampling is the smallest is selected, and the mode is added to enhancement metadata.

The second intermediate enhancement data (enhance) is processed, to obtain final enhancement data.

Solution 1: A data range (a minimum value and/or a maximum value) of the second intermediate enhancement data is obtained. The minimum value of the second intermediate enhancement data is mapped to 0 or a preset value, and/or the maximum value is mapped to 1.0 or a preset value. Then, an intermediate value is mapped to a specific intermediate value based on a mapping relationship of the maximum value and/or a mapping relationship of the minimum value, to obtain the final enhancement data.

Solution 2: A histogram of the second intermediate enhancement data is obtained, a mapping relationship TME() is obtained by using a histogram equalization method, and then the following mapping function is used: enhanceAfter[i] = TMB(enhance[i]), or enhanceAfter[i] = TMB() × enhance[i].

The mapping relationship has various forms: Sigmoid, cubic spline, gamma, a straight line, a piecewise curve, or the like, or an inverse function form thereof. This is not limited in the present invention. The following curve may be used: ${L}^{∧} ′ = F \left(L\right) = a \times {\left(\left(p\times {L}^{∧}n\right)/\left(\left(p-1\right)\times {L}^{∧}n+1\right)\right)}^{∧} m + b$

Alternatively, an inverse curve of the foregoing curve may be used. It should be noted that L and L' may be normalized optical signals or electrical signals. This is not limited in the present invention.

It should be noted that a format of the metadata is not limited in the present invention. The metadata may include histogram information and tone-mapping curve parameter information, as specified in ST 2094-40; or may include tone-mapping curve parameter information, as specified in ST 2094-10.

It should be noted that, in the present invention, enhanceAfter[i] and enhance[i] are not limited to being in any domain, and may be in linear domain, PQ domain, log domain, or the like. In addition, in the present invention, color spaces of enhanceAfter[i] and enhance[i] are not limited, and may be the following color spaces: YUV, RGB, Lab, HSV, and the like.

It should be noted that a color gamut mapping may be added before or after processing, to perform conversion from a current color gamut to a target color gamut. The current color gamut and the target color gamut include but are not limited to BT.2020, BT.709, DCI-P3, sRGB, and the like.

The final enhancement data and the enhancement metadata are encoded.

The enhancement data may be encoded by using a JPEG codec, an HEIF codec, an H.264 codec, an HEVC codec, or the like. This is not limited in the present invention.

The enhancement metadata may be placed in a non-coded pixel field, for example, SEI or APPN.

This application is compatible with image encoding and processing in a plurality of formats, and good image quality can be achieved on systems with different support capabilities. This application provides an encoding scheme compatible with bitstreams in a plurality of formats, to provide compatibility with systems with different capabilities.

In embodiments of this application, the symbol * and the symbol × are interchangeable.

In the technical solutions of this application, in a process of transforming a baseline image based on metadata, the baseline image may be processed according to a mapping function; and in a process of transforming enhancement data based on the metadata, the enhancement data may be processed according to a mapping function. In the process of transforming the enhancement data based on the metadata, upsampling/downsampling may be performed, and an interpolation algorithm in a texture sampling algorithm of OpenGL, Vulkan, or Metal is used for processing, or a good algorithm is selected from a set of interpolation algorithms based on an index.

This application provides an electronic device. The electronic device includes modules for performing the foregoing encoding method, for example, includes an encoding module, a processing module, and a sending module. The decoding module and the processing module may be implemented by a processor, and the sending module may be implemented by a transmitter.

With reference to FIG. 1A, the following describes an encoding/decoding system to which this application is applied. FIG. 1A is a block diagram of an encoding/decoding system to which an embodiment of this application is applied, for example, a video encoding/decoding system 10 (or referred to as an encoding/decoding system 10) to which the technologies of this application may be applied. A video encoder 20 (or an encoder 20 for short) and a video decoder 30 (or a decoder 30 for short) of a video encoding/decoding system 10 represent devices that may be configured to perform techniques based on various examples described in this application.

As shown in FIG. 1A, the encoding/decoding system 10 includes a source device 12. The source device 12 is configured to provide encoded data 21, for example, an encoded image, for a destination device 14 configured to decode the encoded data.

The source device 12 includes the encoder 20, and may optionally include an image source 16, an image preprocessor (or a preprocessing unit) 18, and a communication interface or communication unit 22.

The image source 16 may include or may be any type of image capturing device configured to capture an image in the real world, and/or any type of image generation device, for example, a computer graphics processor configured to generate a computer animated image, or any type of device configured to obtain and/or provide an image in the real world, a computer-generated image (for example, content on a screen, a virtual reality (virtual reality, VR) image, and/or any combination thereof (for example, an augmented reality (augmented reality, AR) image)). The image source may be any type of memory or storage storing any of the aforementioned images.

To distinguish processing performed by the preprocessor 18 or the preprocessing unit 18, an image or image data 17 may also be referred to as a raw image or raw image data 17.

The preprocessor 18 is configured to receive the (raw) image data 17 and perform preprocessing on the image data 17, to obtain a preprocessed image 19 or preprocessed image data 19. For example, preprocessing performed by the preprocessor 18 may include trimming, color format conversion (for example, from RGB to YCbCr), color correction, or de-noising. It may be understood that the preprocessing unit 18 may be an optional component.

The video encoder 20 is configured to receive preprocessed image data 19 and provide encoded image data 21.

The communication interface 22 of the source device 12 may be configured to receive the encoded image data 21 and to send the encoded image data 21 (or any further processed version thereof) through a communication channel 13 to another device like the destination device 14 or any other device, for storage or direct reconstruction.

The destination device 14 includes the decoder 30 (for example, the video decoder 30), and may optionally include a communication interface or communication unit 28, a post-processor 32 (or post-processing unit 32), and a display device 34.

The communication interface 28 of the destination device 14 is configured to: receive the encoded image data 21 (or any further processed version thereof) directly from the source device 12 or from any other source device like a storage device, for example, the storage device is an encoded image data storage device; and provide the encoded image data 21 to the decoder 30.

The communication interface 22 and the communication interface 28 may be configured to send or receive the encoded image data 21 or encoded data over a direct communication link between the source device 12 and the destination device 14, for example, a direct wired or wireless connection, or over any type of network, for example, a wired or wireless network or any combination thereof, or any type of private and public network, or any kind of combination thereof.

The communication interface 22 may be, for example, configured to encapsulate the encoded image data 21 into an appropriate format, for example, a packet, and/or process the encoded image data using any type of transmission encoding or processing for transmission over a communication link or communication network.

The communication interface 28, corresponding to the communication interface 22, may be configured, for example, to receive the transmitted data and process the transmitted data using any kind of corresponding transmission decoding or processing and/or decapsulating to obtain the encoded image data 21.

Both the communication interface 22 and communication interface 28 may be configured as unidirectional communication interfaces as indicated by an arrow for the communication channel 13 in FIG. 1A pointing from the source device 12 to the destination device 14, or bi-directional communication interfaces, and may be configured to send and receive messages and the like, to set up connection, and acknowledge and exchange any other information related to the communication link and/or data transmission, for example, encoded image data transmission.

The decoder 30 is configured to receive the encoded image data 21, and provide decoded image data 31 or a decoded image 31.

The post-processor 32 of the destination device 14 is configured to post-process the decoded image data 31 (also referred to as reconstructed image data), for example, the decoded image 31, to obtain post-processed image data 33, for example, a post-processed image 33. The post-processing performed by the post-processing unit 32 may include, for example, color format conversion (for example, from YCbCr to RGB), color correction, trimming, or re-sampling, or any other processing for generating the decoded image data 31 displayed by display device 34.

The display device 34 of the destination device 14 is configured to receive the post-processed image data 33, to display an image to a user, a viewer, or the like. The display device 34 may be or may include any type of display, for example, an integrated or external display screen or display, configured to display a reconstructed image. For example, the display screen may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS) display, a digital light processor (digital light processor, DLP), or any type of another display screen.

Although FIG. 1A depicts the source device 12 and the destination device 14 as separate devices, the device embodiments may alternatively include both the source device 12 and the destination device 14 or both functions of the source device 12 and the destination device 14, that is, include both the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

Based on the descriptions, existence and (accurate) division of different units or functions of the source device 12 and/or the destination device 14 shown in FIG. 1A may vary with actual devices and applications. This is obvious to a person skilled in the art.

With reference to FIG. 2A, the following describes a content providing system for a content delivery service to which this application is applied. FIG. 2A is a block diagram of a content providing system for implementing a content delivery service to which an embodiment of this application is applied. The content providing system 2100 includes a capture device 2102, a terminal device 2106, and a display 2126 (optional). The capture device 2102 communicates with the terminal device 2106 over a communication link 2104. The communication link may include the communication channel 13 described above. The communication link 2104 includes but not limited to Wi-Fi, Ethernet, wired, wireless (3G/4G/5G), USB, or any kind of combination thereof, or the like.

The capture device 2102 generates data, and may encode the data by using the encoding method shown in the foregoing embodiments. Alternatively, the capture device 2102 may distribute the data to a streaming media server (not shown in the figure), and the server encodes the data and transmits the encoded data to the terminal device 2106. The capture device 2102 includes but not limited to a camera, a smartphone or tablet computer, a computer or notebook computer, a video conference system, a PDA, a vehicle-mounted device, or any combination thereof. For example, the capture device 2102 may include the foregoing source device 12. When the data includes a video, a video encoder 20 of the capture device 2102 may actually perform video encoding. When the data includes audio (namely, sound), an audio encoder 20 of the capture device 2102 may actually perform audio encoding. For some practical scenarios, the capture device 2102 distributes encoded video data and encoded audio data by multiplexing the encoded video data and the encoded audio data together. For other practical scenarios, for example, in the video conference system, the encoded audio data and the encoded video data are not multiplexed. The capture device 2102 distributes the encoded audio data and the encoded video data to the terminal device 2106 separately.

The terminal device 2106 of the content providing system 2100 receives and regenerates the encoded data. The terminal device 2106 may be a device with data receiving and restoration capabilities, for example, a smartphone or tablet computer 2108, a computer or laptop computer 2110, a network video recorder (network video recorder, NVR)/digital video recorder (digital video recorder, DVR) 2112, a television 2114, a set-top box (set-top box, STB) 2116, a video conference system 2118, a video surveillance system 2120, a personal digital assistant (personal digital assistant, PDA) 2122, a vehicle-mounted device 2124, or any combination thereof, or the like capable of decoding the encoded data. For example, the terminal device 2106 may include the foregoing destination device 14. When the encoded data includes a video, the video decoder 30 of the terminal device is prioritized to perform video decoding. When the encoded data includes an audio, an audio decoder of the terminal device is prioritized to perform audio decoding processing. The terminal device 2106 may be a video play application program, a streaming media play application program, a streaming media play platform, a live streaming platform, or the like that runs on the terminal device.

For a terminal device with a display, for example, the smartphone or tablet computer 2108, the computer or laptop computer 2110, the NVR/DVR 2112, the television 2114, the PDA 2122, or the vehicle-mounted device 2124, the terminal device can send decoded data to the respective display. For the terminal device without a display, for example, the STB 2116, the video conference system 3118, or the video surveillance system 2120, the device is connected to the external display 2126, to receive and display the decoded data.

When each device in this system performs encoding or decoding, the picture encoding device or the picture decoding device, as shown in the foregoing embodiments, can be used.

FIG. 2B illustrates a diagram of a structure of a terminal device 2106 in FIG. 2A. After the terminal device 2106 receives a bitstream from the capture device 2102, a protocol processing unit 2202 analyzes a transmission protocol of the bitstream. The protocol includes but is not limited to the real-time streaming protocol (Real-Time Streaming Protocol, RTSP), the hypertext transfer protocol (Hypertext Transfer Protocol, HTTP), the HTTP live streaming protocol (HTTP Live streaming protocol, HLS), the MPEG dynamic adaptive streaming over HTTP (MPEG Dynamic Adaptive Streaming over HTTP, MPEG-DASH), the real-time transport protocol (Real-time Transport protocol, RTP), the real-time messaging protocol (Real-time Messaging Protocol, RTMP), or any combination thereof.

After the protocol processing unit 2202 processes the stream, a stream file is generated. The file is output to a demultiplexing unit 2204. The demultiplexing unit 2204 can separate multiplexed data into the encoded audio data and the encoded video data. As described above, for some practical scenarios, for example, in the video conference system, the encoded audio data and the encoded video data are not multiplexed. In this case, the encoded data is transmitted to a video decoder 3206 and an audio decoder 2208 without through the demultiplexing unit 2204.

A video elementary stream (ES), audio ES, and optional subtitle are generated through demultiplexing processing. The video decoder 2206 that includes the video decoder 30 as described in the foregoing embodiments decodes the video ES based on the decoding method as shown in the foregoing embodiments to generate a video frame, and sends the data to a synchronization unit 2212. The audio decoder 2208 decodes the audio ES to generate an audio frame, and sends the data to the synchronization unit 2212. Alternatively, the video frame may be stored in a buffer (not shown in the figure) before being sent to the synchronization unit 2212. Similarly, the audio frame may be stored in a buffer (not shown in the figure) before being sent to the synchronization unit 2212.

The synchronization unit 2212 synchronizes the video frame and the audio frame, and provides the video/audio for a video/audio display 3214. For example, the synchronization unit 2212 synchronizes presentation of video and audio information. The information may be encoded in syntax using time stamps related to presentation of encoded audio and visual data and time stamps related to sending of a data stream.

If a subtitle is included in the bitstream, a subtitle decoder 2210 decodes the subtitle, and synchronizes the subtitle with the video frame and the audio frame, and provides the video/audio/subtitle for a video/audio/subtitle display 2216.

The present invention is not limited to the foregoing system, and either the image encoding device or the image decoding device in the foregoing embodiments can be incorporated into other system like a car system for usage.

The following describes, with reference to FIG. 3A, the streaming media system to which an embodiment of this application is applicable. FIG. 3A is a working flowchart of a streaming media system to which an embodiment of this application is applied.

The streaming media system includes a content creation module that generates required content data, for example, a video or an audio. The streaming media system further includes a video encoding module that encodes generated content by using an encoder. The streaming media system further includes a video stream transmission module that transmits an encoded video in a form of a bitstream. Optionally, a format of a video stream may be converted into a bitstream format of a transmission protocol commonly used for an OTT (over-the-top) device. For example, the protocol includes but is not limited to the real-time streaming protocol (Real-Time Streaming Protocol, RTSP), the hypertext transfer protocol (Hypertext Transfer Protocol, HTTP), the HTTP live streaming protocol (HTTP Live streaming protocol, HLS), MPEG dynamic adaptive streaming over HTTP (MPEG Dynamic Adaptive Streaming over HTTP, MPEG-DASH), the real-time transport protocol (Real-time Transport protocol, RTP), the real-time messaging protocol (Real-Time Messaging Protocol, RTMP), or any combination thereof. Optionally, video stream storage may be performed to store a raw format of the video stream and/or a plurality of bitstream formats obtained through conversion, for ease of use. Further, the streaming media system further includes a video stream encapsulation module, configured to encapsulate the video stream to generate an encapsulated video stream. The encapsulated video stream may be referred to as a video streaming media packet. For example, the video streaming media packet may be generated based on a transcoded video stream or the stored video stream. Further, the streaming media system further includes a content delivery network (content delivery network, CDN), and the CDN is configured to distribute the video streaming media packet to a plurality of OTT devices such as mobile phones, computers, tablets, and home projectors.

It should be noted that video encoding, video stream transmission, video stream transcoding, video stream storage, video streaming media packet generation, and the content delivery network may all be implemented on a cloud server.

The following describes, with reference to FIG. 3B, an example architecture of a streaming media system in this application. The architecture of the streaming media system includes a client device, a content delivery network, and a cloud server.

A user on the client device sends a play or playback request to a cloud platform. Optionally, content of the sent request may be a title of a movie or television program to be played.

The cloud platform performs decision-making, replies to the client, and sends an address of the content requested by the client on the CDN to the client. Optionally, content sent to the client may be a URL (uniform resource locator). Specifically, a playback application program service in the cloud platform checks user authorization and permission, and then determines which specific files are required to process the playback request by considering features of each client and current network conditions. It should be noted that the content delivery network (CDN) periodically reports a running status, a learned route, and available content (file) to a cache control service on the cloud platform.

Then, the client sends a request to the CDN to play the content based on the address. The CDN provides the content for the client and finally completes the request of the client.

With reference to FIG. 4A, the following describes a system architecture to which an embodiment of this application is applicable. FIG. 4A is a diagram of a possible system architecture to which an embodiment of this application is applicable. The system architecture in this embodiment of this application includes a front-end device, a transmission link, and a terminal display device.

The front-end device is configured to capture or produce HDR/SDR content (for example, an HDR/SDR video or image).

In a possible embodiment, the front-end device may be further configured to derive corresponding metadata from the HDR content. The metadata may include global mapping information, local mapping information, and dynamic metadata and static metadata that correspond to the HDR content. The front-end device may send the HDR content and the metadata to the terminal display device over the transmission link. Specifically, the HDR content and the metadata may be transmitted in a form of one data packet, or separately transmitted in two data packets. This is not specifically limited in this embodiment of this application.

Optionally, the terminal display device may be configured to receive the metadata and the HDR content, obtain, based on the global mapping information and the local mapping information that are included in the corresponding metadata derived from the HDR content, and information about the terminal display device, a mapping curve for global tone mapping and local tone mapping on the HDR content, convert the HDR content into display content adapted to an HDR display device or an SDR device in the terminal display device, and display the display content. It should be understood that, in different embodiments, the terminal display device may include a display device having a display capability with a lower dynamic range or a higher dynamic range than the HDR content generated by the front-end device. This is not limited in this application.

Optionally, in this application, the front-end device and the terminal display device may be independent and different physical devices. For example, the front-end device may be a video capture device, or may be a video production device. The video capture device may be a device like a video camera, a camera, or an image drawing machine. The terminal display device may be a device with a video play function, for example, virtual reality (virtual reality, VR) glasses, a mobile phone, a tablet, a television, or a projector.

Optionally, the transmission link between the front-end device and the terminal display device may be wireless connection or wired connection. The wireless connection may use technologies such as long term evolution (long term evolution, LTE), the 5th generation (5th generation, 5G) mobile communication, and future mobile communication. The wireless connection may further include technologies such as wireless fidelity (wireless-fidelity, Wi-Fi), Bluetooth, and near field communication (Near Field Communication, NFC). The wired connection may include Ethernet connection, local area network connection, and the like. This is not specifically limited.

In this application, functions of the front-end device and functions of the terminal display device may alternatively be integrated into a same physical device, for example, a terminal device having a video photographing function, like a mobile phone or a tablet. In this application, a part of the functions of the front-end device and a part of the functions of the terminal display device may alternatively be integrated into a same physical device. This is not specifically limited.

With reference to FIG. 4B, the following describes an end-to-end image processing system provided in an embodiment of this application. The system may be applied to the system architecture shown in FIG. 4A. FIG. 4B is a diagram of a structure of an image processing system according to an embodiment of this application. In FIG. 3B, for example, an HDR video is used as an example of HDR/SDR content. The image processing system includes an HDR preprocessing module, an HDR video encoding module, an HDR video decoding module, and a tone mapping module.

The HDR preprocessing module and the HDR video encoding module may be located in the front-end device shown in FIG. 4A, and the HDR video decoding module and the tone mapping module may be located in the terminal display device shown in FIG. 4A.

The HDR preprocessing module is configured to: derive dynamic metadata (for example, a maximum value, a minimum value, an average value, and a change range of luminance) from the HDR video; determine mapping curve parameters based on the dynamic metadata and a display capability of a target display device; write the mapping curve parameters into the dynamic metadata, to obtain HDR metadata; and transmit the HDR metadata. The HDR video may be captured, or may be an HDR video processed by a colorist. The display capability of the target display device is a displayable luminance range of the target display device.

The HDR video encoding module is configured to perform video encoding on the HDR video and the HDR metadata according to a video compression standard (for example, an AVS or HEVC standard) (for example, embed the HDR metadata into a user-defined part of a bitstream), to output a corresponding bitstream (an AVS or HEVC bitstream).

The HDR video decoding module is configured to decode the generated bitstream (the AVS bitstream or the HEVC bitstream) according to a standard corresponding to a bitstream format, and output the decoded HDR video and HDR metadata.

The tone mapping module is configured to: generate a mapping curve based on mapping curve parameters in the decoded HDR metadata; perform tone mapping (namely, HDR adaptation or SDR adaptation) on the decoded HDR video; and send an HDR-adapted video obtained through tone mapping to an HDR display terminal for display, or send an SDR-adapted video to an SDR display terminal for display.

For example, the HDR preprocessing module may exist in a video capture device or a video production device.

For example, the HDR video encoding module may exist in the video capture device or the video production device.

For example, the HDR video decoding module may exist in a set-top box, a television display device, a mobile terminal display device, and a video conversion device like a live streaming or network video application.

For example, the tone mapping module may exist in the set-top box, the television display device, the mobile terminal display device, and the video conversion device like the live streaming or network video application. More specifically, the tone mapping module may exist in a form of a chip or a software program in the set-top box, a television display, and a mobile terminal display, and may exist in a form of a software program in the video conversion device like the live streaming or network video application.

In a possible embodiment, when both the tone mapping module and the HDR video decoding module exist in the set-top box, the set-top box may complete functions of receiving, decoding, and tone mapping of a video bitstream. The set-top box sends, through a high-definition multimedia interface (high-definition multimedia interface, HDMI), decoded video data to a display device for display, so that a user can enjoy video content.

An embodiment of this application further provides an image encoding apparatus 1300. FIG. 13 is a diagram of an example of an image encoding apparatus according to an embodiment of this application. The apparatus 1300 has a function of implementing the front-end device in FIG. 3A. For example, the function, the unit, or the means may be implemented by software, may be implemented by hardware, or may be implemented by hardware executing corresponding software.

For example, as shown in FIG. 13, the apparatus 1300 may include:
an encoding module 1301, configured to write a to-be-displayed image into a bitstream, and further configured to write reference information of the to-be-displayed image into the bitstream, where the reference information includes at least one of a reference display device size, a reference viewing distance, a reference viewing angle, reference ambient light luminance, or reference display device resolution, and the reference information is used to perform tone mapping on the to-be-displayed image; and
a sending module 1302, configured to send the bitstream.

In a possible embodiment, the encoding module is further configured to write a reference tone mapping parameter of the to-be-displayed image into the bitstream, where the reference tone mapping parameter is used to obtain an initial tone mapping parameter, the reference information is used for a decoder side to adjust the initial tone mapping parameter to obtain a tone mapping parameter, and the tone mapping parameter is used to perform tone mapping on the to-be-displayed image.

In a possible embodiment, the writing the reference information of the to-be-displayed image into the bitstream includes: writing the reference information into the bitstream; or writing an index of the reference information into the bitstream.

In a possible embodiment, the encoding module is further configured to write one or more luminance feature values of the to-be-displayed image into the bitstream, where the one or more luminance feature values are used for the decoder side to adjust the initial tone mapping parameter to obtain the tone mapping parameter.

It should be understood that all related content of the steps in the foregoing embodiments of the image encoding method may be cited in function descriptions of corresponding functional modules. Details are not described herein again.

An embodiment of this application further provides an electronic device 1300A, as shown in FIG. 13A. The electronic device 1300 has a function of implementing the front-end device in FIG. 3A. For example, the function, the unit, or the means may be implemented by software, may be implemented by hardware, or may be implemented by hardware executing corresponding software.

For example, as shown in FIG. 13A, the electronic device 1300A may include:
a processing module, configured to obtain a first baseline image, a first gain map, and metadata based on a first image, where the first baseline image corresponds to a first dynamic range, the first image corresponds to a second dynamic range, and the second dynamic range is different from the first dynamic range; and
an encoding module, configured to encode the first baseline image, the first gain map, and the metadata according to the second aspect or any possible implementation of the second aspect, to obtain a bitstream.

Optionally, the electronic device 1300A further includes a sending module, configured to send the bitstream.

An embodiment of this application further provides an electronic device 1400. FIG. 14 is a diagram of an example of an electronic device according to an embodiment of this application. The electronic device is configured to implement the method in the embodiment shown in FIG. 4.

As shown in FIG. 14, the electronic device 1400 may include a processor 1401, configured to execute a program or instructions stored in a memory 1402. When the program or the instructions stored in the memory 1402 are executed, the processor is configured to perform the method in the foregoing embodiments of this application.

Optionally, the electronic device 1400 may further include a communication interface 1403. In FIG. 14, dashed lines indicate that the communication interface 1403 is optional for the electronic device 1400.

A quantity of processors 1401, a quantity of memories 1402, and a quantity of communication interfaces 1403 do not constitute a limitation on embodiments of this application, and may be configured based on a service requirement during specific implementation.

Optionally, the memory 1402 is located outside the electronic device 1400.

Optionally, the electronic device 1400 includes the memory 1402. The memory 1402 is connected to the at least one processor 1401, and the memory 1402 stores instructions that can be executed by the at least one processor 1401. In FIG. 14, dashed lines indicate that the memory 142 is optional for the electronic device 1400.

The processor 1401 and the memory 1402 may be coupled through an interface circuit, or may be integrated together. This is not limited herein.

A specific connection medium between the processor 1401, the memory 1402, and the communication interface 1403 is not limited in this embodiment of this application. In this embodiment of this application, in FIG. 14, the processor 1401, the memory 1402, and the communication interface 1403 are connected to each other through a bus 1404. The bus is represented by a thick line in FIG. 14. A manner of connection between other components is merely an example for description, and does not constitute a limitation. The bus may be classified into an address bus, a data bus, a control bus, and the like. For ease of representation, only one thick line is used to represent the bus in FIG. 14, but this does not mean that there is only one bus or only one type of bus.

An embodiment of this application further provides an electronic device 1500. FIG. 15 is a diagram of an example of an electronic device according to an embodiment of this application. The electronic device is configured to implement the image encoding method in embodiments of this application.

As shown in FIG. 15, the electronic device 1500 may include a processor 1501, configured to execute a program or instructions stored in a memory 1502. When the program or the instructions stored in the memory 1502 are executed, the processor 1501 is configured to perform the image encoding method in the embodiment shown in FIG. 11.

Optionally, the electronic device 1500 may further include a communication interface 1503. In FIG. 15, dashed lines indicate that the communication interface 1503 is optional for the electronic device 1500.

A quantity of processors 1501, a quantity of memories 1502, and a quantity of communication interfaces 1603 do not constitute a limitation on embodiments of this application, and may be configured based on a service requirement during specific implementation.

Optionally, the memory 1502 is located outside the electronic device 1500.

Optionally, the electronic device 1500 includes the memory 1502. The memory 1502 is connected to the at least one processor 1501, and the memory 1502 stores instructions that can be executed by the at least one processor 1501. In FIG. 15, dashed lines indicate that the memory 1502 is optional for the electronic device 1500.

The processor 1501 and the memory 1502 may be coupled through an interface circuit, or may be integrated together. This is not limited herein.

A specific connection medium between the processor 1501, the memory 1502, and the communication interface 1503 is not limited in this embodiment of this application. In this embodiment of this application, in FIG. 15, the processor 1501, the memory 1502, and the communication interface 1503 are connected to each other through a bus 1504. The bus is represented by a thick line in FIG. 15. A manner of connection between other components is merely an example for description, and does not constitute a limitation. The bus may be classified into an address bus, a data bus, a control bus, and the like. For ease of representation, only one thick line is used to represent the bus in FIG. 15, but this does not mean that there is only one bus or only one type of bus.

It should be understood that the processor mentioned in this embodiment of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this specification aims to include but is not limited to these memories and any memory of another proper type.

An embodiment of this application further provides a computer-readable storage medium, including a program or instructions. When the program or the instructions are run on a computer, the method in the embodiment shown in FIG. 4 or the image encoding method in the embodiment shown in FIG. 12 is performed.

In embodiments of this application, the term "at least one" indicates one or more, and "a plurality of" indicates two or more. The term "and/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a-b, a-c, b-c, or a-b-c, where any one of a, b, c, a-b, a-c, b-c, or a-b-c may include a single a, a single b, or a single c, or may include a plurality of a, a plurality of b, or a plurality of c.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first priority criterion and a second priority criterion are merely used to distinguish different criteria, and are not used to indicate different content, priorities, or importance degrees of the two types of criteria.

In addition, the terms "include/comprise" and "have" in embodiments, claims, and accompanying drawings of this application are not exclusive. For example, a process, a method, a system, a product, or a device including a series of steps or modules/units is not limited to the listed steps or modules, and may further include steps or modules/units that are not listed.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-readable storage media (including but not limited to a disk memory, a CD-ROM, and an optical memory) that include computer usable program code.

## Claims

1. A signal processing method, comprising:
obtaining a first baseline image, a first gain map, and metadata, wherein the first baseline image corresponds to a first dynamic range;
processing the first gain map based on the metadata, to obtain a second gain map; and
obtaining a target image based on the second gain map and the first baseline image, wherein the target image corresponds to a second dynamic range, and the second dynamic range is different from the first dynamic range.

2. The method according to claim 1, wherein the processing the first gain map based on the metadata comprises:
upsampling or downsampling the first gain map based on the metadata, to obtain the second gain map, wherein resolution of the second gain map is second target resolution.

3. The method according to claim 2, wherein the second target resolution is resolution of the first baseline image.

4. The method according to claim 2, wherein the second target resolution is second preset resolution.

5. The method according to any one of claims 2 to 4, wherein the metadata comprises a scaling ratio, and the upsampling or downsampling the first gain map based on the metadata comprises: upsampling or downsampling the first gain map based on the scaling ratio.

6. The method according to claim 5, wherein the scaling ratio comprises a horizontal scaling ratio and/or a vertical scaling ratio, and the upsampling or downsampling the first gain map based on the scaling ratio comprises: upsampling or downsampling the first gain map based on the horizontal scaling ratio and/or the vertical scaling ratio.

7. The method according to any one of claims 2 to 4, wherein the metadata comprises second sampling phase information, and the upsampling or downsampling the first gain map based on the metadata comprises: upsampling or downsampling the first gain map based on the second sampling phase information.

8. The method according to claim 7, wherein the second sampling phase information indicates a relative location relationship between a pixel of the first gain map and a pixel of the second gain map.

9. The method according to claim 7 or 8, wherein the second sampling phase information comprises pixel coordinates of a first preset location on the first gain map, and the second sampling phase information further comprises pixel coordinates of a second preset location on the second gain map.

10. The method according to claim 7 or 8, wherein the second sampling phase information comprises an offset between pixel coordinates of the second gain map and pixel coordinates of the first gain map.

11. The method according to any one of claims 7 to 10, wherein
the second sampling phase information comprises second luminance sampling phase information, and the upsampling or downsampling the first gain map based on the second sampling phase information comprises: upsampling or downsampling a luminance component of the first gain map based on the second luminance sampling phase information;
the second sampling phase information comprises second chrominance sampling phase information, and the upsampling or downsampling the first gain map based on the second sampling phase information comprises: upsampling or downsampling a chrominance component of the first gain map based on the second chrominance sampling phase information; or
the second sampling phase information comprises the second luminance sampling phase information and the second chrominance sampling phase information, and the upsampling or downsampling the first gain map based on the second sampling phase information comprises: upsampling or downsampling the luminance component of the first gain map based on the second luminance sampling phase information, and upsampling or downsampling the chrominance component of the first gain map based on the second chrominance sampling phase information.

12. The method according to any one of claims 2 to 11, wherein the metadata comprises indication information of a second target sampling algorithm, and the upsampling or downsampling the first gain map based on the metadata comprises: upsampling or downsampling the first gain map based on the indication information of the second target sampling algorithm by using the second target sampling algorithm.

13. An encoding method, comprising:
obtaining a first baseline image, a first gain map, and metadata based on a first image, wherein the first baseline image corresponds to a first dynamic range, the first image corresponds to a second dynamic range, and the second dynamic range is different from the first dynamic range;
encoding the first baseline image;
encoding the first gain map; and
encoding the metadata.

14. The method according to claim 13, wherein the metadata comprises a scaling ratio, and the scaling ratio indicates a scaling ratio between the first gain map and a second gain map.

15. The method according to claim 14, wherein the scaling ratio comprises a horizontal scaling ratio and/or a vertical scaling ratio, the horizontal scaling ratio indicates a scaling ratio of the first gain map to the second gain map in a horizontal direction, and the vertical scaling ratio indicates a scaling ratio of the first gain map to the second gain map in a vertical direction.

16. The method according to any one of claims 13 to 15, wherein the metadata comprises second sampling phase information, and the second sampling phase information indicates a relative location relationship between a pixel of the first gain map and a pixel of the second gain map.

17. The method according to claim 15, wherein the second sampling phase information comprises pixel coordinates of a first preset location on the first gain map, and the second sampling phase information further comprises pixel coordinates of a second preset location on the second gain map.

18. The method according to claim 15, wherein the second sampling phase information comprises an offset between pixel coordinates of the second gain map and pixel coordinates of the first gain map.

19. An electronic device, comprising:
a decoding module, configured to obtain a first baseline image, a first gain map, and metadata, wherein the first baseline image corresponds to a first dynamic range; and
a processing module, configured to process the first gain map based on the metadata, to obtain a second gain map, wherein
the processing module is further configured to obtain a target image based on the second gain map and the first baseline image, wherein the target image corresponds to a second dynamic range, and the second dynamic range is different from the first dynamic range.

20. The electronic device according to claim 19, wherein the processing module is further configured to implement the method according to any one of claims 2 to 12.

21. An electronic device, comprising:
a processing module, configured to obtain a first baseline image, a first gain map, and metadata based on a first image, wherein the first baseline image corresponds to a first dynamic range, the first image corresponds to a second dynamic range, and the second dynamic range is different from the first dynamic range; and
an encoding module, configured to encode the first baseline image, wherein
the encoding module is further configured to encode the first gain map; and
the encoding module is further configured to encode the metadata.

22. The electronic device according to claim 21, wherein the processing module is further configured to implement the method according to any one of claims 14 to 18.

23. An electronic device, comprising a memory and a processor that are coupled to each other, wherein the processor invokes program code stored in the memory to perform the method according to any one of claims 1 to 12 or the method according to any one of claims 13 to 18.

24. A computer program product, comprising a program or instructions, wherein when the program or the instructions are run on a computer or a processor, the computer or the processor is enabled to perform the method according to any one of claims 1 to 12 or the method according to any one of claims 13 to 18.
